# EUROPÄISCHE PATENTSCHRIFT

(11) **EP 4 399 972 B1**
(45) Veröffentlichungstag und Bekanntmachung des Hinweises auf die Patenterteilung: **10.09.2025**
(21) Anmeldenummer: 24178748.0
(22) Anmeldetag: 23.12.2020
(51) Int. Cl.: A01M 21/04

(54) **VORRICHTUNG ZUM AUFBRINGEN VON ÜBERGANGSWIDERSTANDREDUZIERENDEN MEDIEN UND ZUM APPLIZIEREN VON STROM AUF PFLANZEN**
DEVICE FOR THE APPLICATION OF MEDIUMS REDUCING CONTACT RESISTANCE AND THE APPLICATION OF CURRENT TO PLANTS
DISPOSITIF POUR APPLIQUER DES MILIEUX RÉDUISANT LA RÉSISTANCE DE TRANSITION ET POUR APPLIQUER DU COURANT SUR DES PLANTES

(30) Priorität: 23.12.2019 DE 102019135768; 17.06.2020 DE 102020115923
(43) Veröffentlichungstag der Anmeldung: 17.07.2024
(62) Teilanmeldung aus: 23198563.1
(73) Patentinhaber: crop.zone GmbH, 52076 Aachen (DE)
(72) Erfinder: LEHNEN, Marcus, Aachen (DE); VANDENHIRTZ, Dirk Guido, Aachen (DE)
(74) Vertreter: PATERIS Patentanwälte PartmbB

(56) Entgegenhaltungen:
- WO-A1-2018/050142
- WO-A1-2019/052591
- DE-A1- 2 328 705
- FR-A1- 2 473 265
- FR-A1- 2 492 631
- US-A- 4 198 781

## Beschreibung

Die vorliegende Erfindung betrifft eine Vorrichtung zum zielgerichteten Aufbringen von übergangswiderstandreduzierenden Medien und zum Applizieren von elektrischem Strom auf Pflanzen sowie ein Verfahren zur Kontrolle von Pflanzenwachstum.

In der Landwirtschaft, im urbanen Bereich, auf Verkehrsflächen und im Gartenbereich werden herkömmlicherweise große Mengen systemischer und nichtsystemischer, selektiver und nichtselektiver chemischer Herbizide zur Unkrautkontrolle, zum Pflanzenmanagement und zur Sikkation von Feldfrüchten eingesetzt. Während die Zahl der zugelassenen Herbizide im Allgemeinen abnimmt, werden insbesondere nichtselektive Herbizide mit sehr breiten Einsatzbereichen und hohen Einsatzmengen, wie z. B. Paraquat, Glufosinat, Diquat und Glyphosat, weltweit stark eingeschränkt oder komplett verboten. Dies stellt die Rentabilität einzelner Kulturen, die Stabilität und Sicherheit von Verkehrsanlagen und insbesondere zur Aufrechterhaltung boden- und klimaschonender Kultivierungsformen mit geringer Bodenbewegung in Frage.

Die in Zukunft noch einsetzbaren Herbizide müssen neben einer weitgehenden Rückstandsfreiheit, insbesondere der nach Pflanzenschutzmittelgesetz regulierten Inhaltsstoffe, eine möglichst geringe akute und chronische Toxizität aufweisen, möglichst wenig in andere Umweltkompartimente verlagerbar sein, eine möglichst umweltschonende Ökobilanz aufweisen, wenn möglich mit Regularien zum biologischen Anbau kompatibel sein und im klimaschonenden und bodenkonservierenden Pflanzenbau effizient einsetzbar sein. Eine Reihe von direkt aus Naturprodukten herstellbaren oder naturidentischen Substanzen oder Substanzgemische davon zeigen eine landwirtschaftlich akzeptable herbizide Wirkung, wenn sie in ausreichender Menge eingesetzt werden. Jedoch machen es etwa der hohe Preis von Pelargonsäure oder die noch höheren Kosten für ätherische Öle notwendig, dass diese Wachsschicht zerstörenden Stoffe sehr sparsam eingesetzt werden und dementsprechend oft unzureichend wirken oder die Anwendung komplett unterbleibt.

Der Wirkungsmechanismus dieser oben bezeichneten chemischen Substanzen ist letztlich mehr ein physikalischer als stoffwechselchemischer, da diese nichtsystemischen Kontaktherbizide in der Hauptsache die Pflanzenoberfläche und Pflanzenzellen derart schädigen, dass die Pflanze übermäßig Wasser verdunstet und deshalb vertrocknet. So kann die chemische Substanz zwar große Teile der Pflanzen benetzen, die Wurzeln können aber nicht direkt angegriffen werden. Auch bei dickeren Stängeln und Blättern mit sehr stabilen Oberflächenschichten wirken die Substanzen ungenügend.

Allen chemischen Behandlungsmethoden ist gemeinsam, dass sie besonders dann, wenn auch die Wurzeln abgetötet werden sollen, Zeit benötigen, bis sich die Substanzen in der Pflanze verteilt haben und wirken. Dies kann bis zu 3 Wochen dauern. Gleichzeitig führen chemische Rückstände dazu, dass mit der Neueinsaat oder dem Aufgehen der Pflanzen Wartezeiten bis ca. 2 Wochen eingehalten werden müssen, um Nachfolgekulturen nicht zu schädigen. Rein physikalische Verfahren sind in vielen Fällen noch weniger geeignet, da sie oft nur nichtsystemisch den Spross der Pflanze treffen und dementsprechend oft wiederholt angewandt werden müssen und viel Energie verbrauchen (z. B. Laser, heiße Luft, Abflammen, Heißwasser) oder bei systemischer Wirkung in den Boden hinein auch zur Schädigung von Boden und Klima führen (z. B. Pflügen, Bodensterilisierung durch Hitze).

In der Literatur und der Praxis finden sich jedoch auch Anwendungsbereiche von Herbiziden, wenn es, wie bei der Sikkation, nur zu einem schnelleren Abtrocknen einzelner Pflanzenteile (z. B. Kartoffelkraut, Grashalme) führen soll, ohne dass die Gesamtpflanze abgetötet wird. Darüber hinaus sind auch Einsatzmöglichkeiten gegeben, wenn die Pflanzen oder damit assoziierte andere Organismen anderweitig durch elektrischen Strom beeinflusst werden (Wachstumsbeschleunigung, Insektenvergrämung etc.).

Aus der Fachliteratur (LANDTECHNIK 72(4), 2017, 202-213, http://DOI:10.15150/lt.2017.3165) ist auch bekannt, dass Pflanzen durch den Einsatz von heißem Öl (bis 250°C), welches direkt mit Düsen auf die Blätter gesprüht wird, massiv geschädigt werden können, da hier der Wärmeübergang in die Blätter weitaus besser stattfindet als bei der Wasserapplikation (max. 100 °C und starke Verdunstungsabkühlung). Diese wirken im Nahbereich über eine größere Fläche, als dies durch heiße Wassertropfen möglich wäre. Jedoch müssen auch bei dieser nichtsystemischen Anwendung alle zu schädigenden Pflanzenteile direkt mit den heißen Öltropfen in Kontakt kommen. Es handelt sich dementsprechend auch hier eindeutig um ein nicht-systemisches Kontaktherbizid, welches besonders bei dickeren Stängeln und hohem dichten Pflanzenbewuchs an seine physikalischen Grenzen stößt. Die Wurzeln werden nicht geschädigt. Die Pflanzen sterben nur, wenn ein sehr großer Teil der Sprosse geschädigt wird und sie sich nicht aus Wurzeln regenerieren können.

Weiterhin ist seit langem bekannt, dass Pflanzen, die von elektrischer Hochspannung durchströmt werden, in ihrem Wasserversorgungssystem bis in die Wurzel hinein systemisch geschädigt werden können. Dabei können Samenpflanzen in vielen Fällen komplett absterben und Wurzelunkräuter zumindest so stark geschädigt werden, dass sie mittelfristig ausgehungert werden können. Seit Verwenden dieser Methode wird nach Wegen gesucht, die angelegten Spannungen bzw. den Energieeinsatz möglichst niedrig zu halten. Jedoch wurden hierzu kaum - wie bei chemischen Pflanzenschutzmitteln üblich -systematische Untersuchungen, insbesondere nicht mit spezifischen wirkungsverstärkenden Formulierungen, durchgeführt. Die elektrophysikalischen Verfahren konnten sich bisher nicht als Standardmethode zur Pflanzenkontrolle durchsetzen, da einerseits die chemischen Totalherbizide zu preiswert geworden waren und andererseits der gesellschaftliche und weltklimatische Druck für eine umwelt- und klimafreundliche Pflanzenproduktion im Rahmen einer bodenkonservierenden Gesamtbewirtschaftung noch zu gering war. Darüber hinaus haben auf der technischen Seite hohe Spannungen und ein verhältnismäßig hoher Energieverbrauch auf dem Feld die Herstellung robust arbeitender Geräte mit hoher Schlagkraft (Arbeitsbreite x Fahrgeschwindigkeit) und ausreichender Sicherheit verhindert.

Herkömmlicherweise werden bei dem Applizieren von Strom metallische Applikatoren verwendet, um zumindest den elektrischen Widerstand an dieser Stelle möglichst klein zu halten. Weiterhin werden in einigen Fällen der Stromkreislauf nicht durch eine zweite Kontaktierung von Pflanzen mit dem entgegengesetzten Pol, sondern durch in den Boden einschneidende Elektroden geschlossen, um den Gesamtwiderstand zu verringern. Dies halbiert jedoch die Durchströmung von Pflanzen (einfach statt zweifach) und reduziert damit die Effizienz erheblich.

Der Einsatz hoher Spannungen erfordert zudem aus Gründen der Arbeitssicherheit weite Abstände und Absperrungen (insbesondere, wenn metallische Leiter im Arbeitsbereich vorkommen können, z. B. in einem Weinberg oder bei urbanen Anwendungen). Die Geräte sind entsprechend durch aufwändige Isolation teuer und durch erhöhte Abstandsanforderungen an Kriechstrecken unvorteilhaft groß. Die technische und ökonomische Einsetzbarkeit entsprechender Geräte ist daher gering.

Beim herkömmlichen Applizieren von Strom auf Pflanzen sind Funkenbildung zwischen Applikator und Pflanzenteilen sowie Ablagerungen eines amorphen, wenig wasserlöslichen und dunklen Materials auf den Applikatoren bekannt. Es wird angenommen, dass Pflanzenhaare, Unebenheiten und Wachsschichten auf den Blättern zu einem hohen Übergangswiderstand führen. Die bei großen Potentialdifferenzen zwischen den Applikatoren und Pflanzenteilen entstehenden Funken verdampfen Teile der Wachsschichten, die sich auf den Applikatoren ablagern, dabei zusätzlichen Widerstand verursachen, dadurch höhere Spannungen erfordern und dementsprechend mehr Energie kosten. Bei nassen Pflanzen treten keine Ablagerungen auf, da hier anscheinend der abgesenkte Übergangswiderstand eine Funkenbildung verhindert, aber auch die Wirkung generell stark zu vermindern scheint.

Aus der langjährigen Entwicklung von Pflanzenschutzmitteln ist bekannt, dass die Blätter mit ihren hydrophob wirkenden Oberflächenstrukturen nur mit Hilfe komplex zusammengesetzter Formulierungen ausreichend und anwendungsspezifisch (Pflanzentyp, Pflanzengröße) benetzt werden können. Gerade bei Gräsern mit ihren oft hyperhydrophoben, stark wachshaltigen Oberflächen hat die elektrophysikalische Methode bisher besondere Probleme. Diese werden noch durch sehr eng zusammenstehende Halme in Mischung mit abgestorbenen Halmen (besonders Horstgräser, Binsen) verstärkt.

Weitere Vorrichtungen und Verfahren zum Applizieren von Strom auf Pflanzen sind aus FR 2 473 265 A1, FR 2 492 631 A1 und WO 2019/052591 A1 bekannt.

Es besteht die Aufgabe, Strom mit möglichst geringem Übergangswiderstand wirksam auf unterschiedliche Pflanzen zu applizieren.

Diese Aufgabe wird durch eine Vorrichtung gemäß Anspruch 1, ein Fahrzeug gemäß Anspruch 14 und ein Verfahren gemäß Anspruch 15 gelöst. Weitere vorteilhafte Ausführungsformen und Ausgestaltungen der Erfindung ergeben sich aus den Unteransprüchen, den Figuren und den Ausführungsbeispielen. Die Ausführungsformen der Erfindung sind im Rahmen der Ansprüche in vorteilhafter Weise kombinierbar.

Ein erster Aspekt der Erfindung bezieht sich auf eine Vorrichtung zum Applizieren von elektrischem Strom auf Pflanzen, umfassend mindestens zwei Module, wobei ein erstes Modul mindestens eine Auftragseinrichtung zum Auftragen eines einen elektrischen Übergangswiderstand senkenden Mediums auf Pflanzen aufweist, und ein zweites Modul mindestens eine Applikationseinrichtung zum Applizieren von elektrischem Strom auf Pflanzen aufweist, wobei im Bereich des ersten Moduls und/oder des zweiten Moduls jeweils mindestens ein Sensorsystem angeordnet ist, das einen oder mehrere Sensoren ausgewählt aus der Gruppe bestehend aus optischen Sensoren, Lidar, Höhensensoren, Bewegungssensoren, thermischen Sensoren, Strommesssensoren, und Sensoren, die zum Erfassen von mechanischen Spannungen ausgebildet sind, aufweist.

Die erfindungsgemäße Vorrichtung ermöglicht vorteilhaft einen Einsatz nicht stoffwechselchemisch, sondern nur auf die Blätter physikalisch-chemisch wirkender Stoffe in Kombination mit einer elektrophysikalischen Behandlung, z. B. um in einem Arbeitsgang bei einer Feldüberfahrt Unkraut oder Zwischenfrüchte abzutöten und sofort oder sehr kurzfristig neu einzusäen. Es werden Kosten und die in vielen Weltregionen knappen Wachstumstage gespart. Weiterhin erhöht sich die Wirksamkeit der Unkrautkontrolle signifikant, da die schnellkeimenden Kulturpflanzen eine wesentlich größere Möglichkeit haben, die Lichtkonkurrenz mit Unkräutern durch frühes Auflaufen zu gewinnen. Besonders vorteilhaft ist dies gegenüber bodenbewegenden Unkrautkontrollmethoden, weil beim hier beschriebenen Kombinationsverfahren keine Samen neu zur Keimung durch Licht etc. angeregt werden.

Weiterhin ermöglicht die Vorrichtung vorteilhaft durch Auftragen eines spezifisch den elektrischen Übergangswiderstand senkenden Mediums (auch "elektrohybrides Medium" genannt), besonders Flüssigkeiten, Pflanzen mit hyperhydrophoben, stark wachshaltigen Oberflächen (z.B. Gräser) und engstehende Pflanzen großflächiger zu benetzen und unter Strom zu setzen.

Durch das Auftragen des übergangswiderstandreduzierenden Mediums wird an mehreren Stellen der Übergangswiderstand zwischen dem Applikator und der Hauptphase der Pflanze durch alle Zwischenschichten (z. B. Luftspalt, abstandshaltende Blatthaare, Wachsschicht, oberste Zellschichten) hindurch an einer oder mehreren Zwischenschichten durch Überbrückung, Erweichung, Verletzung oder Entfernung abgesenkt. Dadurch wird vorteilhaft eine systemische, pflanzenschädigende Wirkung partiell oder bis in die Wurzeln bei niedrigem Energieaufwand ermöglicht. Durch die Erfindung wird damit auch die Energieeffizienz eines stromapplizierenden Verfahrens erhöht.

Unter einem übergangswiderstandsenkenden Medium wird ein Stoff oder Stoffgemisch verstanden, der durch seine Eigenschaften das Übertragen von elektrischem Strom auf eine Pflanze aktiv durch Verringerung von Durchgangswiderständen durch die Applikator- und Blattschichten erleichtert. Das Medium wird daher auch als elektrohybrides Medium bezeichnet. Das übergangswiderstandsenkende Medium ist z.B. eine wässrige Flüssigkeit, eine viskose Flüssigkeit, z.B. Öl, eine hochkonzentrierte Lösung, Emulsion oder Suspension, eine thixotrope Flüssigkeit, ein Feststoff oder ein Schaum, ohne auf diese Aufzählung beschränkt zu sein. Weiterhin erhöht sich durch die vorteilhaft verringerte Spannung die Arbeitsschutzsicherheit, und es sind weniger Schutzvorrichtungen notwendig. Weiterhin werden auch die Bereiche mit erhöhtem Spannungspotential im Boden verringert. Damit kann sowohl der sowieso nur akute Einfluss auf Bodenorganismen noch weiter reduziert werden als auch auf und im Boden liegende Kabel mit niedrigeren Schutzniveaus gegen Durchschlag weiterhin eigesetzt werden. Geräte mit geringen Energieverbrauch können auch deutlich leichter sein, mit kleineren Traktoren betrieben werden und deshalb in Hackkulturen in der Reihe und besonders bodenschonend mit geringer Bodenkompression eingesetzt werden oder bei gleicher Leistung größere Arbeitsbreiten haben und damit weniger Feldüberfahrten nur noch in den Standardfahrspuren benötigen.

Die erfindungsgemäße Vorrichtung ermöglicht vorteilhaft ein Schwächen oder Beenden von unerwünschtem Pflanzenwuchs ohne spezifische Wirkungsverluste auf resistente Genotypen und ohne genehmigungsrelevante Einzelkulturzulassungen. Erfindungsgemäß wird über die Auftragseinrichtung ein übergangswiderstandreduzierendes Medium auf bestimmte Stellen von zu bekämpfenden Pflanzen aufgetragen, an denen danach mittels der Applikationseinrichtung Strom an die Pflanzen angelegt wird. Dabei ermöglicht die Erfindung ein flexibles Applizieren von Strom für verschiedene Unkrautgrößen und -arten.

Im Unterschied zur Behandlung von Pflanzen mit konventionellen Pflanzenschutzmitteln, die durch weitflächigen Auftrag oder durch physiologische Verteilung über die gesamte Pflanze verteilt werden, ermöglicht die erfindungsgemäße Vorrichtung ein lokales Kontaktieren mit Strom in ausgewählte Pflanzenteile und dann die physikalische systemische Weiterleitung und Wirkung in der Gesamtpflanze, wobei dann auch nur die Kontaktbereiche von dem übergangswiderstandreduzierenden Medium benetzt werden müssen. Dabei muss das Auftragen des ggf. hochviskosen Mediums sehr gut steuerbar, selektivoberflächlich und gleichsinnig - wie die Applikatoranordnung (z. B. von oben oder von der Seite) stattfinden. Die Effektivität der Erfindung wird auch dadurch bewirkt, dass der Strom im Vergleich zu einem herkömmlichen Wirkstoff nicht durch Diffusion vollflächig, sondern punktuell dort in die Blätter eindringt, wo sowohl der Luftspalt zwischen Applikator und Blatt als auch die Wachsschichten oder andere Sperrschichten durch das Medium überbrückt oder zerstört werden. Dementsprechend ist es für oberflächenverändernde Effekte wichtig, dass diese die Blattoberfläche erreichen, gleichzeitig muss aber die zur Überbrückung nötige Schichtdicke durch Viskosität, Thixotropie oder Flüssigkeitsabkühlung erhalten werden. Eine Verbreiterung der Kontaktfläche kann dann immer noch durch den mechanischen Kontakt zum elektrischen Applikator erfolgen.

Vorzugsweise ist die Auftragseinrichtung mit einer Wärmequelle verbunden. Dadurch wird vorteilhaft ein Erwärmen bzw. Erhitzen des übergangswiderstandsenkenden Mediums ermöglicht. Beispielsweise bewirkt heißes Öl ein Zerstören der Wachsschicht vor oder bei der elektrophysikalischen Behandlung in den Bereichen, die mit den elektrischen Applikatoren in Berührung kommen. Das dafür nötige dosierte Aufsprühen von geringen Mengen heißem Öl (0,5 - 20 l/ha, vorzugsweise 2 - 10 l/ha) nur auf die oberen Blattbereiche verringert die Aufwandmenge gegenüber der bekannten Abtötung der Pflanzen durch großflächiges Auftragen von heißem Öl stark, weil die elektrophysikalische Behandlung bei geringem Widerstand der Kontaktflächen dann schon systemisch wirkt. Die Wärmequelle kann z.B. ein elektrisches Heizelement sein, oder vorteilhafterweise die Abwärme eines Fahrzeugs mit der Vorrichtung in Form von Kühlwasser und Abgas, z.B. ein Traktor. Abgasströme bei Dieseltraktoren liegen nach allen Abgasbehandlungssystemen in der Regel bei 250 - 300°C. Dies ist ein ähnlicher Temperaturbereich wie er von biologisch gut abbaubaren Ölen als Rauchpunkt gerade erreicht wird. Die Vorratseinrichtung und die Zuleitungsrohre der Auftragseinrichtung funktionieren dabei vorteilhafterweise als Wärmetauscher, der die Wärme auf das Medium überträgt.

Vorzugsweise ist die Auftragseinrichtung zum Dosieren des übergangswiderstandsenkenden Mediums ausgebildet. Wird nämlich zu viel davon aufgetragen, fließt der Strom darüber außen an den Pflanzen wirkungslos in den Boden direkt ab. Eine vollflächige oder vollständige Benetzung der Pflanze ist dementsprechend kontraproduktiv. In diesem Zusammenhang können durch Dosieren vorteilhaft hochkonzentrierte Lösungen aufgebracht werden. Entsprechende Auftragseinrichtungen sind besonders für heiße Öle und Konzentrate geeignet und wichtig, da diese nur in geringer Menge aufgetragen werden.

Ein kommerziell erhältliches Beispiel für eine derart ausgebildete wasserarme Verteilungseinrichtung für niedrigviskose kalte Flüssigkeiten sind Segmentrotationsdüsen von MANKAR^{®} ULV-Sprühgeräte von Mantis ULV. Bevorzugt wird die Auftragseinrichtung der erfindungsgemäßen Vorrichtung deshalb als Düse (generell und nicht beschränkt auf Rotationsdüsen) ausgebildet.

Vorzugsweise ist die Düse als Mantelstromdüse ausgebildet. Diese Ausbildung ermöglicht bei der direkten Beaufschlagung der Pflanzen mit heißem Medium vorteilhaft ein Vermeiden von Sprühverlusten des übergangswiderstandsenkenden Mediums, da durch die geringe Tröpfchengröße und Fahrtwind ein Abdriften und Abkühlen der Tröpfchen möglich ist. Bei einer Mantelstromdüse oder einer analogen Konstruktion ist der Tröpfchennebel schlauchförmig oder vorzugsweise von zwei Schichten heißem, in die gleiche Richtung und möglichst laminar strömendem Gasstrom umgeben. Dieser Gasstrom kann Umgebungstemperatur haben, wird aber vorzugsweise durch den heißen Abgasstrom eines Traktors wie oben beschrieben erwärmt.

Vorzugsweise ist die Auftragseinrichtung beweglich angeordnet. Dadurch wird vorteilhaft ein Auftragen des übergangswiderstandsenkenden Mediums aus verschiedenen Richtungen, z.B. von oben oder von der Seite, ermöglicht.

Vorzugsweise ist die Auftragseinrichtung als Abstreifer ausgebildet. Die Auftragseinrichtung ist dadurch vorteilhaft für den Einsatz bei großen Flächenanwendungen bei hoher Geschwindigkeit und heterogenen Pflanzenhöhen geeignet. Die Abstreifer steigern die Zielgenauigkeit beim Auftragen des Mediums und verringern dementsprechend die Menge des notwendigen Mediums auf die von elektrischen Applikatoren erreichbaren Blätter. Weiterhin wird einer Abdrift des Mediums entgegengewirkt, und kann die Komplexität des Mediums reduziert werden. Das Medium kann dabei entweder durch kalte oder erwärmte Abstreifer mit einer Kinematik ähnlich der elektrischen Applikatoren auf die Pflanzen übertragen werden. Die Abstreifer können alternativ zu den Düsen ausgebildet sein. Die Auftragseinrichtung kann auch sowohl als Abstreifer und Düse ausgebildet sein. Diese können dann z.B. alternierend angeordnet werden. Besonders vorteilhaft ist eine Kombination von Düse und Abstreifer in enger räumlicher Nähe, z.B. indem die Düsen auf den Abstreifern angeordnet werden. Dabei kann das Medium auf Abstreifer, die eine sehr ähnliche Form wie die elektrischen Applikatoren haben, über sehr kurze Entfernungen aufgesprüht werden. Um die Wirkungsgeschwindigkeit der Wachsschichtzerstörung stark zu erhöhen, wird in einer Version der Vorrichtung beispielsweise Öl vor dem Aufsprühen erhitzt und Wärme auf dem Abstreifer übertragen. Die Abstreifer sind dabei entweder aus einem schlecht wärmeleitenden Material gefertigt oder auf der pflanzenabgewandten Seite isoliert.

Mittels der Wärmequelle der Vorrichtung können die Abstreifer entweder ausschließlich oder zusätzlich (vorzugsweise mit dem Abgasstrom eines Traktors) erhitzt werden, um über ihre heiße Oberfläche die Wachsschicht und Blattoberfläche der Blätter überhaupt oder zusätzlich zu erhitzen.

Vorzugsweise ist die Auftragseinrichtung in einer weiteren Ausführungsform mit einer zusätzlichen Hochspannungsquelle verbunden. Diese Ausführungsform eignet sich besonders für elektrostatisch gut aufladbare Sprühsubstanzen. Pflanzen im direkten Umfeld der elektrophysikalischen Hochspannungshandlung werden bedingt durch das Bodenpotential elektrostatisch aufgeladen. Diese Beobachtung ermöglicht vorteilhaft, auch das Medium aufzuladen, so dass es sich möglichst auf den nächstgelegenen Blättern absetzt und entlädt.

Das erste Modul und das zweite Modul können räumlich sehr nah aneinander angeordnet sein, sodass die Auftragseinrichtung das übergangswiderstandsenkende Medium direkt vor oder direkt auf die elektrischen Applikatoren der Applikationseinrichtung auftragen kann. Das übergangswiderstandsenkende Medium kann also direkt auf die Pflanzen oder indirekt über die Applikationseinrichtung auf die Pflanzen aufgetragen werden.

In einer weiteren bevorzugten Ausführungsform der Vorrichtung ist die Auftragseinrichtung derart angeordnet, dass das übergangswiderstandsenkende Medium direkt auf die Applikationseinrichtung aufgetragen werden kann. In dieser Ausführungsform wird das übergangswiderstandsenkende Medium indirekt über die Applikationseinrichtung auf die Pflanzen aufgetragen. Diese Ausführungsform ist besonders, aber nicht ausschließlich, für geringe Sprühdosierungen und sehr schnell übergangswiderstandsenkende Medien geeignet. Dabei kann hier unmittelbar ein Applizieren von Strom erfolgen.

Vorzugsweise ist auch die Applikationseinrichtung mit einer Wärmequelle verbunden. Die Wärmequelle kann dabei die gleiche sein wie für die Auftragseinrichtung, d.h. elektrisch oder auf der Abwärme (Abgas, Kühlwasser von Motor/ Generator) des entsprechenden Fahrzeugs beruhend. Diese Ausführungsform ist besonders bei für hohen Widerstand bekannten Pflanzen (z.B. Disteln, Melde, Brennnesseln) vorteilhaft. Kälte bis hin zu Frost macht den Einsatz rein chemischer Behandlungsmethoden in sehr vielen Fällen praktisch unmöglich. Gleichzeitig ist es jedoch gerade zur Kontrolle von Gründüngung optimal, wenn diese bei Bodenfrost abgetötet werden kann. Dies ermöglicht generell eine freiere Zeitplanung des Landwirtes, beschleunigt die Geräteamortisation durch Mehrfachnutzungen auf größeren Flächen und verringert die Bodenkompression. Da die nicht abgestorbenen, winterharten Pflanzen im Pflanzeninneren, bedingt durch allgemeine Salze und spezielle Frostschutzmittel (Glycerin etc.), noch flüssig und leitfähig sind, ist es nur wichtig, eventuelle Reifschichten auf den Blättern und kältebedingt harte Wachsschichten durch die Temperaturerhöhung entsprechend angreifbar zu machen und die Reaktionsgeschwindigkeiten zur Zerstörung der Wachsschicht zu erhöhen.

Im Bereich des ersten und/oder des zweiten Moduls ist jeweils mindestens ein Sensorsystem angeordnet, das einen oder mehrere Sensoren ausgewählt aus der Gruppe bestehend aus optischen Sensoren, Lidar, Höhensensoren, Bewegungssensoren, thermischen Sensoren, Strommesssensoren, und Sensoren, die zum Erfassen von mechanischen Spannungen ausgebildet sind, aufweist. Durch den Einsatz von Sensoren bei lückigen oder sehr heterogenem Aufwuchs wird vorteilhaft eine bewuchsgesteuerte Auftragung ermöglicht, wobei die Auftragsmenge entweder durch separate Sensoren zur Pflanzenerkennung (z. B. Fluoreszenzsensoren/-Kameras, Multispektral-/Hyperspektralkameras) oder durch Stromfluss und Spannungsmessungen an den Applikatoren oder weiteren Spannungsmesseinrichtungen vor der Auftragungsvorrichtung des übergangswiderstandsenkenden Mediums gesteuert wird. Weiterhin kann die Leistung der Kameras doch den Einsatz von KI-Techniken und die Auswertung dreidimensional rekonstruierter Bilder auf der Basis von Einzeldaten oder kumulierten Daten mehrerer Sensorsysteme (Kamera, Lidar, Höhensensoren etc.), die in mehreren Frequenzbereichen arbeiten (z. B. Multispektralkameras oder laserbasierte Höhenmessung über Chlorophyllfluoreszenz), noch deutlich verbessert werden.

Besonders bevorzugt sind Sensorsysteme, welche den Stromfluss, den Auslenkungswinkel, die Verbiegung etc. in den Applikationseinrichtungen, auch als Applikatoren bezeichnet, des zweiten Moduls messen oder ähnliche Messungen in vorgeschalteten applikatorähnlichen Auftragseinrichtungen des ersten Moduls durchführen. Dabei werden erfindungsgemäß geringe gepulste Ströme durch die Auftragseinrichtungen geleitet und der jeweilige Stromfluss bzw. Widerstand gemessen und als Maßstab für den Pflanzenwuchs gewertet. Auch kann mittels Temperatursensoren eine Abkühlung von gewärmten Applikatoren erkannt, als Maß für das Vorbeistreichen von Pflanzen genutzt und die Medien entsprechend dosiert werden.

Bei allen Sensoren werden RFID-analoge (*radio-frequency identification,* dt. Identifikation mit Hilfe elektromagnetischer Wellen) Sensorsysteme bevorzugt auf den einzelnen Applikatoren eingesetzt, welche Ströme berührungsfrei und kabellos erfassen, Applikator-Temperaturen messen, Spannungen durch Verbiegung, Auslenkungen, Positionsänderungen erfassen und über ein RFIDbasiertes Funksystem an eine zentrale Messeinheit weiterleiten. Vorteilhafterweise erübrigen sich dadurch herkömmliche Probleme bedingt durch die nötige Hochspannungsisolation von Sensorkabeln und Sensorfühlern, die beweglich im stark mechanisch beanspruchten Applikatorbereich installiert sein müssten. Die durch die Sensoren erfassten Daten sind vorteilhaft auch im Rahmen von Präzisionslandwirtschaft verwendbar. Diese Daten können für eine Verwendung in der Präzisionslandwirtschaft auch gespeichert werden.

Vorzugsweise weist die Applikationseinrichtung am zur Pflanze weisenden Ende ein Übergangselement mit graduell oder gestuft steigendem Widerstand auf. Dadurch kann vorteilhaft entgegengewirkt werden, dass beim Trennen der Pflanzen vom Stromfluss Abreißfunken entstehen, welche brennbares Material entzünden und an der Einschlagstelle ggf. Kabel oder andere Gegenstände schädigen können. Deshalb werden an die Enden der Metallbereiche Übergangselemente mit steigendem Widerstand eingefügt, die vorzugsweise porös sind und damit Feuchtigkeit aufnehmen bzw. über eine so gute Wärmeleitfähigkeit verfügen, dass sie Lichtbögen aktiv durch Wasserdampf oder Kühlleistung auskühlen können.

Vorzugsweise ist bei der erfindungsgemäßen Vorrichtung die Applikationseinrichtung ausgebildet, zusätzlich zur Fahrtbewegung eine Eigenbewegung in, gegen oder quer zur Fahrtbewegung auszuführen. Diese Ausführungsform ermöglicht vorteilhaft ein Minimieren von Abschattungseffekten, die besonders bei sehr dichtwachsenden grasartigen Pflanzen auftreten. Besonders ist diese Ausführungsform für Applikationseinrichtungen geeignet, die in Form eines Striegels oder einer Bürste ausgebildet sind, und weiterhin besonders beim Verwenden eines hochviskosen Mediums oder eines Schaums. Die Auftragseinrichtung kann dabei höhenselektiv arbeiten und/oder seitwärts, kreisförmig oder elliptisch bewegt werden, um die Wirksamkeit zu verbessern. Dazu können beispielsweise mechanische Führungen und entsprechende Antriebselemente bereitgestellt werden. Neben striegelartigen Einrichtungen eignen sich Bürsten mit schräggestellter Achse (nicht senkrecht horizontal zur Fahrtrichtung) sowie Einheiten mit einer Kinematik ähnlich von Heuwendern (z. B. Sternradschwader oder Bandrechen) zum umfassenden Durchkämmen von zu behandelnden Gräsern.

Besonders vorteilhaft sind neben gleichsinnig drehenden zum Vermeiden von Abschattungseffekten sich gegenläufig drehende Applikationseinrichtungen, besonders Bürsten, die einem oder unterschiedlichen Polen zugeordnet sind, um die Effizienz der Stromapplikation zu erhöhen.

Vorzugsweise weist das zweite Modul mindestens eine metallische Schutzscheibe mit einer seitlichen, randfreien elektrischen Isolierung auf. Ähnliche, jedoch nur mechanisch wirkende Schutzscheiben sind aus der Hacktechnik bekannt, mit denen die Nutzpflanzen gegenüber Staub und Erdflug bei schnelllaufenden Hacksystemen abgeschirmt werden sollen und im Idealfall gleichzeitig die Blätter der Nutzpflanze entweder angehoben oder auf den Boden gedrückt werden, damit die Hacke bei großem Überstand nicht die ganze Pflanze ausreißen kann. Über die erfindungsgemäße Schutzscheibe, bei der der metallische Mittelteil auf beiden Seiten bis wenige Millimeter (vorzugsweise 2 - 10) vom Außenrand isoliert ist, können Unkrautblätter keine Spannung mehr auf die Schutzscheibe und dann weiter auf die Nutzpflanze übertragen. Die Isolation ist entweder fest auf der Schutzscheibe aufgebracht oder läuft als zusätzliche kleinere Scheibe auf der gleichen Achse mit. Wenn die Scheiben nicht kraftschlüssig verbunden sind, können auch etwas größere Isolierscheiben mit größerem Achsenloch eingesetzt werden. Dies führt dazu, dass auch die vorderen und hinteren Ränder der Metallscheibe immer abgedeckt sind und keine Pflanzen elektrisch leitend berühren. Alternativ dazu sind isolierende Schutzflächen am vorderen Applikatorrand bzw. an der Applikatorseite oder vorne und hinten laufende isolierende Schutzscheiben rechts und links der Metallscheibe mit getrennter Achse möglich.

Das metallische Schneidrad ist permanent und sicher geerdet. Es schneidet das überfahrene Blatt entweder ab und isoliert es dadurch von der Nutzpflanze oder es drückt das Blatt oder den Stiel so hart und scharf in den Boden, dass der elektrische Schluss mit Boden und/oder Schneidrad eine elektrische Spannung direkt in den Boden und nicht in die Nutzpflanze ableitet. Diese Art der Erdung ist auch geeignet, als Sicherheitseinrichtung die Hochspannung gezielt im Gerät zu halten und Auswirkungen auf den Bereich außerhalb der Bearbeitungsfläche zu minimieren. Je nach Untergrund ist es sinnvoll den Schneid- oder Andrückeffekt zu bevorzugen und ggf. die metallische Schneidkante durch ein breit aufliegendes Scheiben- oder Raupenrad zu ersetzen und die Oberflächenleitfähigkeit durch eine elektrisch hochleitende Oberfläche zu maximieren.

Ein zweiter Aspekt der Erfindung betrifft ein Fahrzeug mit einer erfindungsgemäßen Vorrichtung. Das Fahrzeug ist vorteilhafterweise ein Traktor oder ein anderes auf Feldern bewegliches, ggf. modulares Fahrzeug, um die Vorrichtung in der Landwirtschaft bewegen und mit Energie versorgen zu können. Es sind aber auch andere Fahrzeuge und auch Schienenfahrzeuge geeignet, welche die Vorrichtung auf den zu behandelnden Flächen bewegen. Dies schließt luftgetragene und von Hand geschobene Fahrzeuge ein. Das Fahrzeug dient vorteilhaft als Trägersystem, Kraftquelle, Antriebsquelle, und kann als Selbstfahrer oder Anhänger ausgebildet sein.

Ein dritter Aspekt der Erfindung betrifft ein Verfahren zum Applizieren von elektrischem Strom auf Pflanzen zum Ausüben einer herbiziden Wirkung mittels einer erfindungsgemäßen Vorrichtung, mit den Schritten:
- gezieltes Auftragen eines übergangswiderstandsenkenden Mediums auf Pflanzen,
- Applizieren von elektrischem Strom auf die von dem Medium benetzten Pflanzen,
wobei die Pflanzen mechanisch vorkonditioniert und/oder nachbehandelt werden.

Die Vorteile des Verfahrens entsprechen den Vorteilen der erfindungsgemäßen Vorrichtung, soweit sie nicht auf reine Verfahrensmerkmale beschränkt sind.

Vorteilhafterweise wird das übergangswiderstandsenkende Medium ausgewählt aus der Gruppe bestehend aus einer wässrigen Flüssigkeit, einer öligen Flüssigkeit, einer viskosen Flüssigkeit, einer hochviskosen Flüssigkeit, einer hochkonzentrierten Lösung, einer thixotropen Flüssigkeit, einer Suspension, einer Emulsion, einem Feststoff, einem Schaum und Mischungen der besagten Komponenten. Viskose Flüssigkeiten, besonders hochviskose Flüssigkeiten, sowie Schäume sind besonders vorteilhaft geeignet, um einem Herunterlaufen des Mediums an senkrechten Pflanzenstrukturen entgegenzuwirken, z.B. beim Minimieren von Abschattungseffekten.

Vorzugsweise wird die Menge des aufgetragenen übergangswiderstandsenkenden Mediums in Abhängigkeit von der elektrischen Leitfähigkeit von Pflanze und/oder Boden im Bereich der Auftragseinrichtung und/oder Applikationseinrichtung gesteuert. Die Menge wird dabei so dosiert, dass die äußeren, widerstandtragenden Pflanzenorgane (Stacheln, Blatthaare, Wachsschichten, Cuticula) chemisch/physikalisch dort geschwächt, überbrückt oder zerstört werden, wo die elektrophysikalischen Applikatoren die Pflanze berühren, um die systemische Wirkung auf die Gesamtpflanze auszuüben.

Vorzugsweise werden in dem erfindungsgemäßen Verfahren das übergangswiderstandsenkende Medium, die Auftragseinrichtung und/oder die Applikationseinrichtung bis maximal zum Hauptsiedepunkt des übergangswiderstandsenkenden Mediums erwärmt. Dafür werden elektrische Einrichtungen oder Abgaswärme des entsprechenden Fahrzeugs genutzt. Die auf Pflanzenblätter übertragene Hitze zerstört Wachsstrukturen oder mit Wachs verfestigte und besetzte Strukturen auf der Blattoberfläche. Die aufschmelzenden Wachsstrukturen verstärken den Zerstörungsprozess und erhöhen zusätzlich die Destabilisierung der Blattstrukturen, besonders bei einem Verwenden von Öl oder Öl- bzw. fettsäurehaltigen Substanzen als übergangswiderstandsenkendem Medium. Dabei verringert der Ölfilm auch das Verdampfen von Wasser direkt nach der Aufbringung des Öles und damit ein schnelles Abkühlen der Blattbereiche, was für eine elektrische Behandlung der Blätter nach einem Intervall von Sekunden vorteilhaft ist. Die destabilisierten Blattstrukturen ohne Wachs oder andere Strukturen als Isolatoren oder Abstandhalter sind dann für die elektrischen Applikatoren mit 20 - 90 % geringerem elektrischen Widerstand durchdringbar als nichtbehandelte Blattstrukturen. Da Wachse durch den Ölzusatz und den Wasseraustritt aus dem Blättern mit Hilfe der Abrasionskräfte der vorbeistreifenden Blätter kontinuierlich von den elektrischen Applikatoren gereinigt werden, sinken dadurch Übergangswiderstände weiter, was die Spannung erniedrigt und den Strom zerstörungsfördernd erhöht. Ein zusätzliches Erwärmen auch der elektrischen Applikatoren ist insbesondere bei großen und für hohen Widerstand bekannten Pflanzen (z.B. Disteln, Melde, Brennnesseln) vorteilhaft.

Vorzugsweise wird in dem erfindungsgemäßen Verfahren das übergangswiderstandsenkende Medium elektrisch aufgeladen. Dabei wird genutzt, dass Pflanzen im direkten Umfeld der elektrophysikalischen Hochspannungshandlung, bedingt durch das Bodenpotential, elektrostatisch aufgeladen werden. Das aufgeladene Medium, z.B. in Tröpfchenform, setzt sich möglichst auf den nächstgelegenen Blättern ab und wird entladen. Zu diesem Zweck werden Düsen und der normalerweise leitfähige Sprühbalken insgesamt elektrisch entgegengesetzt zum nächstgelegenen Stromapplikator auf die Pflanzen aufgeladen, sofern mit Gleichstrom gearbeitet wird. Mit anderen Worten werden die aufzubringenden Substanzmischungen durch Anlegen von Hochspannung an die Sprühmodule elektrisch aufgeladen, damit sie sich an den entgegengesetzt geladenen Pflanzenteilen gezielter ablagern. Die Aufladung erfolgt mittels Hochspannung, wie sie auch in Weidezäunen eingesetzt wird. Dabei wird darauf geachtet, dass die maximal verfügbare Energie bei einer versehentlichen Berührung durch den Menschen so niedrig bleibt, dass keine Gefahr für den Menschen entsteht.

In dem erfindungsgemäßen Verfahren werden die Pflanzen zusätzlich mechanisch vorkonditioniert und/oder nachbehandelt. Dabei werden die Pflanzen vorteilhafterweise direkt vor der Behandlung oder nach der elektrophysikalischen Behandlung beispielsweise durch Mähen, Schneiden, Walzen, Knicken, Brechen, Bürsten, Rupfen zusätzlich geschädigt. Diese Maßnahmen wirken synergistisch mit der erfindungsgemäßen Stromapplikation zum Vernichten von Pflanzen zusammen.

Im Folgenden wird das den elektrischen Übergangswiderstand senkende Medium näher beschrieben.

Das Medium weist mindestens eine den elektrischen Übergangswiderstand im Bereich der pflanzlichen Oberfläche senkende Komponente auf. Die Komponente ist vorzugsweise mindestens eine erste Komponente, die mindestens eine oberflächenaktive Substanz ausgewählt aus der Gruppe bestehend aus Tensiden enthält, oder mindestens eine zweite Komponente, die mindestens eine viskositätserhöhende Substanz ausgewählt aus der Gruppe bestehend aus reinen Kieselsäuren, pyrogenen Kieselsäuren, Mischoxiden, Magnesium-Schichtsilikaten, organischen Additiven auf der Basis von biogenen Ölen und deren Derivaten, Polyamiden und modifizierten Kohlenhydraten enthält.

Die mindestens eine erste Komponente liegt vorzugsweise in einem Gemisch mit der mindestens einen zweiten Komponente vor. Es gibt kommerziell erhältliche Produkte, die ein derartiges Gemisch aufweisen, wie beispielsweise die Produkte Kantor (Hersteller agroplanta GmbH & Co. KG, Zustorf, Deutschland) und Hasten (Hersteller ADAMA Deutschland GmbH, Köln, Deutschland).

Das Medium ermöglicht vorteilhaft ein Überwinden hydrophob wirkender pflanzlicher Oberflächenstrukturen und isolierender Luftspalte, wodurch die elektrische Leitfähigkeit zwischen einem elektrischen Applikator und einer Pflanze erhöht und dadurch elektrischer Strom effektiver auf die Pflanze appliziert werden kann.

Das Medium ermöglicht durch seine Eigenschaften das Übertragen von elektrischem Strom auf eine Pflanze mit deutlich verringertem Widerstand gegenüber der Applikation von elektrischem Strom auf Pflanzen nur mittels fester, üblicherweise metallischer Applikatoren. Das Medium ermöglicht sowohl ein widerstandsreduziertes Überwinden von den Stromfluss störenden Strukturen der Applikatoren (Unebenheiten, Anhaftungen) und der Pflanze, wie z.B. Luftschichten (verstärkt durch Haare, Blattunebenheiten, Stacheln), und auch ein effektiveres Leiten von Strom in den durchleiteten Materialien und Schichten, sodass eine systemische, pflanzenschädigende Wirkung partiell oder bis in die Wurzeln bei niedrigem Energieaufwand entsteht. Durch das Medium wird somit eine Wirkungssteigerung eines stromapplizierenden Verfahrens erreicht.

Das Medium wird auch als übergangswiderstandsenkendes Medium bezeichnet. Das Medium ist z.B. eine wässrige Flüssigkeit, eine viskose Flüssigkeit, eine hochviskose Flüssigkeit, ein Öl, eine hochkonzentrierte Lösung, eine thixotrope Flüssigkeit, eine Suspension, eine Emulsion, ein Feststoff oder ein Schaum, ohne auf diese Aufzählung beschränkt zu sein.

Die erste Komponente wird auch als Komponente A bezeichnet. Die oberflächenaktive Substanz aus der Gruppe der Tenside umfasst vorteilhafterweise nichtionische Tenside und ionische Tenside mit hoher biologischer Abbaubarkeit. Die oberflächenaktiven Substanzen wirken vorteilhaft beim Benetzen einer Pflanzenoberfläche. Während zwar fast alle oberflächenaktiven Substanzen eingesetzt werden können, sind Stoffklassen und Produkte mit einer hohen biologischen Abbaubarkeit und ökologischer Landwirtschaftskompatibilität bevorzugt: Naturidentische oder naturähnliche Biotenside, vorzugsweise industriell verfügbare nichtionische Zuckertenside wie Alkylpolyglucoside (APGs), Saccharoseester, andere Zuckerester, Methylglycosidester, Ethylglycosidester, N-Methylglucamide oder Sorbitanester (z. B. von Solverde), amphotere Tenside wie z. B. Cocoamidopropylbetain (CAPB) oder anionische Tenside (z. B. Natriumlaurylsulfat von Solverde).

Weitere beispielhafte Verbindungen der Komponente A werden im Folgenden genannt. Dabei sind Aufzählungen, auch der weiteren Komponenten, nicht abschließend, sondern stehen auch stellvertretend für Verbindungen mit analoger Wirkung im Sinne der Erfindung, in diesem Falle der oberflächenaktiven Wirkung:

### - Nichtionische Zuckertenside:

- Alkylpolyglucoside (APGs): Die Alkylreste haben 4 bis 40 Kohlenstoffatome aller möglichen Isomere, vorzugsweise bestehen sie aus linearen Ketten mit Hauptanteilen von 8 bis 14 Kohlenstoffatomen wie sie z. B. in aus Palmöl hergestellten Fettsäurealkoholen vorkommen. Die Glucoside sind Isomere und A-nomere mit 1 - 15 Zuckereinheiten, vorzugsweise Glucose mit einem Polymerisierungsgrad zwischen 1 und 5 Einheiten oder auch andere Zuckerester wie Saccharose (Saccharoseester), Sorbitane (Sorbitanester).
- Glycosidester: Ester mit Alkoholen C1-C14 alle Isomere, auch ungesättigt und zusätzlich mit Carbonsäure, Aldehydgruppen und Alkoholgruppen funktionalisiert, vorzugsweise Methyl- und Ethylglycosidester.
- N-Methylglucamide mit Kohlenstoffketten C1-C30 alle Isomere, auch ungesättigt und zusätzlich mit Carbonsäure, Aldehydgruppen und Alkoholgruppen funktionalisiert, vorzugsweise lineare Alkylketten C2-C15.

### - Amphotere Tenside:

- Cocoamidopropylbetain (CAPB) mit Kohlenstoffketten C1 - C30 alle Isomere, auch ungesättigt und zusätzlich mit Carbonsäure, Aldehydgruppen und Alkoholgruppen funktionalisiert, vorzugsweise lineare Alkylketten C2-C15.
- Anionische Tenside:

Als Beispiel für ein anionisches Tensid wird Natriumlaurylsulfat verwendet. Es können jedoch auch Gemische mit verschiedenen Alkylresten (C4-C20) der LAS (Lineare Alkylbenzolsulfonate) aber auch der SAS (Sekundäre Alkansulfonate), FAS (Fettalkoholsulfate) und Seifen verwendet werden.

Die zweite Komponente wird auch als Komponente B bezeichnet. Die viskositätserhöhende Substanz ist vorzugsweise eine thixotrope Substanz oder ein Substanzgemisch der organischen oder anorganischen rheologischen Additive. Die Substanzen der Komponente B weisen vorteilhafterweise eine hohe biologische Verträglichkeit bzw. Abbaubarkeit auf, so dass sie mit ökologischer Landwirtschaft kompatibel sind. Die genannten Substanzen bzw. Verbindungen sind beispielhaft: reine oder pyrogene Kieselsäuren, z. B. Sipernat oder Aerosil von Evonik; Mischoxide, z. B. Magnesium-Aluminiumsilikate wie Attapulgit (^{®}Attagel von BASF Formulation Additives); Magnesium-Schichtsilikate, z.B. Bentonite oder Hectorite (z. B. Optigel oder Garamite von BYK); organische Additive auf der Basis von biogenen Ölen wie z.B. Rizinusöl oder Sojaöl: z. B. Polythix von FINMA; aus dem synthetischen Bereich Polyamide, z.B. Polyacrylamide, z. B. Disparlon von King Industries; Stärke; modifizierte Cellulosen, z.B. Methylzellulose, Gummi arabicum, Carmellose-Natrium, Caragen, Carbomer, Hydroxy(m)ethylcellulose, polyanionische Cellulose, Saccharide, Tragant, vorverkleisterte Stärke oder Xanthangummi.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Die viskositätserhöhende Substanz ist vorzugsweise zugleich die den elektrischen Übergangswiderstand im Bereich der pflanzlichen Oberfläche senkende Komponente.

Vorzugsweise weist das Medium neben der Komponente A und/oder der Komponente B mindestens eine weitere Komponente auf, die mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und weiteren Metallionen mit Komplexbildnern aufweist. Diese Komponente wird auch als Komponente C bezeichnet. Die besagten Substanzen und/oder Substanzgemische der Komponente C sind beispielhaft: anorganische Salze: Magnesiumsulfat, Na/K₂SO₄; Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von E-gos; Gegenionen zu den in den Komponenten des erfindungsgemäßen Stoffgemischs eingesetzten Salzen: z. B. Na⁺, K⁺, Mg²⁺, Ca²⁺; Huminstoffe: z. B. Liqhumus von Humintech; chelatisiertes Eisen: z. B. Humiron von Humintech; mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen. Die Metallionen können auch von anderen Komplexbildnern aus der Gruppe der mehrzähnigen Komplexbildner komplexiert werden. Statt Eisen können andere zwei- oder dreiwertige Metallionen verwendet werden.

Bei der Frage der leitfähigkeitserhöhenden Substanzen ist zu beachten, dass es sich nur bei den anorganischen Salzen und den anorganischen Gegenionen organischer Substanzen um die klassische Erhöhung der Leitfähigkeit einer Lösung handelt. Insbesondere bei den Kohlenstoffderivaten und auch bei den höhermolekularen Huminstoffen wird die Leitfähigkeit der Blattoberflächen auch bei festen Stoffgemischen, z.B. im getrockneten Zustand eines übergangswiderstandsenkenden Mediums erhöht. Derartige Trocknungsvorgänge treten sehr schnell auf, wenn z.B. übergangswiderstandsenkende Medien mit geringer Wasserverdünnung besonders an heißen Tagen aufgetragen werden oder wenn die Flüssigkeitsfilme durch die Applikatoren größerflächig über die Blattfläche verteilt werden. Deshalb ist spezifische Leitfähigkeitserhöhung besonders vorteilhaft im Sinne der Erfindung.

Vorzugsweise weist das Medium neben der Komponente A und/oder der Komponente B mindestens eine weitere Komponente auf, die mindestens eine hygroskopische oder verdunstungssenkende Substanz ausgewählt aus der Gruppe bestehend aus Ölen, Mikrogelen und Polyalkoholen ist. Diese Komponente wird auch als Komponente D bezeichnet. Die besagten Substanzen und/oder Substanzgemische der Komponente D sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Mikrogele: Acrylsäuregele (Superabsorber); Polyalkohole: Glycerin.

Vorzugsweise weist das Medium neben der Komponente A und/oder der Komponente B mindestens eine weitere Komponente auf, die mindestens eine wachserweichende Substanz ausgewählt aus der Gruppe bestehend aus Ölen, Estern, Alkoholen, Polypeptiden und alkoxylierten Triglyceriden enthält. Diese Komponente wird auch als Komponente E bezeichnet. Die besagten Substanzen und/oder Substanzgemische der Komponente E sind beispielhaft: Öle: Rapsöl, Sonnenblumenöl, Olivenöl (ggf. zur Stabilitätserhöhung heißgepresste Fraktionen), auch Rapsöl-Fertigprodukte wie Micula der Firma Evergreen Garden Care; Ester: Fettsäureester (Ester mit Alkoholen C1 - C10 aller Isomere, auch ungesättigt und zusätzlich mit Carbonsäure, Aldehydgruppen und Alkoholgruppen funktionalisiert), auch Fertigprodukte wie HASTEN (Fa. Vicchem), ein Rapsölethylester; alkoxylierte Triglyceride: auch als Fertigprodukt KANTOR der Firma Agroplanta.

Vorzugsweise weist das Medium neben der Komponente A und/oder der Komponente B mindestens eine weitere Komponente auf, die mindestens eine physikalisch-phytotoxische Substanz und/oder wachsschichtauflösende Substanz ausgewählt aus der Gruppe bestehend aus Karbonsäuren, Terpenen, aromatischen Ölen, Alkalien, funktionalisierten Polypeptiden, anorganischen Alkalien und organischen Alkalien enthält. Diese Komponente wird auch als Komponente F bezeichnet. Unter physikalisch-phytotoxischen Substanzen werden hier besonders die Wachsschicht einer Pflanze unspezifisch oder spezifisch zerstörende Substanzen verstanden, sowie anderweitig phytotoxisch wirkende Substanzen. Die besagten Substanzen und/oder Substanzgemische der Komponente F sind beispielhaft: Karbonsäuren: Pelargonsäure (C9) (z. B. Pelargonsäure in Finalsan von Neudorff) oder andere verzweigte oder unverzweigte Carbonsäuren mit kürzerem (<C9), gleich langem (=C9) oder längeren (>C9) linearen oder verzweigten gesättigten oder einfach oder mehrfach ungesättigten Kohlenstoffketten (z. B. Capronsäure, Caprylsäure und Caprinsäure). Diese Kohlenstoffketten können durch weitere funktionale Gruppen wie Alkohole, Aldehyde oder Carbonsäuregruppen einfach oder mehrfach zusätzlich funktionalisiert sein. Terpene: terpenhaltige Öle; aromatische Öle: Citronellöl (auch Fertigprodukte von Barrier/UK), Eugenol z. B. aus Gewürznelkenöl (auch Fertigprodukte wie Skythe /USA), Pinienöl (auch Fertigprodukte der Firma Sustainableformulations), Pfefferminzöle (z. B. Biox-M von Certis); Alkalien: anorganische Alkalien (z.B. NaOH, KOH) oder organische Alkalien (z. B. Salze von Fettsäuren oder Huminsäuren z. B. Liqhumus von Humintech).

Die Komponente E kann ebenfalls zur Zerstörung der Wachsschicht (d.h. als Komponente F) eingesetzt werden. Dazu muss die Komponente E ausreichend heiß sein. Vorzugsweise werden hochsiedende organische Substanzen mit geringem Wasseranteil oder ohne Wasseranteil eingesetzt. Ein heißes Öl ist besonders bevorzugt.

Vorzugsweise weist das Medium neben der Komponente A und/oder der Komponente B mindestens eine weitere Komponente zur Haftungsverstärkung auf, die mindestens eine haftungsfördernde Substanz und/oder mindestens eine haftungsverstärkende Substanz enthält. Die haftungsfördernde Substanz ist ausgewählt aus der Gruppe der Schaumbildner bestehend aus Tensiden, Proteinen und deren Derivaten. Die haftungsverstärkende Substanz (indem die Viskosität weiter erhöht wird) ist ausgewählt aus der Gruppe bestehend aus organischen rheologischen Additiven, anorganischen rheologischen Additiven (vorzugsweise mit hoher biologischer Verträglichkeit), reinen Kieselsäuren, pyrogenen Kieselsäuren, Mischoxiden, Magnesium-Schichtsilikaten, organischen Additiven auf der Basis von biogenen Ölen und deren Derivaten, und Polyamiden. Diese Komponente wird auch als Komponente G bezeichnet. Die Komponente G bewirkt dabei ein eingeschränktes Bewegen bzw. Verteilen des Stoffgemisches auf einer entsprechenden Pflanze bzw. mehreren, dichtstehenden Pflanzen.

Die Tenside können nichtionische oder anionische Tenside sein, z.B. Schaummarkierungsmittel von Kramp oder Proteinschaumbildner der Firma Dr.Sthamer. Von den weiteren haftungsverbessernden Substanzen und/oder Substanzgemischen der Komponente G sind beispielhaft: reine oder pyrogene Kieselsäuren: Sipernat oder Aerosil von Evonik; Mischoxide: Magnesium-Aluminiumsilikate, z.B. Attapulgit (^{®}Attagel von BASF Formulation Additives); Magnesium-Schichtsilikate; Bentonite oder Hectorite (z. B Optigel oder Garamite von BYK); organische Additive auf der Basis von biogenen Ölen wie z.B. Rizinusöl oder Sojaöl: Polythix von FINMA; Polyamide: Disparlon von King Industries.

Das biogene Öl ist vorzugsweise aus der Gruppe bestehend aus Rapsöl, Sonnenblumenöl, Kokosöl, Rizinusöl und Sojaöl ausgewählt.

Die Derivate der Öle können beispielsweise deren Salze oder Ester sein.

Vorzugsweise weist das Medium neben der Komponente A und/oder der Komponente B mindestens eine weitere Komponente auf, die mindestens eine ionisierungsfördernde Substanz ausgewählt aus der Gruppe bestehend aus anorganischen Salzen, Kohlenstoff, Huminstoffen, chelatisiertem Eisen und anderen chelatisierten Metallionen enthält. Diese Komponente wird auch als Komponente H bezeichnet. Von den weiteren Substanzen und/oder Substanzgemischen der Komponente H sind beispielhaft: anorganische Salze: Na/K₂SO₄ oder andere, Gegenionen zu eingesetzten Salzen von organischen Säuren (Na+, K+); Kohlenstoff: amorphe oder graphitische Modifikationen wie z.B. Graphitsuspensionen von CP Grafitprodukte, Graphen oder röhrchenartige Kohlenstoffmodifikationen, vorzugsweise auch gemahlene Biokohle wie z.B. Pflanzenkohle500+ von Egos; Huminstoffe: Liqhumus von Humintech; chelatisiertes Eisen: Humiron von Humintech, mit GLDA (Tetranatrium-N, N-bis(carboxylatomethyl)-L-glutamat, z.B. von Solverde) oder anderen biologisch abbaubaren Verbindungen chelatisierte Metallionen, vorzugsweise Eisen.

Vorzugsweise weist das Medium neben der Komponente A und/oder der Komponente B mindestens eine weitere Komponente auf, die mindestens eine Trägerflüssigkeit ausgewählt aus der Gruppe bestehend aus Wasser, organischen Flüssigkeiten, Pflanzenölen, Estern von Pflanzenölen und Fettsäureestern enthält. Diese Komponente wird auch als Komponente I bezeichnet. Die Trägerflüssigkeiten sind vorteilhaft zum Verdünnen des Stoffgemisches geeignet. Von den Substanzen und/oder Substanzgemischen der Komponente I sind beispielhaft: Organische Flüssigkeiten: Pflanzenöle; Ester von Pflanzenölen (Ester mit Alkoholen C1 - C10 alle Isomere, auch ungesättigt und zusätzlich mit Carbonsäure, Aldehydgruppen und Alkoholgruppen funktionalisiert) und Fettsäureester (Ester von Fettsäuren mit C4 - C30, dabei alle Isomere, auch ungesättigter Fettsäuren mit Alkoholen mit C1 - C10, dabei alle Isomere, auch ungesättigt und zusätzlich mit Carbonsäure, Aldehydgruppen und Alkoholgruppen funktionalisiert).

Vorzugsweise weist das Medium neben der Komponente A und/oder der Komponente B mindestens eine weitere Komponente auf, die mindestens eine die Lagerfähigkeit oder eine Tankmischung stabilisierende Substanz enthält. Diese Komponente wird auch als Komponente J bezeichnet. Die Substanzen und/oder Substanzgemische der Komponente J sind beispielhaft Emulgatoren wie Poloxamer (BASF), mittelkettige Triglyceride und/oder Biozide, dabei bevorzugt Stoffe mit hoher biologischer Abbaubarkeit.

Wie aus den beschriebenen Komponenten hervorgeht, gibt es einige Substanzen, die eine Mehrfachfunktion erfüllen, d.h. unter verschiedenen Komponenten Verwendung finden können, und deshalb bevorzugt eingesetzt werden. Insbesondere zu nennen sind hierbei Huminstoffe, Pflanzenöle und ihre Ester (Ester mit Alkoholen C1 - C25 aller Isomere, auch ungesättigt und zusätzlich mit Carbonsäure, Aldehydgruppen und Alkoholgruppen funktionalisiert, vorzugsweise Fettalkohole aus natürlichen Quellen), und leitfähigkeitserhöhende Komponenten.

In Abhängigkeit vom Anwendungsziel wird das Medium bevorzugt aus den folgenden Komponenten zusammengestellt (in Klammern werden fakultative Komponenten genannt, die je nach Anwendungsziel weiter bevorzugt hinzugefügt werden können):
a) Anwendungsziel Benetzung: Mischungen von A + B (+C/D/H/I/J);
b) Anwendungsziel spezifische Erhöhung der Leitfähigkeit der Oberfläche: Mischungen von A + B + C (+D/H/I/J);
c) Anwendungsziel Aufweichung der Wachsschicht: Mischungen von A + B + E (+C/D/H/I/J);
d) Anwendungsziel Zerstörung der Wachsschicht: Mischungen von A + B + F (+C/D/H/I/J);
e) Anwendungsziel Überbrückung von Widerständen: Mischungen von A + B + G (+C/D/H/I/J);
f) Komponente H wird nur eingesetzt, wenn die elektrostatische Aufladung von Pflanzen und Medium genutzt werden kann;
g) Andere Kombinationen von A + B mit den Komponenten C/D/E/F/G/H/I/J können zum Bewirken von Kombinationseffekten zum Erhöhen der Effektivität eingesetzt werden.

Vorteilhaft für die Zerstörung der Wachsschicht vor oder bei der elektrophysikalischen Behandlung ist die Zerstörung mit erhitzten Medien generell und insbesondere mit heißem Öl (in Komponente E) in den Bereichen, die mit den elektrischen Applikatoren in Berührung kommen. Das dafür nötige dosierte Aufsprühen von geringen Mengen heißem Öl (0,5 - 20 l/ha, vorzugsweise 2 - 10 l/ha) nur auf die oberen Blattbereiche verringert die Aufwandmenge gegenüber der reinen (bekannten) Abtötung der Pflanzen durch heißes Öl stark, weil die elektrophysikalische Behandlung bei geringem Widerstand dann systemisch wirkt.

Vorzugsweise weist das Medium neben der Komponente A und/oder der Komponente B mindestens eine weitere Komponente auf, wobei die weitere Komponente die Komponente C, die Komponente E und/oder die Komponente F auf. Die Komponenten C, E und F sind sowohl jede für sich als auch in Kombination besonders effektiv, um den elektrischen Übergangswiderstand im Bereich der pflanzlichen Oberfläche zu senken. Der Übergangswiderstand wird durch die Leitfähigkeitserhöhung in Schichten im Bereich der pflanzlichen Oberfläche (Komponente C), durch das Erweichen (Aufweichen) der Schichten im Bereich der pflanzlichen Oberfläche (Komponente E) und/oder durch das Auflösen (Zerstören) der Schichten im Bereich der pflanzlichen Oberfläche (Komponente F) gegenüber einer Behandlung ohne das Medium signifikant verringert.

Als Komponente C weist das Medium vorzugsweise Huminstoffe und/oder chelatisiertes Eisen auf, wobei das chelatisierte Eisen bevorzugt durch Huminsäuren chelatisiertes Eisen ist. Als Komponente F weist das Medium vorzugsweise Fettsäuren, Gemische von Fettsäuren und/oder alkalisierte Huminstoffe auf, wobei die Fettsäuren bevorzugt in alkalisierter und/oder chelatisierter Form vorliegen.

Besonders bevorzugt weist das Medium neben der Komponente A und/oder der Komponente B mindestens eine weitere Komponente auf, wobei die weitere Komponente die Komponente C und/oder die Komponente E ist.

Vorzugsweise weist das Medium neben der Komponente A und/oder der Komponente B mindestens eine weitere Komponente auf, wobei die weitere Komponente die Komponente C, die Komponente D und/oder die Komponente E ist.

Anstatt der Komponente A und/oder der Komponente B kann das Medium vorzugsweise mindestens zwei Komponenten ausgewählt aus der Gruppe bestehend aus einer Komponente C, einer Komponente E und einer Komponente F aufweisen. Wie bereits beschrieben, enthält die Komponente C mindestens eine leitfähigkeitserhöhende Substanz ausgewählt aus der Gruppe bestehend aus anorganischen Salzen, Kohlenstoff, Huminstoffen, chelatisiertem Eisen, anderen chelatisierten Metallionen und Metallionen mit Komplexbildnern, die Komponente E enthält mindestens eine wachserweichende Substanz ausgewählt aus der Gruppe bestehend aus Ölen, Estern, Alkoholen, Polypeptiden und alkoxylierten Triglyceriden, und die Komponente F enthält mindestens eine physikalisch-phytotoxische und/oder wachsschichtauflösende Substanz ausgewählt aus der Gruppe bestehend aus Karbonsäuren, Terpenen, aromatischen Ölen, Alkalien, funktionalisierten Polypeptiden, anorganischen Alkalien und organischen Alkalien.

Besonders bevorzugt weist das Medium entweder die Komponente C und die Komponente E oder die Komponente C und die Komponente F auf.

Das Medium kann vorzugsweise mindestens eine weitere Komponente aufweisen, wobei die weitere Komponente ausgewählt ist aus der Gruppe bestehend aus einer Komponente A, einer Komponente B, einer Komponente D, einer Komponente G, einer Komponente H, einer Komponente I und einer Komponente J.

Im Folgenden werden für bestimmte Verwendungen bevorzugte Medien beschrieben. Der Komponentenname bezieht sich auf die oben beschriebenen Komponenten. In weiteren Spalten werden dann bevorzugte Stoffe aus dieser Gruppe benannt. Das Gesamtauftragsvolumen beträgt vorzugsweise 10 - 200 l/ha (wasserbasiert) oder 30 - 200 l/ha (wasserbasiert) oder 10 - 300 l/ha (wasserbasiert) bzw. 5 - 30 l/ha (ölbasiert) je nach Kulturhöhe mit dem Ziel, nur die oberste, durch Applikatoren erreichbare Blattetage zu erreichen. Die Aufwandmenge bezieht sich auf vollflächige Behandlung bei Sprühen auf geschlossene Pflanzendecken. Werden mehr als eine Komponente für ein Ziel angegeben, so können diese Komponenten allein oder als Gemisch bis zum Erreichen der Gesamtaufwandmenge eingesetzt werden. Sind für die Mengenangaben Alternativbereiche nötig, werden diese separat beschrieben. Der Medienträger Wasser bzw. pflanzenölbasierte Komponenten werden in der Tabelle nicht aufgeführt, da sie immer zur Ergänzung auf das Auftragsvolumen dienen.

In Tabelle 1 sind wasserbasierte Medien zusammengefasst. Diese sind besonders zur Verwendung auf zweikeimblättrigen Pflanzen vorgesehen.

**Tabelle 1**

| Komponentenname | Funktion | Einzustellende Aufwandmenge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0 --4 | 0 - 2 APGs, Zuckerester, CAPB | 0,2 - 0,5 Zuckerester, CAPB |
| B | Verdicker | 0 - 5 | 0 - 3 Kieselsäuren Mischoxidsilikate Schichtsilikate, mod. Zellulosen | 0-2 Kieselsäuren Mischoxidsilikate Schichtsilikate |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungssenkend | 0,1 - 10 | 0,1 -5 Pflanzenöle/Pflanzenölester | 0,1 - 2 Pflanzenöle |
| E | Wachsschichterweichend | 0,1 -40 | 0,2 - 20, Öle, Polypeptide, Fettsäureester, Carbonsäure | 0,5 - 10 Öle, Fettsäureester, Carbonsäuren |
| F | Wachsschichtzerstörer | 0 - 40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |

In Tabelle 2 sind ölbasierte Medien zusammengefasst. Diese sind hauptsächlich zur Verwendung auf zweikeimblättrigen Pflanzen vorgesehen.

**Tabelle 2**

| Komponentenname | Funktion | Einzustellende Aufwandmenge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0 - 2 | 0 - 1 APGs, Zuckerester, CAPB | 0 - 0,2 Zuckerester, CAPB |
| B | Verdicker | 0 - 2 | 0 - 2 Kieselsäuren Mischoxidsilikate Schichtsilikate, mod. Zellulosen | 0 - 1 Kieselsäuren Mischoxidsilikate Schichtsilikate, Zellulose |
| C | Leitfähigkeits-erhöher | 1-10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Hygroskopische Substanzen | 0,1 - 10 | 0,1 - 5 Glycerin, Mikrogele | 0,1 - 2 Glycerin |
| E | Wachsschicht-erweicher | 0,1 - 40 | 0,2 - 20, Öle, Polypeptide, Fettsäureester, Carbonsäure | 0,5 - 10 Öle, Fettsäureester, Carbonsäuren |
| F | Wachsschichtzerstörer | 0 - 40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |

In Tabelle 3 sind Medien für Tröpfchenapplikationen zusammengefasst. Diese sind hauptsächlich zur Verwendung auf Gräsern vorgesehen.

**Tabelle 3**

| Komponentenname | Funktion | Einzustellende Aufwand-menge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0 - 3 | 0 - 2 APGs, Zuckerester, CAPB | 0,2 - 0,5 Zuckerester, CAPB |
| B | Verdicker | 0 - 10 | 0 - 5 Kieselsäuren Mischoxidsilikate Schichtsilikate, mod. Zellulosen | 1 - 5 Kieselsäuren Mischoxidsilikate Schichtsilikate, mod. Zellulosen |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungssenkende Substanzen | 0,1 - 10 | 0,1 - 5 Pflanzenöle/Pflanzenölester | 0,1 - 2 Pflanzenöle |
| E | Wachsschicht-erweicher | 0,1 - 40 | 0,2 - 20, Öle, Polypeptide, Fettsäureester, Carbonsäure | 0,5 - 10 Öle, Fettsäureester, Carbonsäuren |
| F | Wachsschicht-zerstörer | 0 - 40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |

In Tabelle 4 sind Medien für schaumbasierte Applikationen zusammengefasst. Diese sind hauptsächlich zur Verwendung auf Gräsern vorgesehen.

**Tabelle 4**

| Komponentenname | Funktion | Einzustellende Aufwand-menge allgemein kg/ha Stoffklasse nach Liste Komponentenname | Einzustellende Aufwandmenge bevorzugt kg/ha bevorzugte Stoffklassen | Einzustellende Aufwandmenge Speziell kg/ha bevorzugte Stoffklasse |
|---|---|---|---|---|
| A | Tensid | 0 - 4 | 0 - 2 APGs, Zuckerester, CAPB | 0,2 - 0,5 Zuckerester, CAPB |
| B | Verdicker | 0 - 2 | 0 - 2 Kieselsäuren Mischoxidsilikate Schichtsilikate, mod. Zellulosen | 0-2 Kieselsäuren Mischoxidsilikate Schichtsilikate |
| C | Leitfähigkeitserhöher | 1 - 10 | 1 - 10 Sulfate, Huminstoffe, chelatisiertes Eisen (GLDA) | 1 - 10 Huminstoffe, chelatisiertes Eisen, mit Huminsäuren chelatisiert, alkalisiert |
| D | Verdunstungs-senkend | 0,1 - 10 | 0,1 - 5 Pflanzenöle/Pflanzenölester Glycerin, Mikrogele | 0,1 - 2 Pflanzenöle Glycerin |
| E | Wachsschicht-erweicher | 0,1 - 40 | 0,2 - 20, Öle, Polypeptide, Fettsäureester, Carbonsäure | 0,5 - 10 Öle, Fettsäureester, Carbonsäuren |
| F | Wachsschicht-zerstörer | 0 - 40 | 0 - 20 Fettsäuren, (Pelargonsäure nur in Dosierungen 0 - 50 % der in PSM zulässigen Mengen für die jeweilige Kultur) Terpenöle, alkalisierte Huminstoffe, Eisenhaltige Metallseifen | 0 - 10, nichttoxische Carbonsäuren, Eisenhaltige Metallseifen, alkalisierte Huminstoffe |
| G | Schaum-additive | 0 - 2 | 0-1 | 0 - 1 |

Die Erfindung wird anhand der Figuren näher erläutert. Es zeigen
- Figur 1: eine Ausführungsform eines Trägerfahrzeugs mit einer Ausführungsform einer Vorrichtung gemäß der Erfindung.
- Figur 2: eine weitere Ausführungsform eines Trägerfahrzeugs mit einer Vorrichtung gemäß der Erfindung in einer seitlichen Ansicht.
- Figur 3: mögliche Anordnungen der erfindungsgemäßen Vorrichtung am Trägerfahrzeug.
- Figur 4: mögliche Anordnungen der erfindungsgemäßen Vorrichtung am Trägerfahrzeug.
- Figur 5: mögliche Anordnungen der erfindungsgemäßen Vorrichtung am Trägerfahrzeug.
- Figur 6: vergleichende Darstellung verschiedener Verfahren zur herkömmlichen und erfindungsgemäßen Unkrautbekämpfung.
- Figur 7: eine schematische Querschnittsdarstellung einer als Düse ausgebildeten Auftragseinrichtung.
- Figur 8: eine schematische Darstellung eines Trägerfahrzeugs mit einer Abgasstromleitung.
- Figur 9: eine Ausführungsform einer Auftragseinrichtung der erfindungsgemäßen Vorrichtung.
- Figur 10: eine weitere Ausführungsform einer Auftragseinrichtung der erfindungsgemäßen Vorrichtung.
- Figur 11: eine weitere Ausführungsform einer Auftragseinrichtung der erfindungsgemäßen Vorrichtung.
- Figur 12: eine weitere Ausführungsform einer Auftragseinrichtung der erfindungsgemäßen Vorrichtung.
- Figur 13: eine weitere Ausführungsform einer Auftragseinrichtung der erfindungsgemäßen Vorrichtung.
- Figur 14: eine Ausführungsform einer Applikationseinrichtung der erfindungsgemäßen Vorrichtung.
- Figur 15: eine weitere Ausführungsform einer Applikationseinrichtung der erfindungsgemäßen Vorrichtung.
- Figur 16: eine weitere Ausführungsform einer Applikationseinrichtung der erfindungsgemäßen Vorrichtung.
- Figur 17: eine Anordnung einer Auftragseinrichtung mit einem Messkreislauf zum Steuern der Dosierung.
- Figur 18: Ausführungsformen isolierender Schutzscheiben der erfindungsgemäßen Vorrichtung.
- Figur 19: einen Versuchsplan eines Geländeabschnittes zum Behandeln von Pflanzen durch das erfindungsgemäße Verfahren.
- Figur 20: einen Versuchsfeldausschnitt, in dem das erfindungsgemäße Verfahren durchgeführt wird.
- Figur 21: die Ergebnisse der Behandlung von Getreide mittels des erfindungsgemäßen Verfahrens.
- Figur 22: die Versuchsanordnung zur Behandlung von Kartoffeln mittels des erfindungsgemäßen Verfahrens.
- Figur 23: die Ergebnisse der Behandlung von Kartoffeln mittels des erfindungsgemäßen Verfahrens.
- Figur 24: die Ergebnisse der Behandlung von Kartoffeln mittels des erfindungsgemäßen Verfahrens in Kombination mit einer chemischen Zweitbehandlung.
- Figur 25: die Ergebnisse der Behandlung von Kartoffeln mittels des erfindungsgemäßen Verfahrens, wobei die Behandlung zweimal durchgeführt wurde.
- Figur 26: die Ergebnisse der Behandlung von Kartoffeln mittels des erfindungsgemäßen Verfahrens, wobei vier verschiedene Behandlungsmuster getestet wurden.
- Figur 27: die Versuchsanordnung zur Behandlung von Kartoffeln mittels des erfindungsgemäßen Verfahrens in Kombination mit Krautschlagen.
- Figur 28: die Ergebnisse der Behandlung von Kartoffeln mittels des erfindungsgemäßen Verfahrens im Vergleich zu Krautschlagen.
- Figur 29: die Ergebnisse der Behandlung von Kartoffeln mittels des erfindungsgemäßen Verfahrens im Vergleich zu Krautschlagen, wobei die Behandlung mittels des erfindungsgemäßen Verfahrens zweimal durchgeführt wurde.
- Figur 30: die Ergebnisse der Behandlung von Kartoffeln mittels des erfindungsgemäßen Verfahrens in Kombination mit Krautschlagen.

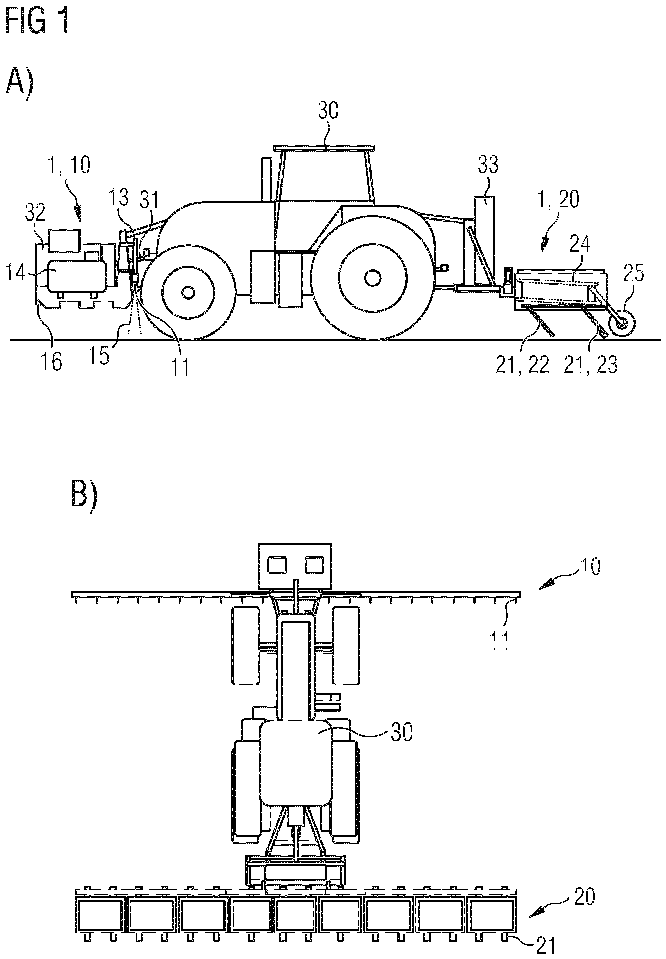

In Fig. 1 ist eine Anordnung der einzelnen Komponenten der erfindungsgemäßen Vorrichtung 1 an einem als Trägerfahrzeug 30 dienenden Traktor dargestellt. Alternativ kann der Traktor z.B. mit einem Anhänger gekoppelt sein, an dem die Vorrichtung 1 angeordnet ist. Die Anordnung und das Trägerfahrzeug 30 können je nach Einsatzmodus und speziellen Anforderungen der betreffenden Feldfrucht und des Behandlungszeitpunktes unterschiedlich sein.

Die Vorrichtung 1 weist ein erstes Modul 10 zum Auftragen eines übergangswiderstandsenkenden Mediums 15 und ein zweites Modul 20 zum Übertragen von elektrischem Strom auf die Pflanzenteile auf. Das übergangswiderstandsenkende Medium 15 ist in diesem Ausführungsbeispiel eine übergangswiderstandsenkende Flüssigkeit; im Folgenden werden hier die Begriffe "übergangswiderstandsenkende Flüssigkeit" und "übergangswiderstandsenkendes Medium" synonym verwendet.

Das erste Modul 10 ist an der Frontseite des Trägerfahrzeugs 30 angeordnet. Das zweite Modul 20 ist an der Rückseite des Trägerfahrzeugs 30 angeordnet. Diese Anordnung ermöglicht im Sinne der Erfindung, dass das Aufbringen des übergangswiderstandsenkenden Mediums 15 immer vor oder gleichzeitig mit der elektrophysikalischen Behandlung stattfinden kann.

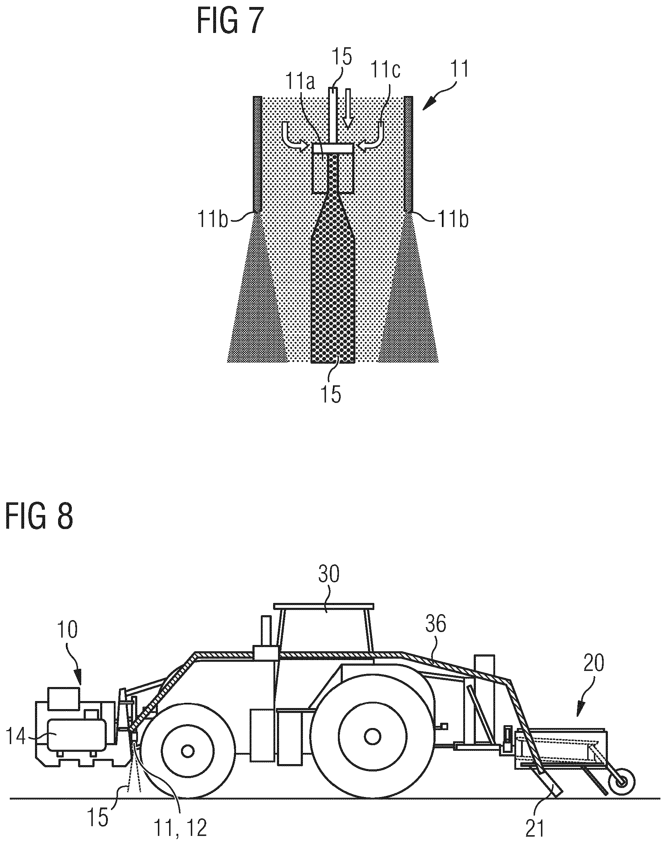

Das erste Modul 10 weist mindestens eine Auftragseinrichtung auf, die als Düse 11 ausgebildet ist. In Kombination mit der Düse 11 kann die Auftragseinrichtung auch einen Abstreifer 12 umfassen (siehe Fig. 8 - 14), oder alternativ als Abstreifer 12 ausgebildet sein. Die Auftragseinrichtung ist damit zum Sprühen und Abstreifen der übergangswiderstandsenkenden Flüssigkeit 15 ausgebildet, oder alternativ auch zum Sprühen oder Abstreifen. Das erste Modul 10 weist dabei eine Anzahl von gemeinsam oder vorzugsweise einzeln steuerbaren Düsen 11 oder Abstreifern 12 auf, die an einer ersten Trägerkonstruktion 13 in einer gewünschten Arbeitsbreite der Vorrichtung 1 (z.B. 1,5 - 48 m, vorzugsweise 6 - 27 m) und Geometrie (statisch oder flexibel gelagert oder in der Höhe sensorgesteuert) angeordnet sind. Die Düsen 11 und/oder Abstreifer 12 werden aus einem oder mehreren Flüssigkeitsbehältern 14 mit übergangswiderstandsenkender Flüssigkeit 15 versorgt. Sensoren 16 sind u.a. im Bereich der Düsen 11 angeordnet (nicht gezeigt), deren Daten bei Bedarf zum Steuern der Flüssigkeitsmenge verwendet werden. Weitere Sensoren 16 können an der Vorderseite des ersten Moduls 10 (d.h. in Fahrtrichtung) zum Zwecke der Arbeitssicherheit angeordnet sein. Als Sensoren werden z.B. Strom/Spannungssensoren, optische Sensoren 161, z.B. Kamerasysteme, Lage- oder Bewegungssensoren 162, LIDAR, Metalldetektoren und andere verwendet, ohne darauf beschränkt zu sein. Auch können voranfliegende Drohnen zum Erfassen der vorausliegenden Pflanzen eingesetzt werden. Weiterhin können Weidezaunapplikatoren zum Abschrecken oder Aufschrecken von Tieren am Trägerfahrzeug 30 oder dem zweiten Modul 20 angeordnet sein.

Der Traktor oder ein vergleichbares Trägerfahrzeug 30 liefert vorzugsweise über eine Zapfwelle 31 oder einen Hydraulikkreislauf die mechanische Antriebsenergie für einen elektrischen Generator 32, der sich im vorderen Bereich (wie gezeigt) oder hinteren Bereich am Trägerfahrzeug 30 befinden kann. Die einzelnen Module der Vorrichtung 1 sind beispielsweise als Anbaugeräte angeordnet, z. B. mit Dreipunktaufhängungen. Sonderkulturen erfordern Sondermaschinen, z.T. schon als Trägerfahrzeug mit speziellen Aufhängungen, ggf. auch seitlich oder unter dem Trägerfahrzeug. Bei Geräten mit sehr hohem Energiebedarf durch z. B. sehr hohe Arbeitsbreiten oder Trägerfahrzeugen ohne ausreichend freie Leistungskapazitäten können auch unabhängige Stromerzeugersysteme eingesetzt werden, die auf dem Trägerfahrzeug angekoppelt, aufgesattelt oder auf einem Anhänger bewegt werden können.

Der elektrische Strom wird vom Generator 32 mit Kabeln zu einer Transformations- und Kontrolleinheit 33 geleitet. Dort wird der Strom für die Transformation konditioniert und dann in zentral oder verteilt positionierten Transformatoren und Steuerungseinheiten auf die gewünschte letztlich genutzte Frequenz, Verlaufsform und Spannung gebracht.

Das zweite Modul 20 weist im gezeigten Beispiel eine Anzahl von Applikatoren 21 auf (Fig. 1B). Die Applikatoren 21 sind in einer ersten Applikatorreihe 22 und einer zweiten Applikatorreihe 23 angeordnet (Fig. 1A). Die Applikatoren 21 sind an einer Parallelogramm-ähnlichen zweiten Trägerkonstruktion 24 angeordnet, welches über ein nachlaufendes Hilfsrad (Stützrad) 25 (in Abhängigkeit von der Kultur kann es auch vorlaufend sein) höhenpositioniert werden kann. Der Strom fließt in dieser Anordnung dann über die ersten, in Fahrtrichtung vorderen Applikatoren 22 in die Pflanze. Die zweiten, hinteren Applikatoren 23 können auf der Pflanze aufliegen bzw. auf dem Boden schleifen oder durch geeignete Vorrichtungen (z. B. Schneidrad) in den Boden eindringen (nicht gezeigt) um z. B. den Widerstand zu verringern.

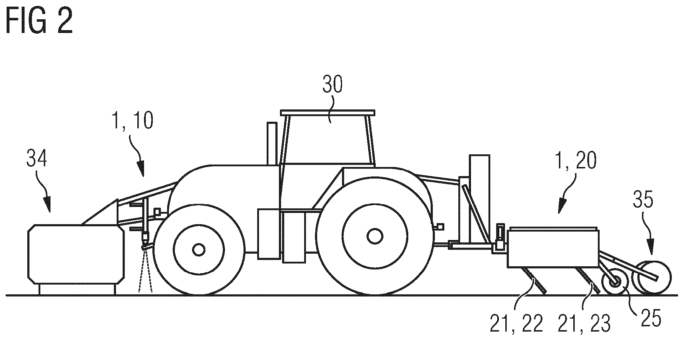

In Fig. 2 ist ein Trägerfahrzeug 30 in Seitenansicht dargestellt, das vor- und nachlaufende Teile der Vorrichtung 1 aufweist. In Fahrtrichtung vor dem ersten Modul 10 ist eine vorlaufende Einrichtung 34 angeordnet. Diese ist z.B. ein Mähwerk oder Mulcher, mit der die Pflanzen auf eine Höhe von 0,1 - 1,5 m, vorzugsweise 0,2 - 0,5 m gemäht oder gemulcht werden, um dann mittels des ersten Moduls 10 mit übergangswiderstandsenkendem Medium 15 appliziert und nachfolgend mittels des zweiten Moduls 20 mit Strom behandelt zu werden. Hinter dem zweiten Modul 20 ist eine nachlaufende Einrichtung 35 angeordnet, in der weitere Arbeitsgeräte z. B. zum Knicken dicker Pflanzen, Mulchen, Mähen, Verfestigen oder Säen angeordnet sein können. Die weiteren Arbeitsgeräte können z.B. fest mit dem Trägerfahrzeug 30 oder dem zweiten Modul 20 verbunden oder auch daran angehängt sein. Der Einsatz von zusätzlichen Einrichtungen wie der vorlaufenden und nachlaufenden Einrichtung 34, 35 ist erfindungsgemäß möglich, da die Zerstörungswirkung im Unterschied zu fast allen chemischen Verfahren sofort im direkten Behandlungszeitraum eintritt und keiner Wirkungszeit mit stehenden Pflanzen bedarf.

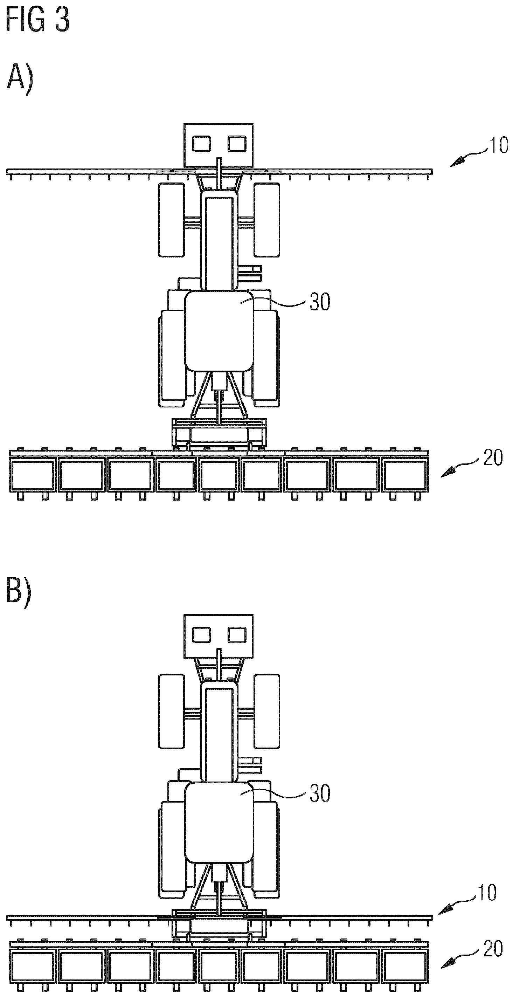

Die Ausführungsbeispiele der Vorrichtung 1 gemäß Fig. 3 ermöglichen ein Behandeln von Pflanzen innerhalb von Sekunden (Fig. 3A) oder Sekundenbruchteilen (Fig. 3B). In Fig. 3A befindet sich das erste Modul 10 an der Frontseite des Trägerfahrzeugs 30. In dieser Ausführungsform vergehen nach dem Auftragen der übergangswiderstandsenkenden Flüssigkeit 15 einige Sekunden, bis das an der Rückseite des Trägerfahrzeugs 30 angeordnete zweite Modul 20 die zu behandelnden Pflanzen erreicht. In Fig. 3B befindet sich das erste Modul 10 fahrzeugseitig zum zweiten Modul 20 an der Rückseite des Trägerfahrzeugs 30. Hier vergehen nach dem Auftragen der übergangswiderstandsenkenden Flüssigkeit 15 nur Sekundenbruchteile, bis das zweite Modul 20 die zu behandelnden Pflanzen erreicht. Die letztere Konfiguration kann bevorzugt eingesetzt werden, wenn die Wirkungsbeschleunigung durch geeignete Stoffe, heiße Medien oder erwärmte Applikatoren für die Widerstandserniedrigung ausreicht.

Die Arbeitsbreite der Vorrichtung 1, d.h. die jeweiligen Arbeitsbreiten des ersten Moduls 10 und des zweiten Moduls 20 betragen in der Regel von 1,5 bis 48 m. Nur in seltenen Fällen betragen sie mehr als 48 m. Vorzugsweise liegen die Arbeitsbreiten in einem Bereich von 6 bis 27 m.

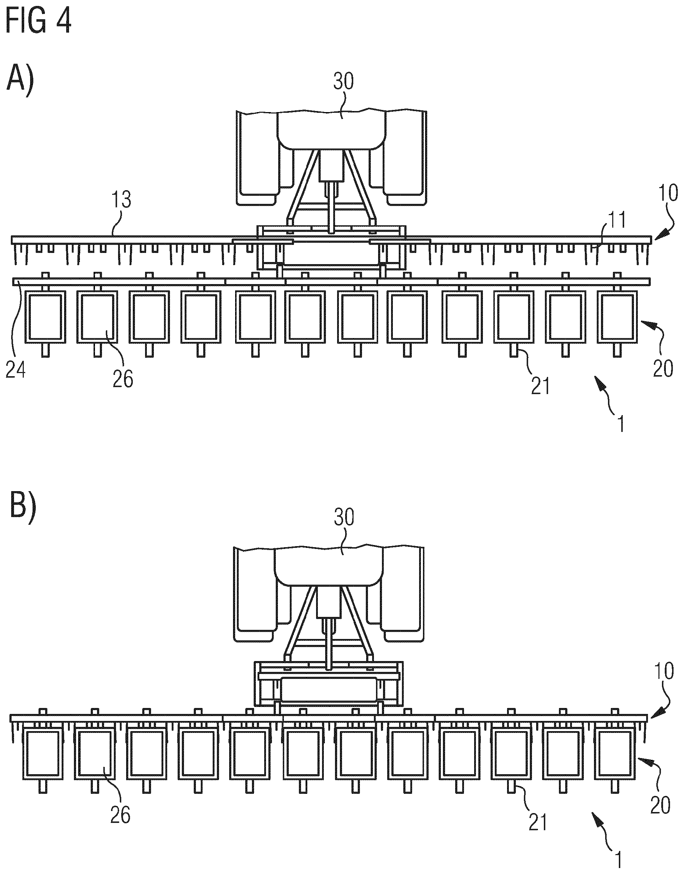

In Fig. 4A sind das erste Modul 10 und das zweite Modul 20 hintereinander an der Rückseite des Trägerfahrzeugs 30 angeordnet in Draufsicht detailliert dargestellt. Fig. 4B unterscheidet sich nur dadurch, dass das erste Modul 10 und das zweite Modul 20 in unmittelbarer räumlicher Nähe zueinander angeordnet sind und die übergangswiderstandsenkende Flüssigkeit 15 unmittelbar vor den Applikatoren 21 aufgesprüht werden kann bzw. die elektrischen Applikatoren 21 direkt von der Düse 11 beaufschlagt werden können. Die Applikatoren 21 sind nebeneinander angeordnet, sodass sie flächendeckend arbeiten können oder wie im Bild dargestellt mit Abstand für Reihenkulturen arbeiten. Für Reihenkulturen ist zur Schonung der Kulturpflanzen auch eine segmentierte Anordnung nötig, die durch Auseinanderrücken der Applikatoren 21 auf der Trägerkonstruktion 24 oder durch Herausheben einzelner Applikatoren 21 hergestellt wird. Mittels Abstreifeinrichtungen 12 oder Blatthebern können Kulturpflanzen bedingt durch ihre reguläre Position sehr eng behandelt werden. Die Abstreifeinrichtungen 12 sind an den Seitenflächen isolierend ausgeführt, an den Kanten, wo sie den Boden berühren, jedoch üblicherweise leitfähig, damit heruntergedrückte Nutzpflanzenblätter, die von Applikatoren 21 berührt werden können, sicher geerdet sind und keinen Strom in die Nutzpflanze weiterleiten. Die einzelnen Applikatoren 21 verfügen über Sicherheitsabdeckungen 26 und ggf. weitere Abstandshalter nach außen zur Einstellung von Sicherheitsabständen.

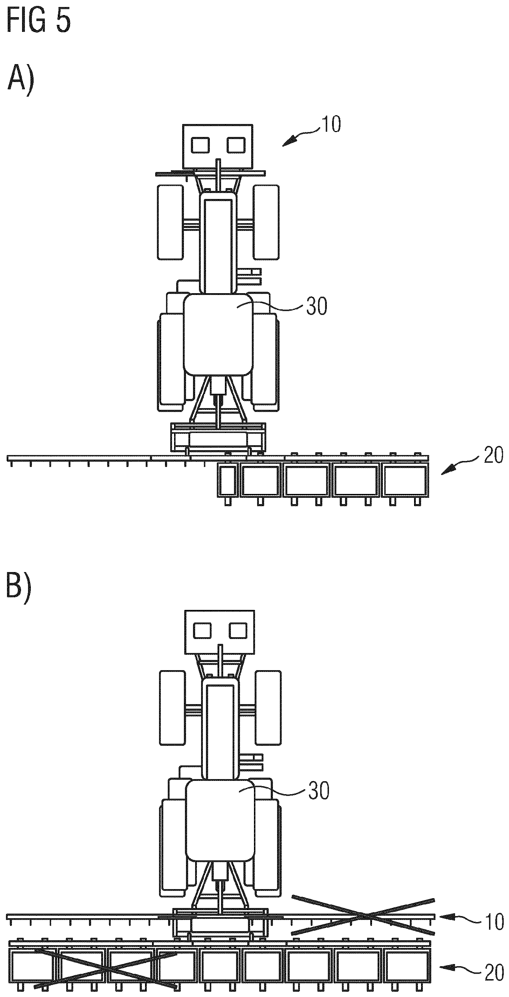

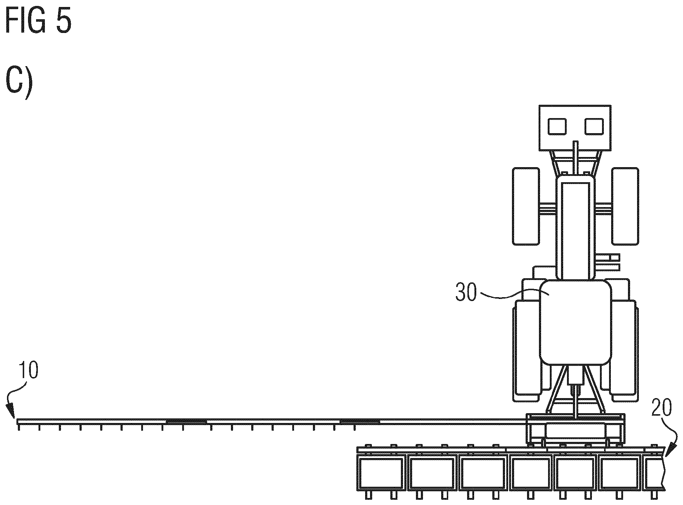

In Fig. 5 sind Anordnungsmöglichkeiten des ersten Moduls 10 und des zweiten Moduls 20 dargestellt. Die Ausführungsbeispiele beziehen sich auf eine Vorrichtung 1 zum Auftragen eines übergangswiderstandsenkenden Mediums 15 und einer elektrophysikalischen Behandlung im Minutenabstand. Von der möglichen Gesamtarbeitsbreite der Vorrichtung 1 wird eine Hälfte nur für das Verteilen des Mediums 15 mittels des ersten Moduls 10 aktiv genutzt, während auf der anderen Hälfte das zweite Modul 20 auf der bei der vorangegangenen Überfahrt schon chemisch behandelten Fläche elektrischen Strom appliziert. In der Ausführungsform gemäß Fig. 5A sind das erste Modul 10 und das zweite Modul 20 nur jeweils halb bestückt. In der Ausführungsform gemäß Fig. 5B sind das erste Modul 10 und das zweite Modul 20 jeweils doppelt bestückt, aber nur halb in Betrieb und können frei gewechselt werden (Fig. 5B). In der Ausführungsform gemäß Fig. 5C ist das erste Modul 10 separat verfahrbar oder ausschwenkbar doppelt vorhanden und kann deshalb flexibel rechts, links oder gleichzeitig eingesetzt werden.

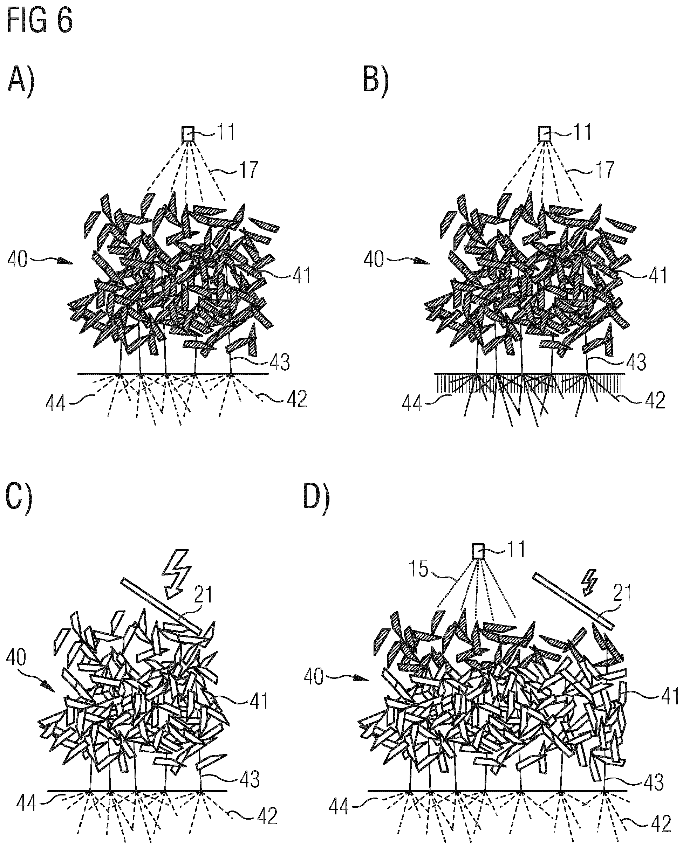

In Fig. 6 werden verschiedene herbizide Methoden von Pflanzenbehandlungen verglichen. In einem herkömmlichen Verfahren gemäß Fig. 6A werden systemische nichtselektive Herbizide 17 hauptsächlich mittels Düsen 11 von oben auf die Pflanzen 40 aufgebracht und verteilen sich durch den Saftstrom über alle Blätter 41 (Schraffur) bis in die Wurzeln 42, welche dann auch zerstört werden (Strichelung). Ein Großteil dieser Stoffe ist mittlerweile verboten oder wird es wahrscheinlich in der Zukunft. Ihre Hauptwirkung ist die Unterbrechung oder Veränderung von chemischen Stoffwechselwegen in der Pflanze, die dann zu deren Absterben bis in die Wurzeln hinein führt.

In einem herkömmlichen Verfahren gemäß Fig. 6B werden nichtselektive Kontaktherbizide 17 möglichst vollflächig durch Sprühen auf die Blätter 41 und Stiele 43 aufgetragen (Schraffur), was große Wirkstoff- und Wassermengen erfordert und auch die direkte Benetzung des Bodens 44 erhöht. Die Wirkung erfolgt trotzdem nur auf die Blätter 41 und Stiele 43 (Schraffur). Wurzelunkräuter werden schlecht bekämpft, da die Wurzeln 42 nicht direkt abgetötet werden (durchgezogene, nicht gestrichelte Linien). Die Wirkung von Kontaktherbiziden ist in einigen Fällen schon fast als physikalisch anzusehen, wenn sie in der Hauptsache dazu führt, dass die Wachsschicht als Verdunstungsbarriere geschädigt wird.

In einem herkömmlichen Verfahren gemäß Fig. 6C werden elektrophysikalische Methoden angewendet, wobei elektrischer Strom von oben an die Pflanzen 40 angelegt wird, der diese bis in die Wurzel 42 schädigen kann. Der Hauptwirkungsmechanismus ist die Zerstörung von wasserleitenden Gefäßen in den Stängeln (Stielen) 43 und Wurzeln 42, was dann zum Vertrocknen bis in die Wurzeln 42 hinein führt. Dabei werden aber zur Überwindung der Widerstandsbarriere zwischen Blatt 41 und Applikator 21 viel Energie und hohe Spannungen benötigt. Der elektrische Applikator 21 muss die Blätter 41 nur im oberen Bereich der Pflanze 40 berühren, um den Strom durch Blatt 41 und Stängel (Stiele) 43 bis in die Wurzeln 42 zu leiten und abzutöten.

In der Ausführungsform des erfindungsgemäßen Verfahrens gemäß Fig. 6D wird durch die Kombination von widerstandsenkender Flüssigkeit 15 und elektrophysikalischer Behandlung eine synergistische Wirkung erzielt. Die übergangswiderstandsenkende, nur auf der obersten Blattebene aufgetragene Flüssigkeit verringert den Widerstand an der Übergangsfläche von Applikator 21 zum Blatt 41 und verringert dadurch die benötigte Spannung und elektrische Leistung. Damit wird die Pflanze 40 systemisch bis in die Wurzel 42 zerstört. In vielen Fällen ist es möglich, auf Substanzen, die dem Pflanzenschutzmittelgesetz unterliegen bzw. im biologischen Bereich nicht zugelassen sind, komplett zu verzichten.

In Fig. 7 ist eine Ausführungsform einer Düse 11 gezeigt (Querschnittsdarstellung). Die Düse 11 ist hier als Mantel- oder Flächenstromdüse für den Auftrag von heißem Öl 15 ausgebildet. Das heiße Öl 15 ist in diesem Ausführungsbeispiel das übergangswiderstandsenkende Medium. Damit der heiße wässrige oder ölige Sprühstrahl 15, insbesondere der heiße Ölnebel 15 auch bei Winddrift zielgerichtet auf den Pflanzen ankommt und nur möglichst wenig abkühlt, ist es sinnvoll, für die Sprühdüse 11a selbst angesaugte Gase 11c und für die Mantel- oder Flächendüsen 11b (Luftklingen) heiße Abgase oder speziell erhitzte elektrische Luft zu nutzen.

Zum Erwärmen der übergangswiderstandsenkenden Flüssigkeit 15, ggf. auch der Sprühluft, der Auftragseinrichtung 11, 12 und/oder der Applikatoren 21 können gemäß der Darstellung von Fig. 8 Abgasströme des Trägerfahrzeugs 30 genutzt werden. Dabei wird gemäß Fig. 8 Abgas aus dem Abgasstrom zu der Auftragseinrichtung (Düse 11, Abstreifer 12) und der Applikationseinrichtung 21 geleitet. Das Abgas wird dazu mit heißluftfähigen Ventilatoren unter Druck gesetzt (10-300 mbar) und in isolierten Rohren (Abgasleitungsrohren) 36 zu den Nutzungsstellen geleitet. Alternativ oder zusätzlich zum Nutzen von Abgaswärme sind z.B. auch elektrische Heizeinrichtungen verwendbar.

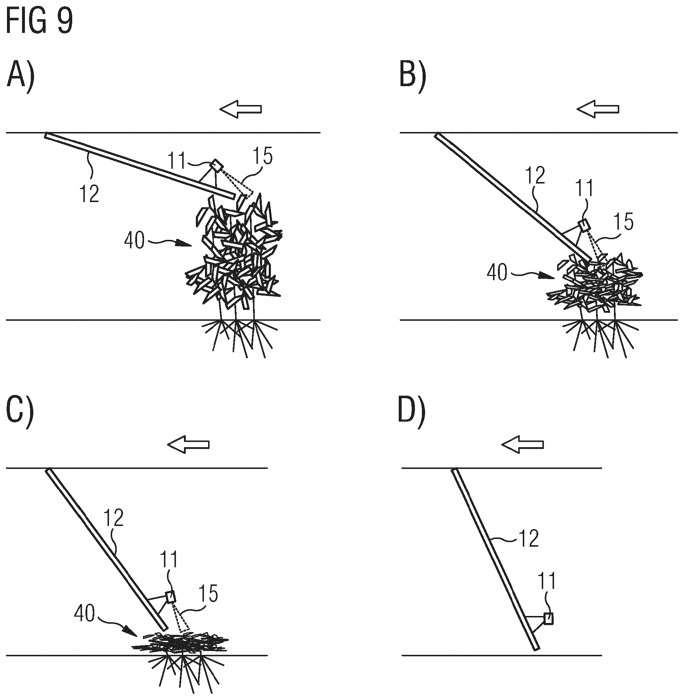

**In** Fig. 9 ist ein Ausführungsbeispiel für eine Auftragseinrichtung zum gezielten Aufsprühen von übergangswiderstandsenkenden Flüssigkeiten 15 direkt auf eine Pflanze 40 gezeigt. Die Flüssigkeit 15 wird durch eine oder mehrere, nebeneinander angeordnete Düsen 11 großtropfig und möglichst nur auf die oberste Blattebene aufgesprüht. Durch kurze Sprühwege kann die Temperatur in der Sprühlösung (Sprühflüssigkeit) besser gehalten werden. Die Düsen 11 sind an leichten, auf den Pflanzen aufliegenden Abstreifern 12 angeordnet, die flexibel (z.B. über ein Gelenk oder elastisch) an der Trägerkonstruktion 13 aufgehängt sind. Die Düsenorientierung auf den Abstreifern 12 ist starr schräg nach unten gerichtet. Die flexible Anordnung der Abstreifer 12 an der Trägerkonstruktion 13 ermöglicht ein Anpassen der Höhe der Auftragseinrichtung 11, 12 an die Wuchshöhe der Pflanzen 40 (Fig. 9A: hohe Wuchshöhe, Fig. 9B: mittlere Wuchshöhe, Fig. 9C: kleine Wuchshöhe, Fig. 9D: keine Pflanzen). Der Pfeil zeigt die Bewegungsrichtung der Vorrichtung 1.

Beispielhafte Parameter der Düsen 11 und der Abstreifer 12 gemäß der Anordnung von Fig. 9 sind in Tabelle 5 dargelegt.

**Tabelle 5**

| Technische Parameter | Nebenparameter | allgemein | bevorzugt | insbesondere |
|---|---|---|---|---|
| Abstreiferlänge | Länge generell 20 - 50 % größer als Abstand vom Boden | 24-200 cm | 35 -150 cm | 60- 120 cm |
| Abstand Geräterahmen - Boden | | 20 -150 cm | 30-100 cm | 50-80 cm |
| Abstreiferbreite | Je inhomogener und kleiner die Pflanzen, desto schmaler | 10 cm-100 cm | 10 cm -50 cm | 10 cm - 20 cm |

| Abstreifermaterial | | Kunststoff | GFK/POM | GFK POM |
|---|---|---|---|---|
| Auflagedruck am unteren Ende des Abstreifers | Niedrige Werte bei Gräsern | 0,1 -30 kg/m | 0,3-15 kg/m | 0,5-5 kg/m |
| | Hohe Werte bei verholzten Pflanzen >50 cm | | | |
| Abstand der Düsen seitlich | Korreliert mit Flussrate und Öffnungswinkel, Abstreiferbreite | 10 cm - 100 cm | 10 cm -50 cm | 10 cm - 20 cm |
| Düsenöffnungswinkel | | 10 - 130° | 20°-80° | 20°-50° |
| Düsenbeheizung | Optional | Strom/Abgas | Abgas | Abgas |
| Düsentemperatur | wässrig/ölbasiert | 1-99 °C/1-300 °C | 5-90 °C/10-280 °C | 5-80 °C/5-250 °C |
| Düsenmaterial | wässrige Medien | Kunststoff | Kunststoff | Kunststoff |
| | organisch basierte Medien (besonders über 90°C) | Kunststoff/ Metall | Metall | Metall |
| Flussrate der Düse | Wird an Fahrgeschwindigkeit angepasst durch Druckänderung | 0,05 l/min-0,5 l/min | 0,05 l/min-0,5 l/min | 0,05 l/min-0,5 l/min |
| Druckbereich Auftragsmenge | Passt Flussrate an bei vollständig bewachsener Fläche | 0,1-5 bar 5-1000 L/ha | 0,5-2,5 bar 10-200 l/ha | 1 bar -2 bar 15-50 l/ha |
| Tropfengröße | nach ISO 25358 | F, M, G,-SG, EG | M, G,-SG, - | G,-SG, |
| Abstand Pflanzen-Düsen | | 10-100 cm | 10-50 cm | 10-20 cm |
| Düsenorientierung relativ zu Abstreifer | Abweichung von Parallelausrichtung | 5°-70° | 10°-45 ° | 10-30° |

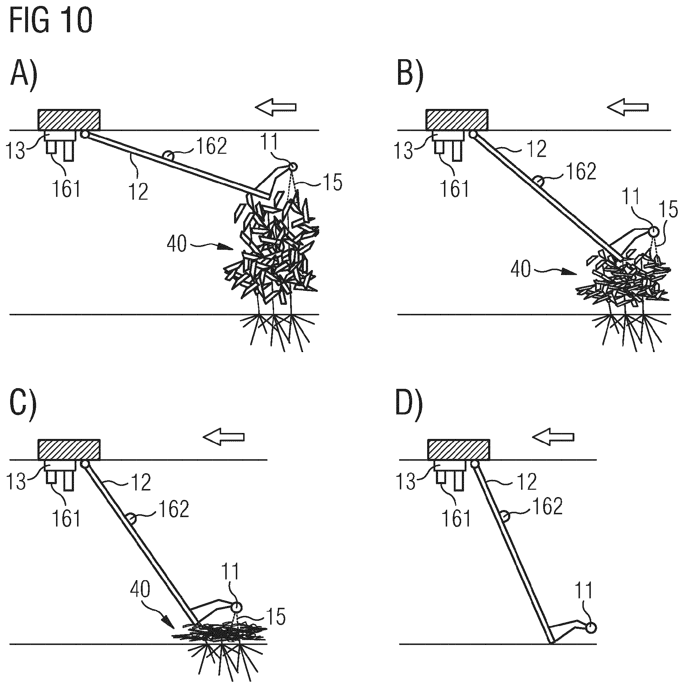

In Fig. 10 ist ein weiteres Ausführungsbeispiel für eine Auftragseinrichtung 11, 12 zum gezielten Aufsprühen von übergangswiderstandsenkenden Flüssigkeiten 15 direkt auf Pflanzen 40 dargestellt. Im Unterschied zu der Ausführungsform von Fig. 9 ist die Düsenorientierung hier dynamisch und richtet sich schwerkraftgesteuert durch eine kardanische Aufhängung und Beschwerung am unteren Ende immer nach unten, wodurch ein Auftrag immer von oben genau auf die Bereiche erreicht wird, die auch von den elektrischen Applikatoren 21 erreicht werden. Das An- und Abschalten des Sprühens bzw. die Flussrate des Mediums 15 kann durch fest am Rahmen montierte optische Sensoren 161 (z.B. zur Bilderkennung oder Fluoreszenzanalyse mit aktiver Beleuchtung) und/oder mit einem lage- und entfernungsabgängigen Sensor 162 am Abstreifer 12, dessen Einstellung der Pflanzengröße entspricht, gesteuert werden (z.B. durch Anheben der Abstreifer 12, d. h. eine Winkeländerung bedeutet: Pflanzen unter Abstreifer, oder durch Entfernungsmessung zum Rahmen durch Metalldetektor). Die flexible Anordnung der Abstreifer 12 an der ersten Trägerkonstruktion 13 und die dynamische Düsenorientierung ermöglicht ein Anpassen der Höhe der Auftragseinrichtung 11, 12 an die Wuchshöhe der Pflanzen 40 (Fig. 10A: hohe Wuchshöhe, Fig. 10B: mittlere Wuchshöhe, Fig. 10C: kleine Wuchshöhe, Fig. 10D: keine Pflanzen). Der Pfeil zeigt die Bewegungsrichtung der Vorrichtung 1.

Beispielhafte Parameter der Düsen 11 und der Abstreifer 12 gemäß der Anordnung von Fig. 10 sind in Tabelle 6 dargelegt.

**Tabelle 6**

| Technische Parameter | Nebenparameter | allgemein | bevorzugt | insbesondere |
|---|---|---|---|---|
| Abstreiferlänge | Länge generell 20 -50 % größer als Abstand vom Boden | 24-200 cm | 35 -150 cm | 60- 120 cm |
| Abstand Geräterahmen - Boden | | 20 -150 cm0 | 30-100 cm | 50-80 cm |
| Abstreiferbreite | Je inhomogener und kleiner die Pflanzen, desto schmaler | 10 cm-100 cm | 10 cm -50 cm | 10 cm - 20 cm |
| Abstreifermaterial | | Kunststoff/Metall | GFK/POM/PU/Metall | GFK/POM/PU/ Edelstahl |
| Auflagedruck am unteren Ende des Abstreifers | Niedrige Werte bei Gräsern Hohe Werte bei verholzten Pflanzen >50 cm | 0,1 -30 kg/m | 0,3-15 kg/m | 0,5-5 kg/m |
| Abstand der Düsen seitlich | Korreliert mit Flussrate und Öffnungswinkel, Abstreiferbreite | 10 cm - 100 cm | 10 cm -50 cm | 10 cm - 30 cm |
| Düsenöffnungswinkel | | 10 - 130° | 20°-80° | 20°-50° |
| Düsenbeheizung | Optional | Strom/Abgas | Abgas | Abgas |
| Düsentemperatur | wässrig/ölbasiert | 1-99 °C/1-300 °C | 5-90 °C/10-280 °C | 5-80 °C/5-250 °C |
| Düsenmaterial | wässrige Medien | Kunststoff | Kunststoff | Kunststoff |
| | organisch basierte Medien (über 90°C) | Kunststoff/ Metall | Metall | Metall |
| Flussrate der Düse | Wird an Fahrgeschwindigkeit angepasst durch Druckänderung | 0,05 l/min-0,5 l/min | 0,05 l/min-0,5 l/min | 0,05 l/min-0,5 l/min |
| Druckbereich | passt Flussrate an | 0,1-5 bar | 0,5-2,5 bar | 1 bar -2 bar |
| Auftragsmenge | bei vollständig bewachsener Fläche | 5-1000 L/ha | 10-200 l/ha | 15-50 I/ha |
| Tropfengröße | nach ISO 25358 | F, M, G,-SG, EG | M, G,-SG, - | G,-SG, |
| Abstand Pflanzen-Düsen | | 10-100 cm | 10-50 cm | 10-20 cm |

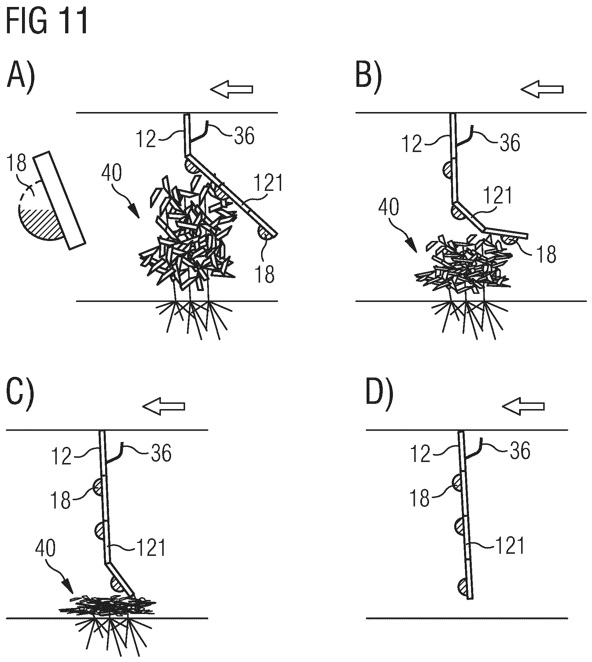

In Fig. 11 ist ein weiteres Ausführungsbeispiel für eine Auftragseinrichtung 11, 12 zum gezielten Aufsprühen von übergangswiderstandsenkenden Flüssigkeiten 15 direkt auf Pflanzen 40 dargestellt, bei der die übergangswiderstandsenkende Flüssigkeit 15 erwärmt wird. Ein Erwärmen erfolgt bevorzugt und aus Isolationsgründen mit heißen Abgasen, die dem Abstreifer 12 (der z.B. Kunststoffplatten mit Scharnieren aus flexiblem Material (Gummi, Polyurethan (PU)) aufweist oder komplett aus flexiblem Material, z. B. PU, oder für hohe Temperaturen aus Edelstahl bereitgestellt wird), über eine Leitung (Abgasleitungsrohr) 36 zugeführt werden. Durch die Leitung 36 können aber auch Isolieröle zur Erwärmung geleitet werden. Alternativ können die Abstreifer 12 auch mit elektrischem Strom erwärmt werden. Die Abstreifer 12 haben eine ähnliche Grundgeometrie wie die elektrischen Applikatoren 21. Sie können zusätzlich über Aufsätze, ggf. kombiniert mit Rillen und Durchlässen, verfügen, die einen kapillaren oder druckgeförderten freien oder gesteuerten Medientransport erlauben. Auf oder in den starren oder flexiblen Abstreifern sind einzelne Dosierelemente 18 so befestigt, dass große Pflanzen immer mit mehr übergangswiderstandsenkendem Medium 15 versorgt werden als kleinere. Die Dosierung kann mittels Sensoren (z.B. mittels Strom/Spannungssensoren, optischen Sensoren 161, Lage- oder Bewegungssensoren 162) oder z. B. durch das Durchleiten von geringen Probeströmen durch Segmente 121 des Abstreifers 12 gesteuert werden. Bei allen nichtoptischen Messungen an den Applikatoren 21 kommen bevorzugt RFID-basierte Sensoren zum Einsatz, um Kabel etc. zu sparen und aufwändige Hochspannungsisolationen zu vermeiden. Vorzugsweise werden auch auslenkungsgesteuerte Abstreifer 12 eingesetzt: Je stärker der Abstreifer 12 ausgelenkt ist, desto mehr übergangswiderstandsenkende Flüssigkeit 15 kann aus dem Versorgungsrohr bedingt durch die Perforierung oder die Verschiebung der Abdeckung austreten. Die flexible Anordnung der Abstreifer 12 an der Trägerkonstruktion 13 und die segmentierte Ausbildung der Abstreifer 12 ermöglicht ein Anpassen der Höhe der Auftragseinrichtung 11, 12 an die Wuchshöhe der Pflanzen 40 (Fig. 11A: hohe Wuchshöhe, Fig. 11B: mittlere Wuchshöhe, Fig. 11C: kleine Wuchshöhe, Fig. 11D: keine Pflanzen). Der Pfeil zeigt die Bewegungsrichtung der Vorrichtung 1.

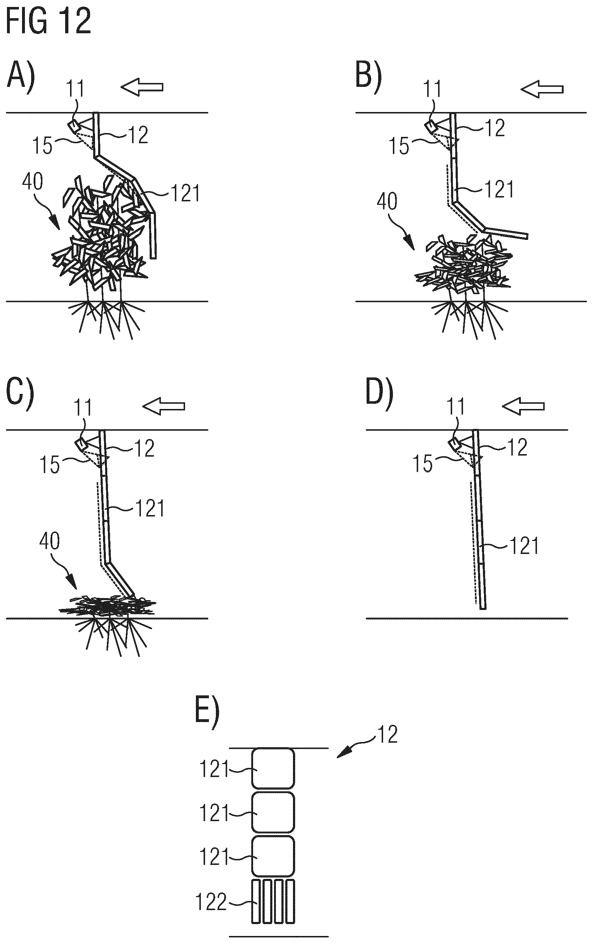

**In** Fig. 12 ist ein weiteres Ausführungsbeispiel für eine Auftragseinrichtung 11, 12 zum gezielten Aufsprühen von übergangswiderstandsenkenden Medien 15 direkt auf Pflanzen 40 dargestellt, bei der das übergangswiderstandsenkende Medium 15 auf die Abstreifer 12 aufgesprüht wird. Die Abstreifer 12 streifen das übergangswiderstandsenkende Medium 15 dann genau dort ab, wo die elektrischen Applikatoren 21 die Pflanzen 40 berühren sollen. Die Abstreifer 12 können erwärmt werden, wobei das Erwärmen bevorzugt und aus Isolationsgründen mit heißen Abgasen erfolgt, aber auch mit Isolierölen erfolgen kann. Die angesprühten Abstreifer 12 haben eine ähnliche Grundgeometrie wie die elektrischen Applikatoren 21. Sie verfügen über Rillen und Durchlässe, die ein Besprühen von vorne oder hinten erlauben. Ansonsten weisen sie ein Material auf wie für die Ausführungsform gemäß Fig. 11 beschrieben. Die segmentierte Ausbildung der Abstreifer 12 ermöglicht ein Anpassen der Höhe der Abstreifer 12 an die Wuchshöhe der Pflanzen 40 (Fig. 12A: hohe Wuchshöhe, Fig. 12B: mittlere Wuchshöhe, Fig. 12C: kleine Wuchshöhe, Fig. 12D: keine Pflanzen). Die Sprühintensität kann durch Auslenkung der Applikatoren, optische Sensoren 161 oder z. B. durch das Durchleiten von geringen Probeströmen an noch weiter unterteilten Abstreifersegmenten, hier als Längssegmente 122 bezeichnet (Fig. 12E) gesteuert werden. Bei allen nichtoptischen Messungen an den Applikatoren 21 kommen bevorzugt RFID-basierte Technologien zum Einsatz, um Kabel etc. zu sparen und aufwändige Hochspannungsisolationen zu vermeiden. Der Pfeil zeigt die Bewegungsrichtung der Vorrichtung 1.

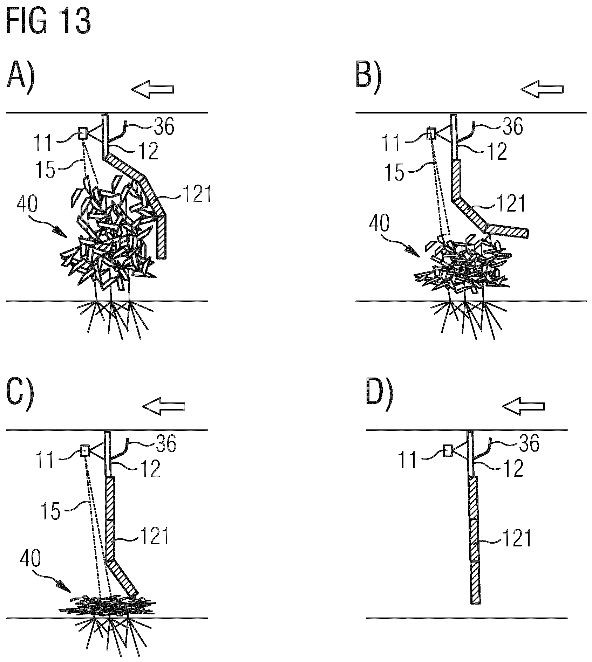

In Fig. 13 ist ein weiteres Ausführungsbeispiel für eine Auftragseinrichtung 11 gezeigt, bei dem die Düse 11 auf dem obersten Segment 121 des Abstreifers 12 angeordnet ist. Der Abstreifer 12 ist durch seine den elektrischen Applikatoren 21 ähnliche Form dazu vorgesehen, dass das mittels der Düse 11 aufgesprühte übergangswiderstandsenkende Medium sparsam genau auf den Pflanzenteilen abgestreift wird, die später auch von den elektrischen Applikatoren 21 berührt werden. Die segmentierte Ausbildung der Abstreifer 12 ermöglicht ein automatisches Anpassen der Höhe der Auftragseinrichtung 11, 12 an die Wuchshöhe der Pflanzen 40 (Fig. 13A: hohe Wuchshöhe, Fig. 13B: mittlere Wuchshöhe, Fig. 13C: kleine Wuchshöhe, Fig. 13D: keine Pflanzen), insbesondere an deren äußere Kontur.

Alternativ oder zusätzlich zum beheizten Sprühmedium kann auch die Abstreiferfläche beheizt werden (nicht gezeigt). Der Abstreifer 12 besteht an der Nutzungsseite aus elektrisch und thermisch nicht isoliertem Metall. Die Abgase werden über ein Rohr 36 vorzugsweise im hohlen Abstreifer nach unten geleitet und erwärmen die elektrisch und thermisch leitende Abstreifersohle vorzugsweise im Gegenstromprinzip (Gasströmung gegen die Bewegungsrichtung). Bedingt durch die Abkühlung der Abgase beim Aufsteigen in Richtung Gasauslass am oberen Ende des Abstreifers 12 durch Wärmeübergang, werden die Pflanzen 40 zuerst mit dem relativ kälteren oberen Abstreiferteil kontaktiert und streifen dann in die immer heißere Abstreiferzone nach unten. Dadurch kann der Energieübergang optimiert und der Energieverbrauch durch möglichst gleichbleibende Temperaturdifferenzen zwischen Abstreiferoberfläche und Pflanzenoberfläche minimiert werden. Die Rückseite aller Abstreiferflächen ist thermisch und elektrisch isoliert (z. B. hitzefester Kunststoffschaum (z. B. Bakelitschaum)), um Energieverluste und Funkenbildung zu minimieren.

In Tabelle 7 sind Parameter der Auftragseinrichtungen 11, 12 mit mehreren Segmente 121 aufweisenden Abstreifern 12 zusammengefasst.

| Technische Parameter | Nebenparameter | allgemein | bevorzugt | insbesondere |
|---|---|---|---|---|
| Abstreiferlänge | Länge generell 20 - 50 % größer als Abstand vom Boden | 24-200 cm | 35 -150 cm | 60- 120 cm |
| Abstand Geräterahmen - Boden | | 20 -150 cm0 | 30-100 cm | 50-80 cm |
| Abstreiferbreite | Je inhomogener und kleiner die Pflanzen, desto schmaler | 10 cm-100 cm | 10 cm -50 cm | 10 cm - 20 cm |
| Anzahl (bei Einzugliedern) und Länge der Abstreiferglieder | Als Teile der Gesamtlänge, können unsymmetrisch sein | 2-6/ 12-100 cm | 2-5, 15-80 cm | 2-4/ 30-70 cm |
| Abstreifermaterial | Für Temperaturen über 90°C immer GFK oder Nylon oder PU, für Temperaturen über 200°C Edelstahl mit hitzefester Isolation (z. B. Bakelitschaum) | Kunststoff Rückseite isoliert, geschäumter Kunststoff, Edelstahl | GFK/POM Rückseite isoliert, geschäumter Kunststoff, Edelstahl | GFK POM Rückseite isoliert, geschäumter Kunststoff, Edelstahl |
| Auflagedruck am unteren Ende des Abstreifers | Niedrige Werte bei Gräsern Hohe Werte bei verholzten Pflanzen >50 cm | 0,1 -30 kg/m | 0,3-15 kg/m | 0,5-5 kg/m |
| Abstand der Düsen seitlich | Korreliert mit Flussrate und Öffnungswinkel, Abstreiferbreite | 10 cm - 100 cm | 10 cm -50 cm | 10 cm - 30 cm |
| Düsenöffnungswinkel | | 10 - 130° | 20°-80° | 20°-50° |
| Düsenbeheizung/ Abstreiferheizung | Optional | Strom/Abgas | Abgas | Abgas |
| Düsentemperatur Abstreifertemperatur | wässrig/ölbasiert | 1-99 °C/1-300 °C | 5-90 °C/10-280 °C | 5-80 °C/5-250 °C |
| Düsenmaterial | wässrige Medien | Kunststoff | Kunststoff | Kunststoff |
| | organisch basierte Medien (über 90°C) | Kunststoff/ Metall | Metall | Metall |
| Flussrate der Düse | Wird an Fahrgeschwindigkeit angepasst durch Druckänderung | 0,05 l/min-0,5 l/min | 0,05 l/min-0,5 l/min | 0,05 I/min-0,5 I/min |
| Druckbereich | passt Flussrate an | 0,1-5 bar | 0,5-2,5 bar | 1 bar -2 bar |
| Auftragsmenge | bei vollständig bewachsener Fläche | 5-1000 L/ha | 10-200 I/ha | 15-50 I/ha |
| Tropfengröße | nach ISO 25358 | F, M, G,-SG, EG | M, G,-SG, - | G,-SG, |
| Abstand Düsen Abstreifer | | 10-50 cm | 10-30 cm | 10-20 cm |

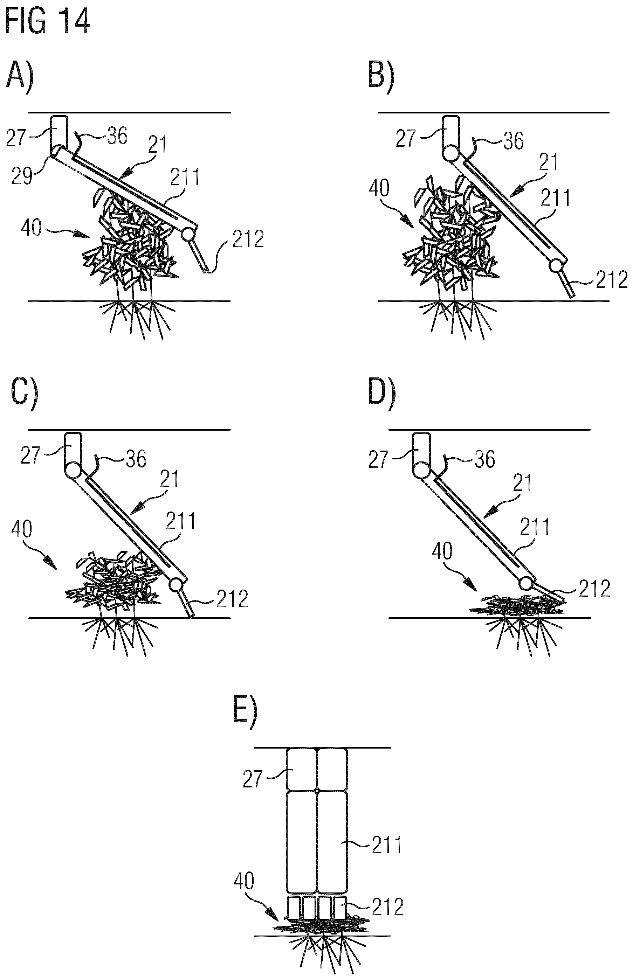

In Fig. 14 ist eine Ausführungsform eines Applikators 21 eines zweiten Moduls 20 gezeigt, über den elektrischer Strom auf die Pflanzen 40 übertragen wird. Die Applikatoren 21 weisen ein elektrisches Material auf, z.B. Metall, und können auch vollständig aus einem oder mehreren Metallen oder -legierungen bestehen. Die Applikatoren 21 sind in einem schrägen Winkel, vorzugsweise 45°, vor allem aber abhängig von den betreffenden Pflanzen 40 mittels einer Halterung 27 mit unterem Anschlag (Gelenk oder flexibler Kunststoff oder flexibles Metall) an der zweiten Trägerkonstruktion 24 befestigt. Die Ausbildung des elektrischen Applikators 21 in Segmente 211 ermöglicht ein Anpassen der Höhe der Applikationseinrichtung 11, 12 an die Wuchshöhe der Pflanzen 40 (Fig. 14A: hohe Wuchshöhe, Fig. 14B: mittlere Wuchshöhe, Fig. 14C: kleine Wuchshöhe, Fig. 14D: keine Pflanzen). Am unteren Ende des Applikators befindet sich ein leicht bewegliches Kontaktsegment 212 mit idealerweise isoliertem Ende zur Funkenvermeidung, wobei die Höhe des Kontaktsegments 212 z.B. über eine Scharnierverbindung zu dem nach nächsten Segment 211 eingestellt wird oder er flexibel auf dem Boden aufliegt, oder ihm definiert nahekommt. Ein Applikator 21 kann mehrere parallel angeordnete Kontaktsegmente 212 aufweisen (Fig. 14E).

Sehr kleine Pflanzen 40 (vorzugsweise < 5 cm Höhe) werden nur vom nicht aktiv erwärmten Applikator 21 berührt und mit Strom durchflossen. Bevorzugt werden Ausführungsformen, bei denen flexiblen Kontaktsegmente 212 thermisch leitend mit dem erwärmten Applikator 21 verbunden sind und so auch noch etwas erwärmt werden. Hierbei sind das aufgetragene übergangswiderstandsenkende Medium 15 und der Strom ausreichend effektiv. Für größere Pflanzen 40 (vorzugsweise > 5 cm Höhe) ist vorgesehen, am beheizten Applikator 21 entlang zu streifen. Je größer die Pflanzen 40 sind, desto länger sind die Kontaktzeit an der schrägen Fläche des Applikators 21 und der dabei entstehende Anpressdruck. Nur sehr große und starre Pflanzen (vorzugsweise höher als ca. 60 % des Abstandes Boden zum Applikatorende/Scharnier 29) können den erwärmten Applikator 21 auch aus Sicherheitsgründen anheben. Der Applikator 21 weist an der die Pflanzen 40 kontaktierenden Seite ein elektrisch und thermisch nicht isoliertes metallisches Material auf. Zum Erwärmen des Applikators 21 werden Abgase über ein Rohr 36 in den hohlen Applikator 21 nach unten geleitet und erwärmen die elektrisch und thermisch leitende Applikatorsohle vorzugsweise im Gegenstromprinzip (Gasströmung gegen die Bewegungsrichtung). Bedingt durch die Abkühlung der Abgase in Richtung eines Gasauslasses am oberen Ende des Applikators 21 werden die Pflanzen zuerst mit dem relativ kälteren oberen Applikatorteil kontaktiert und streifen dann in die immer heißere Applikatorzone nach unten. Dadurch kann der Energieübergang optimiert und der Energieverbrauch durch möglichst gleichbleibende Temperaturdifferenzen zwischen Applikatoroberfläche und Pflanzenoberfläche minimiert werden. Die Rückseite aller Applikatorflächen ist thermisch und elektrisch isoliert (z. B. mittels hitzefestem Kunststoffschaum, wie z.B. Bakelitschaum), um Energieverluste und Funkenbildung zu minimieren.

In Tabelle 8 sind Parameter der Auftragseinrichtungen zusammengefasst.

**Tabelle 8**

| Technische Parameter | Nebenparameter | allgemein | bevorzugt | insbesondere |
|---|---|---|---|---|
| Abstreiferlänge | Länge generell 20 -50 % größer als Abstand vom Boden | 24-200 cm | 35 -150 cm | 60- 120 cm |
| Abstand Geräterahmen - Boden | | 20 -150 cm | 30-100 cm | 50-80 cm |
| Abstreiferbreite | Je inhomogener und kleiner die Pflanzen, desto schmaler | 10 cm-100 cm | 10 cm -50 cm | 10 cm - 20 cm |
| Anzahl (bei Einzugliedern) und Länge der Abstreifer-glieder | Als Teile der Gesamtlänge, können unsymmetrisch sein | 2-6/ 12-100 cm | 2-5, 15-80 cm | 2-4/ 30-70 cm |
| Abstreifer-material | Für Temperaturen über 90°C immer GFK oder Nylon oder PU, für Temperaturen über 200°C Edelstahl mit hitzefester Isolation (z. B. Bakelitschaum) | Kunststoff Rückseite isoliert, geschäumter Kunststoff, Edelstahl | GFK/POM Rückseite isoliert, geschäumter Kunststoff, Edelstahl | GFK POM Rückseite isoliert, geschäumter Kunststoff, Edelstahl |
| Auflagedruck am unteren Ende des Abstreifers | Niedrige Werte bei Gräsern Hohe Werte bei verholzten Pflanzen >50 cm | 0,1 -30 kg/m | 0,3-15 kg/m | 0,5-5 kg/m |
| Abstand der Düsen seitlich | Korreliert mit Flussrate und Öffnungswinkel, Abstreiferbreite | 10 cm -100 cm | 10 cm -50 cm | 10 cm - 30 cm |
| Düsenöffnungswinkel | | 10 - 130° | 20°-80° | 20°-50° |
| Düsenbeheizung/ Abstreiferheizung | Optional | Strom/Abgas | Abgas | Abgas |
| Düsentemperatur Abstreifertemperatur | wässrig/ölbasiert | 1-99 °C/1-300 °C | 5-90 °C/10-280 °C | 5-80 °C/5-250 °C |
| Düsenmaterial | wässrige Medien | Kunststoff | Kunststoff | Kunststoff |
| | organisch basierte Medien (über 90°C) | Kunststoff/ Metall | Metall | Metall |
| Flussrate der Düse | Wird an Fahrgeschwindigkeit angepasst durch Druckänderung | 0,05 I/min-0,5 I/min | 0,05 l/min-0,5 l/min | 0,05 l/min-0,5 l/min |
| Druckbereich | passt Flussrate an | 0,1-5 bar | 0,5-2,5 bar | 1 bar -2 bar |
| Auftragsmenge | bei vollständig bewachsener Fläche | 5-1000 L/ha | 10-200 I/ha | 15-50 I/ha |
| Tropfengröße | nach ISO 25358 | F, M, G,-SG, EG | M, G,-SG, - | G,-SG, |
| Abstand Düsen Abstreifer | | 10-50 cm | 10-30 cm | 10-20 cm |

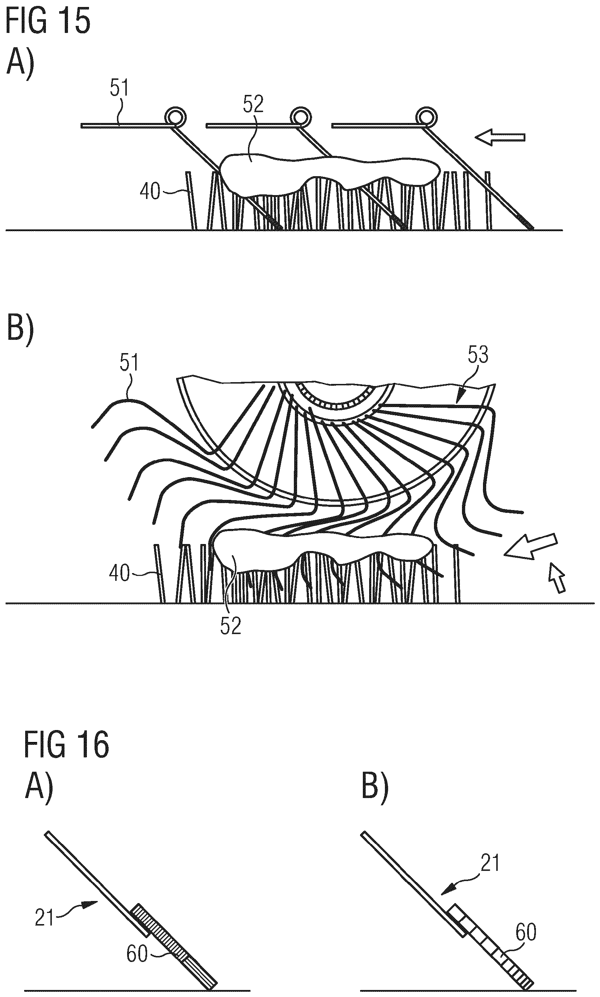

In Ausführungsformen der Applikatoren 21 gemäß der Darstellung von Fig. 15 wird der Strom mittels bewegter Drähte 51 auf grasartige Pflanzen 40 übertragen. Dabei wird der Leistungsübergang durch Verwenden von leitfähigem hybridem Schaum 52 verstärkt. In Fig. 15A sind die Drähte 51 in Form von Striegeln angeordnet, die vibrieren oder eine Eigenbewegung aufweisen. In Fig. 15B sind die Drähte in Form von Sternradapplikatoren 53 angeordnet. Weitere, ähnliche Ausführungsformen sind eintauchende passiv gedrehte Bürsten, gegenläufige Bürsten, quer zur Fahrtrichtung laufende Drahtelemente oder Bürsten, und schräge Drahtelemente (nicht gezeigt). Während sich die striegelartigen Drahtelemente/Zinken 51 (Fig. 15A) vorzugsweise in Fahrtrichtung bewegen und nur geringe Seitwärtsvibrationen ausführen können, kann mit Hilfe von bodenangetriebenen Sternradapplikatoren 53 Gras sehr stark quer zur Fahrtrichtung durchkämmt werden (Fig. 15B). Dazu werden die Sternradapplikatoren 53 im Unterschied zu den heuwendenden Nutzungen auch mit mehreren Sternrädern auf einer Achse eingesetzt. Quer zur Fahrtrichtung laufende Drahtelemente sind auch ähnlich gestaltet wie die von Heuwendern, nur dass die Drahtdichte deutlich höher ist, damit alle Pflanzen direkt oder indirekt kontaktiert werden.

Zum Vermeiden von Abreißfunken weisen die Endstücke der Applikatoren 21 in einer Ausführungsform gemäß der Darstellung von Fig. 16 raue oder poröse Applikatorendstücke 60 mit abnehmendem Leitfähigkeitsgradienten und ggf. darin gespeicherten Restmedien auf. Die porösen oder materialbedingt geringer leitfähigen unteren Abschnitte 60 halten die Pflanzen am Boden und weisen eine stufenweise (A) oder graduell (B) verringerte elektrische Leitfähigkeit auf. Damit wird der Bildung von Abreißfunken entgegengewirkt, da sie durch die Feuchtigkeit oder das teilleitfähige Material der Einheiten bzw. der aufsitzenden Erde oder Mischung aus heruntergelaufener/verteilter Applikationsflüssigkeit und Applikatormaterial abgelöscht werden. Mögliche Materialien der Endstücke 60 sind Glas- oder Kohlefaserwerkstoffe, Polyurethane mit teilleitfähigen Füllstoffen wie Korund oder Karbide oder leitfähige Silikate, vorzugsweise Flächenelemente aus Trennscheiben und Bremsklötzen. Die Materialdicken liegen zwischen 3 und 30 mm, vorzugsweise 5-15 mm. Die Endstücke werden mit Schrauben oder Klemmungen an den unteren Enden der Applikatoren 21 befestigt. In allen Fällen kann ggf. noch ein nichtleitender Endabschitt an die Endstücke angefügt werden. Die nichtleitenden Applikatorenden 60 können schräg auslaufende Enden aufweisen, um den Entladungsfunken, die sich normalerweise in Fahrtrichtung ausbreiten, die Luftfunkenstrecke abzuschneiden.

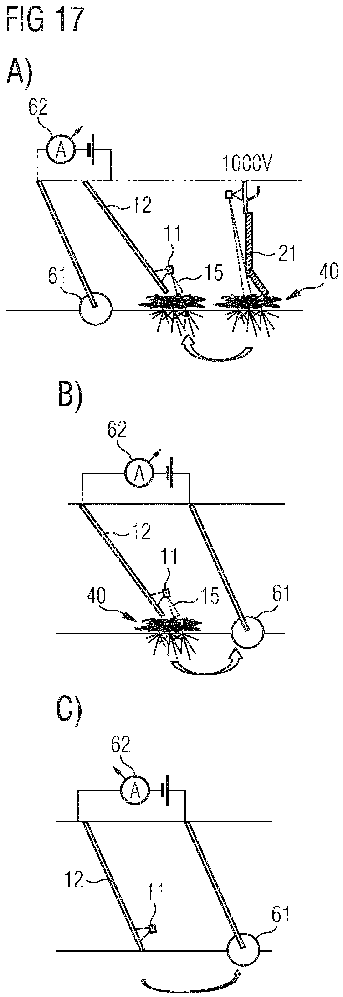

Fig. 17 zeigt Beispiele eines elektronischen Steuerkreises zum Dosieren der aufzutragenden Menge an übergangswiderstandsenkender Flüssigkeit. Wenn der Applikator 21 auf dem schlecht leitfähigen Boden aufsitzt, fließt ein niedriger Strom durch den Messkreislauf mit eigener Stromversorgung (z. B. Spannungsimpulse analog zu Weidezaungeräten) und einer sicher im Boden laufenden Erdungsscheibe 61. Gibt es Pflanzen 40 im Bereich des Applikators 21, erniedrigen diese den Widerstand stark und Strom fließt auf signifikant höherem Niveau. Dieser kann mit dem Messgerät 62 gemessen werden, wird dann von einer Auswertungseinheit (nicht gezeigt) mit Schwellensetzung zwischenverarbeitet und steuert ein Ventil kurz vor der Sprühdüse 11 an, sodass die Düse 11 sprüht (Fig. 17A). Alternativ dazu können auch die Streuströme der Applikatoren 21 im Boden verwendet werden, die zu einem Potentialfeld auch vor dem eigentlichen Applikationsbereich führen. Wächst dort eine Pflanze, steigen die messbaren Streuströme relativ zu einer noch weiter entfernt liegenden Erdungsscheibe 61 gegenüber Messungen auf blanker Erde an. Auf der Basis dieses Signals, wird dann die Düse 11 geschaltet (Fig. 17B). Wächst keine Pflanze, steigen die messbaren Streuströme relativ zu einer noch weiter entfernt liegenden Erdungsscheibe 61 gegenüber Messungen auf blanker Erde nicht an; dann wird die Düse 11 nicht geschaltet (Fig. 17C). Wenn RFID basierte Strom-Messeinheiten ausreichend sensitiv sind, kann die Strommessung direkt auf den leitfähigen Applikator 21 aufgebracht werden und die Auftragseinrichtungen 11, 12 können direkt über den Geräterahmen sehr einfach und kostengünstig gemeinsam geerdet werden (nicht gezeigt). Die Werte werden dann kontaktlos über Funk abgefragt und es besteht keine Gefahr für Messgerätekurzschlüsse durch die Hochspannung.

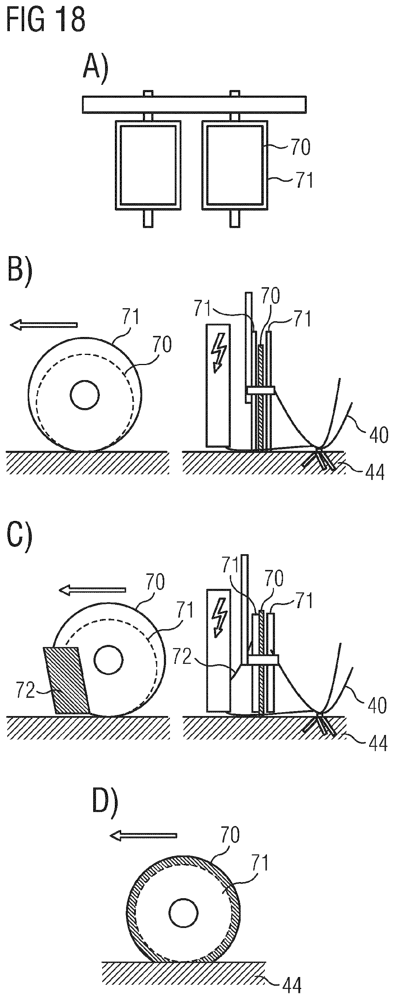

In Fig. 18 sind Ausführungsformen von isolierend ausgebildeten Schutzscheiben 70 dargestellt. Diese sind vorgesehen, Nutzpflanzen in unbehandelten Bereichen vor elektrischem Strom zu schützen. Dabei wird auf die glatte oder gezahnte Schutzscheibe 70 jeweils auf beiden Seiten eine nichtleitende Schutzscheibe 71 entweder fest aufgebracht (Fig. 18A) oder läuft auf gleicher Achse ggf. mit einer größeren Bohrung oder einer leicht verschobenen Achse mit, um auch den hervorstehenden Metallrand in der Luft abzudecken (Fig. 18B, links Seitenansicht, rechts Frontansicht). Alternativ kann die Isolationsscheibe auch mit einem Kranz flexibler Borsten 72 versehen sein (Fig. 18C, links Seitenansicht, rechts Frontansicht), oder an den Rädern befinden sich statische Abstreifelemente (nicht gezeigt). Die Metallscheibe steht vorzugsweise 2 bis 10 mm über die Kunststoffschutzscheiben hinaus und kann damit Pflanzenteile 40 am Boden entweder abschneiden oder zumindest zum elektrischen Masseschluss in den Boden drücken. Aus diesem Grund kann kein elektrischer Strom des Applikators 21 aus einem berührten Blatt 41 der Nutzpflanze in die Wurzel 42 der Nutzpflanze fließen.

Die Metallscheibe 70 ist dementsprechend durch eigenes Einschneiden in den Boden oder eine weitere Schleifvorrichtung (z.B. über das nachlaufende Stützrad) geerdet (Fig. 18D). Die Achse und die Halterung der Schutzscheiben 70 sind isolierend abgedeckt. Der Pfeil zeigt die Bewegungsrichtung der Vorrichtung 1.

Die Effektivität der Vorrichtung 1 wurde in Effizienzversuchen getestet. Die Durchführung der Effizienzversuche richtet sich nach dem jahreszeitlich vorhandenen Pflanzenbewuchs auf den Feldern. In Tabelle 9 ist eine Übersicht über die Versuche darstellt.

**Tabelle 9**

| Leitname der Behandlung | Klassifikation | Randbedingung/Vorbehandlung |
|---|---|---|
| Greening Frühjahr | Mischbewuchs, insbesondere Gräser | Wiederaufwuchs nach Mulchen |
| | Ölrettich | Wiederaufwuchs nach sehr flachem Grubbern |
| Zuckerrüben Saatbettbereitung | Kleine Unkräuter gemischt | |
| Zuckerrüben Vorauflauf | Kleine Unkräuter gemischt | 2-4 Tage nach Saat |
| Nachernte | Ausfallkartoffeln (kleingroß) l, Auflaufgetreide in Stoppeln (klein) | Ggf. nach flachem Grubbern |
| Nematodenstopp in Raps | Auflaufraps (klein) nach 200 Temperaturstunden Auflaufzeit | Mulchen direkt nach der Ernte |
| Kartoffelsikkation | Sikkation in verschiedenen Kartoffelsorten 1-3 Wochen vor der Ernte | Einmalige und Zweimalige Behandlung, ggf. in Kombination mit nachgelagertem Sikkationsherbizid |
| Reihenkulturen Mais, Raps, Kartoffeln | Bekämpfung Unkraut zwischen den Reihen in verschiedener Größe | |
| Schwächung invasiver Pflanzen | Behandlung extremer Tiefwurzler | Nach Mähen 2-3 x pro Jahr |

Für alle Versuche werden noch erlaubte Standardverfahren mit chemischen Herbiziden (Glyphosat, Pelargonsäure), oder physikalisch/ mechanische Standardverfahren (Krautschlagen, flaches Grubbern, Hacken) als Positivkontrollen mitgeführt. Negativkontrollen sind immer komplett unbehandelte Streifen. Zusätzlich wird immer je ein Streifen nur mit dem übergangswiderstandsenkenden Medium bzw. nur mit dem elektrischen Strom behandelt, um die Synergie der beiden Methodenkomponenten nachzuweisen.

Die Versuche werden mit 9 m breiten Geräten gefahren, wobei die Arbeitsbreite der einzelnen elektrophysikalischen Behandlungseinheiten 50 cm oder 1 m beträgt. In jedem Fall werden immer 1 m breite Streifen gleich behandelt. Um Randeffekte auszuschließen werden von jedem 1 m breiten Streifen immer die mittleren 50 cm auf einer Länge von 6 m ausgewertet.

Für jede Behandlung sind im Normalfall drei und bei unregelmäßigem Bewuchs fünf Wiederholungen vorgesehen.

Jede Versuchsbahn, die an einem Stück gefahren werden kann, beinhaltet eine Folge von Behandlungseinheiten, bei denen die Geschwindigkeit möglichst lange konstant gehalten wird und nur blockweise gewechselt wird. Innerhalb einer Versuchsbahn werden jeweils Parameter wie die maximale Spannung, die maximale Leistung pro Meter Arbeitsbreite und das Auftragsvolumen gewechselt, bevor eine weitere Geschwindigkeit getestet wird.

Da für die Änderung von Applikatoren, Auftragsvorrichtungspositionen (vorne, hinten) und für den Wechsel zwischen übergangswiderstandsenkenden Medien (andere Zusammensetzung, andere Konzentrationen), händische Umbauten am Versuchsgerät notwendig sind, können solche Veränderungen nur auf verschiedenen Versuchsbahnen durchgeführt werden.

Zwischen jeder einzelnen Behandlung liegen nicht auswertbare Pufferbereiche von 10 m Länge, in denen die entsprechenden Parameter an Sprüheinheit und elektrophysikalischer Behandlung umgestellt werden. Die Umstellung erfolgt entweder von Hand, im Idealfall jedoch GPS gesteuert, assistiert oder komplett automatisch durch die Steuereinheit des Gesamtsystems.

Es werden jeweils nur die beiden 3 m Streifen rechts und links des Traktors ausgewertet. Die von den Traktorreifen überfahrenen Bereiche werden grundsätzlich ausgeklammert. Der Bereich zwischen den Traktorreifen wird für die Nullkontrollen und die Positivkontrollen genutzt. Da die Auftragung der klassischen Herbizide komplett andere Sprühsysteme erfordert, werden diese von einem separaten Traktor mit entsprechendem Sprühgestänge erledigt, der nur die Bereiche direkt hinter dem Traktor sprüht und damit die Fahrspuren für die spätere Behandlung anlegt. Um jegliche Abdriftprobleme zu eliminieren, werden die Sprüheinheiten immer in die Übergangsbereiche gelegt. Es werden bei spezifischen Versuchen mehr als eine Art von Sprühkontrolle angelegt, da z. B. beim Einsatz von Kartoffelherbiziden, aber auch Glyphosat, Landwirte auch nicht immer mit einer einheitlichen Dosis spritzen. Hier wird dann die Effizienz mit den verschiedenen konventionellen Dosierungen vergleichbar. Der Sprühtraktor für die Kontrolle fährt kurz vor der übergangswiderstandsenkenden Behandlung. Der von den Traktorreifen umgewalzte Bereich und der Bereich außerhalb der Traktorreifen mit bis zu 3 m Gesamtbreite dient dann als Pufferstreifen, um Abdrifteffekte aufzufangen; dieser wird nicht ausgewertet.

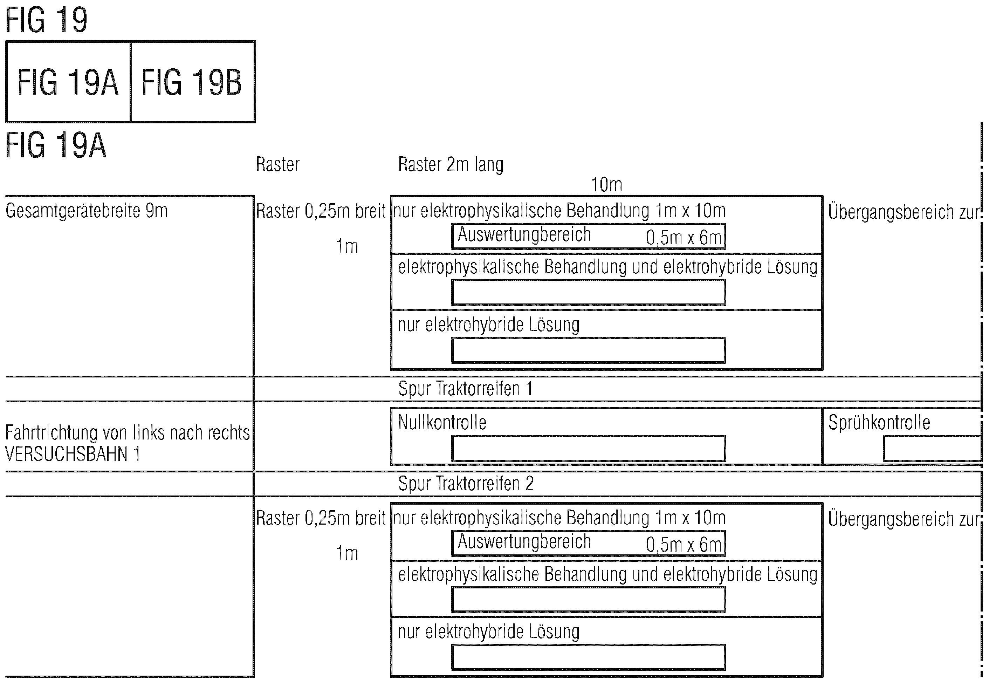

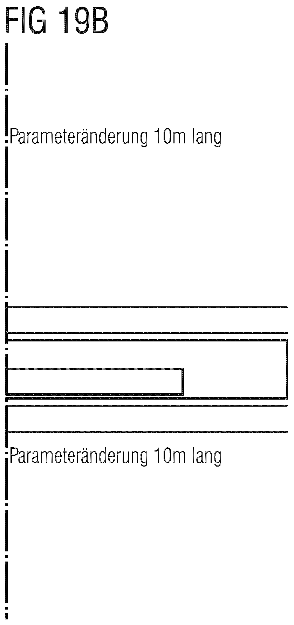

In Fig. 19 ist dazu ein Versuchsplanausschnitt zum Ausführen eines erfindungsgemäßen Verfahrens auf einem landwirtschaftlichen Feld dargestellt. Dabei ist eine Bahnbreite zu sehen, die 9 m Arbeitsbreite des Traktors entspricht, ein behandelter Abschnitt (Mitte) und ein Übergangsabschnitt (rechts).

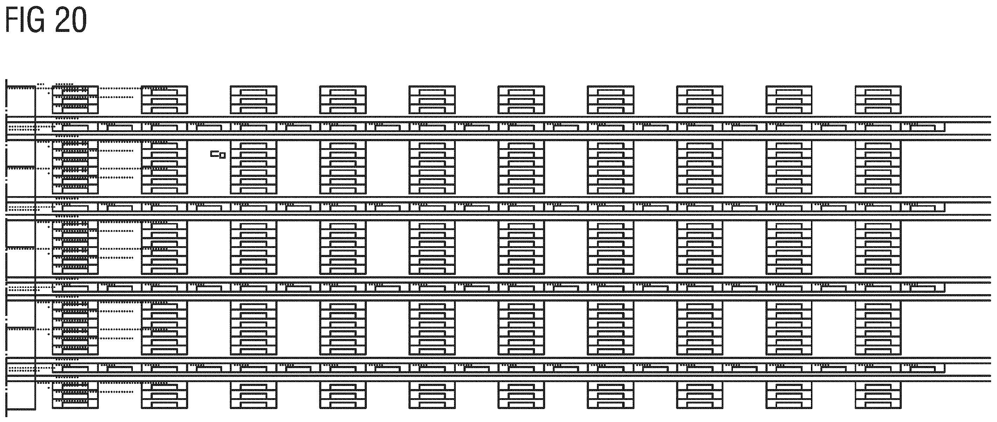

In Fig. 20 ist ein Versuchsfeldausschnitt mit einer großen Zahl Parzellen dargestellt, die auf die jeweiligen Versuchsglieder nach den im Text erwähnten Regeln aufgeteilt werden. Dargestellt sind 4 Versuchsbahnen mit jeweils 10 hintereinanderliegenden Behandlungseinheiten.

In Tabelle 10 sind Vorrichtungsvarianten zusammengefasst, die bevorzugt auf Effizienz geprüft werden. Als jeweilige Detailparameter werden die "insbesondere" genannten Parameter genutzt, wenn die Versuchspflanzen nicht explizit andere Parameter als Spezialanwendung benötigen.

**Tabelle 10**

| Kultur | Übergangswiderstandsenkendes Medium | Auftrag | Applikatortyp |
|---|---|---|---|
| Greening Dikotyle Vorauflauf /Saatbett Zuckerrübe, Raps, Kartoffelsikkation, Reihenkulturen | wasserbasiert/ ölbasiert | Sprühen, Abstreifen | erwärmbarer Applikator, einfache Metalllamellen |
| Greening Monokotyle | thixotrop | Sprühen | Lamellenapplikator/ erwärmbare Applikatoren |
| Greening Monokotyle | schäumend | Sprühen | Striegel, Sternrad, Lamellen |

In Tabelle 11 sind Variantenbereiche der Versuchsvarianten zusammengestellt.

**Tabelle 11**

| | |
|---|---|
| Geschwindigkeiten | 4- 12 km/h |
| Stromleistung | 2-20 kW/m |
| Maximalspannungsbegrenzung | 500-4000 V |
| Konzentrationen/Aufwandmenge der übergangswiderstandsenkenden Medien | niedrig, mittel, hoch (50%, 100% 200% erwartete praktische Aufwandmenge)* |
| Wassermengen | 50-400 l/ha |
| Auftragungstemperaturen Medium (Wasser/Öl) | Umgeb.temp. + 80 °C/ Ugt. + 80+160+240 °C |
| Abstreifertemperaturen (Wasser/Öl) | Umgeb.temp. + 80 °C/ Ugt + 80+160+240 °C |
| Applikatortemperaturen (Wasser/Öl) | Umgeb.temp. + 80 °C/ Ugt + 80+160+240 °C |

| | |
|---|---|
| * Im Rahmen des Screenings wird aus Vorversuchen mit verschiedenen Konzentrationen/Auftragsmengen in Blumenkästen eine Konzentration/Auftragsmenge des übergangswiderstandsenkenden Mediums ermittelt, die für die allermeisten Pflanzen als ausreichend angesehen wird. Diese Auftragsmenge wird dann im größeren Versuch jeweils halbiert und gedoppelt zusätzlich getestet, um zu prüfen, ob andere Konzentrationen/Auftragsmengen in Sachen Sparsamkeit und Wirkung noch effektiver sind. | |

Die genauen Versuchspläne resultieren aus der Größe der vorhandenen Felder, deren Format und der zu variierenden Versuchsparameter und werden entsprechend den oben beschriebenen Regeln angelegt.

In jeder Versuchsvariante werden für jede Versuchsparzelle mindestens folgende Parameter technisch gemessen:
- Spannung,
- Strom,
- Energie,
- Frequenz,
- Wetter,
- Widerstand

Alle Parameter werden flächenaufgelöst gemessen.

In jeder Versuchsvariante werden die folgenden Bonituren durchgeführt:
- Vor Behandlung, 1 h, 1 Tag, 3 Tage, 7 Tage, 14 Tage nach Behandlung
- Pflanzenzahlen,
- Schädigungsgrad,
- Flächenbedeckung,
- besondere Symptome.

Im Folgenden werden die durchgeführten Versuche und deren Ergebnisse beschrieben. Dabei wird das den elektrischen Übergangswiderstand senkende Medium auch als Flüssigkeit bezeichnet.

### Versuch 1: Behandlung von Getreide

### Eigenschaften des Versuchsfeldes:

Das Versuchsfeld liegt am Ortsrand von Wanlo in Nordrhein-Westfalen, Deutschland (51°05'56.3"N 6°25'18.8"E). Der Bodentyp wird als Parabraunerde beschrieben. Nach Kartieranleitung des Geologischen Dienstes Nordrhein-Westfalen handelt es sich um tonigen Schluff. Die Schätzung der Wertzahl ist mit 75 - 85 sehr hoch. Der trockene Boden wird sehr hart und zeigt massive Trockenrisse schon im späten, trockenen Frühjahr.

### Versuchsdesign:

Für die Behandlung von Getreide wurde ein Fahrzeug, und zwar ein Traktor, mit einer erfindungsgemäßen Vorrichtung eingesetzt. Vorne an dem Traktor war als Auftragseinrichtung eine Feldspritze mit 6 m Arbeitsbreite angebracht. Am Heck des Traktors war die Applikationseinrichtung zum Applizieren von Strom angebracht. Dabei wurde der Stromgenerator über die Zapfwelle angetrieben und leistete bis zu 72 kW. 20 Hochspannungseinheiten mit jeweils 3,6 kW Leistung stellten die Nominalleistung in einem Spannungsbereich zwischen 2000 und 5000 V zur Verfügung. Die Vorrichtung arbeitete auf 6 m Breite (Arbeitsbreite). Als Applikationseinrichtung dienten klassische Langapplikatoren (Langreichweitenapplikatoren, auch als Zungenapplikatoren oder LRB (von englisch "Long Range Blade") bezeichnet) aus Blechlamellen mit 60 bis 80 cm Polabstand, die auf der kompletten Arbeitsbreite angebracht waren. Dabei wurden die Zungenapplikatoren als ein Pol und Schneidscheiben im Boden als zweiter Pol eingesetzt.

Die Behandlung wurde in grünem Weizen getestet, weil es sich dabei um eine Kultur mit sehr homogen wachsenden, engstehenden Pflanzen handelt. Die Pflanzen sind zudem hochstehend, sodass ein Einleiten des Stroms nur in die Blätter der Pflanzen ohne weiteres möglich ist. Darüber hinaus stellt Getreide aufgrund seiner Robustheit einen anspruchsvollen Anwendungsfall dar. Zum Zeitpunkt der Behandlung war das Ährenschieben schon abgeschlossen. Zu diesem Zeitpunkt ist aus physiologischen Gründen eine schnelle und komplette Abtötung von einkeimblättrigen Pflanzen nur mit Strom kaum noch möglich, da die Lignifizierung der Stängel schon weitgehend abgeschlossen ist.

Für den Versuch wurde jeweils eine Bahnlänge (ohne Vorgewende) einer Bahn des Versuchsfeldes in fünf Abschnitte für vier verschiedene Geschwindigkeiten (in ansteigender Reihenfolge) und für eine Kontrolle ohne Strom (auch als Flüssigkeitskontrolle oder Spritzkontrolle bezeichnet) geteilt. Die Abschnitte hatten jeweils eine Länge von mindestens 10 m bzw. für 2 km/h und 4 km/h von mindestens 20 m.

Die Abschnitte wurden dann entsprechend des Versuchsplans zunächst mit Wasser oder unterschiedlichen Flüssigkeiten (Wasser mit Zusatz von Cocktail, Hasten, Polyaktiv oder Bolero) und nach sehr kurzer Einwirkzeit (ca. 4-8 s) mittels der Zungenapplikatoren mit Strom behandelt. Für die Kontrolle ohne Strom wurden die entsprechenden Abschnitte nur mit der jeweiligen Flüssigkeit behandelt. Es wurde auch eine Kontrolle ohne Flüssigkeit oder Wasser, bei der die Pflanzen nur mit Strom behandelt wurden (Trocken) mitgeführt. Für die Behandlung mit dem Strom wurden vier verschiedene Fahrgeschwindigkeiten des Traktors, nämlich 0,5 km/h, 1 km/h, 2 km/h und 4 km/h, eingesetzt, die zu vier verschiedenen nominellen Einträgen an elektrischer Energie führen (siehe Abschnitt Energieeintrag und Geschwindigkeit des Traktors). Die Flüssigkeitsaufwandmenge für das Auftragen der unterschiedlichen Flüssigkeiten betrug 400 l/ha.

Komplett unbehandelte Streifen des Versuchsfeldes zogen sich als Kontrolle (unbehandelt; auch als Nullkontrolle bezeichnet) über die gesamte Länge des Versuchsfeldes, und zwar parallel zu den behandelten Bahnen bzw. Streifen.

### Flüssigkeiten (den elektrischen Übergangswiderstand senkende Medien):

Die für die Flüssigkeiten verwendeten Zusätze Cocktail, Hasten, Polyaktiv und Bolero sind kommerziell erhältliche Produkte. Die Namen der Zusätze entsprechen im Wesentlichen den Eigennamen der Handelsprodukte. Für die Flüssigkeiten wurden die Zusätze jeweils in der vom Hersteller angegebenen Konzentration in Wasser eingesetzt.

Cocktail (Hersteller Lotus Agrar GmbH, Stade, Deutschland) ist als Zusatzstoff für Herbizide auf dem Markt. Cocktail ist ein Gemisch aus 60% Ethyloleat aus Sonnenblumenöl und 40% Zuckerderivaten.

Hasten (Hersteller ADAMA Deutschland GmbH, Köln, Deutschland) ist ein Gemisch aus Rapsölethylestern und Rapsölmethylestern und nichtionischen Tensiden (716 g/l Rapsölethyl- und -methylester, 179 g/l nichtionische Tenside). Hasten ist als Emulsionskonzentrat formuliert und als Zusatzstoff zur Behandlung mit Herbiziden auf dem Markt.

Bei Polyaktiv handelt es sich um das Handelsprodukt Lotus Polyactiv Zn (Hersteller Lotus Agrar GmbH, Stade, Deutschland), das als Zusatzstoff für Blattdünger auf dem Markt ist. Polyaktiv weist 10,8% (150 g/l) Zink und 13,5% (185 g/l) Schwefelsäureanhydrid (SO3) auf. Wichtiger ist vorliegend jedoch die Formulierung von Polyaktiv, die mit Polyolen (auch Zuckeralkohole genannt) vorgenommen ist. Polyaktiv ist ein Polyol-Zink-Komplex.

Bolero (SDP Bolero, Hersteller Lotus Agrar GmbH, Stade, Deutschland) ist als Zusatzstoff für Blattdünger auf dem Markt. Bolero weist 9,5% (120 g/l) Bor auf. Wichtiger ist vorliegend jedoch die Formulierung von Bolero, die mit Polyolen (auch Zuckeralkohole genannt) vorgenommen ist. Bolero ist ein Polyol-Bor-Komplex.

Die Flüssigkeitsaufwandmenge von 400 I/ha für Weizen nach dem Ährenschieben wurde in einem Vorversuch ermittelt, in dem Volumina zwischen 200 und 800 I/ha getestet wurden. Hier zeigte sich, dass ab einem Auftragsvolumen von 400 I/ha sich der elektrische Widerstand (entspricht 1 bar beim genutzten Düsentyp) auf ca. 7000 - 8000 Ohm einpendelte und gegenüber den stark schwankenden 12000 - 22000 Ohm bei Behandlung der Pflanzen in trockenem Zustand stark vergleichmäßigte.

### Energieeintrag und Geschwindigkeit des Traktors:

Der Energieeintrag wird hier auch als Energieeinsatz bezeichnet. Der reale Energieeinsatz hängt neben der verfügbaren Gesamtleistung auch erheblich vom aktuellen Widerstand der Pflanzen und gegebenenfalls auch des Boden ab, da die Spannungsversorgungseinheiten nur zwischen 2000 und 5000 V mit voller Leistung arbeiten können. Dementsprechend kann der reale Energieeinsatz pro Hektar bei hohem Widerstand deutlich unter dem nominellen Energieeinsatz, gerechnet bei voller Leistung, liegen.

In Abhängigkeit von der Geschwindigkeit des Traktors werden beim Einsatz der Langapplikatoren in Getreide die folgenden nominellen Einträge an elektrischer Energie pro Hektar erzielt:

| | |
|---|---|
| 0,5 km/h: | 30 kW/ha |
| 1 km/h: | 60 kW/ha |
| 2 km/h: | 120 kW/ha |
| 4 km/h: | 240 kW/ha |

### Zielsetzungen des Versuchs:

Der Versuch diente dem Vergleich einer Behandlung mittels des erfindungsgemäßen Verfahrens (crop.zone Behandlung) mit einer Behandlung nur mit Strom (d.h. ohne Flüssigkeit) sowie mit einer Behandlung nur mit Flüssigkeit (d.h. ohne Strom).

Der Versuch diente weiter dem Vergleich unterschiedlicher Flüssigkeiten, jeweils bei unterschiedlichen nominellen Einträgen an elektrischer Energie (unterschiedliche Geschwindigkeiten des Traktors).

### Versuchsauswertung:

Für die Versuchsauswertung wurden nur die nicht von den Reifen des Traktors plattgefahren Bereiche bis maximal 30 cm von den Außenrändern der Arbeitsbreite verwendet.

Die Ergebnisse der Behandlung wurden visuell bonitiert und durch eine Drohne mit NDVI-Messung eine Woche nach der Behandlung grafisch und flächendeckend dargestellt. NDVI steht für Normierter Differenzierter Vegetationsindex (englisch "Normalized Difference Vegetation Index"). Er ist der am häufigsten angewandte Vegetationsindex. Ähnliche Bonituren wurden in NDVI-Klassen (Grünwertklassen) zusammengefasst. Eine Erhöhung der NDVI-Klasse, welche für die unbehandelte Kontrolle 1 gesetzt wurde, entspricht einer Verringerung des Grünwertes.

### Versuchsergebnisse:

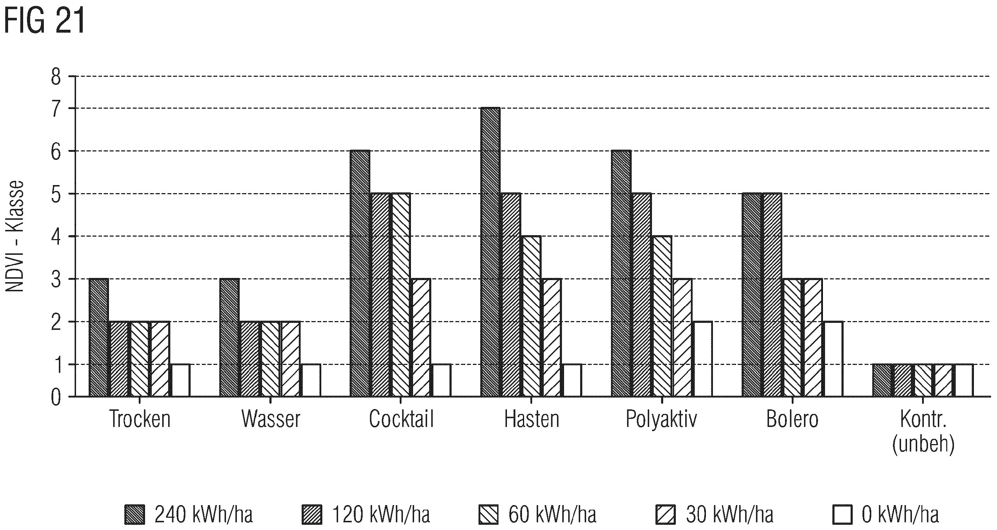

Figur 21 zeigt die Klassifizierung der NDVI-Reflektionen der Drohnenaufnahmen des Getreidefeldes in sieben Intensitätsklassen, wobei Klasse 1 dem höchsten Grünwert und Klasse 7 dem geringsten Grünwert entspricht. Für die unbehandelte Kontrolle wurde die NDVI-Klasse 1 gesetzt. Die Figur zeigt die Ergebnisse der Behandlung der Pflanzen mit Wasser oder unterschiedlichen Flüssigkeiten (Wasser mit Zusatz von Cocktail, Hasten, Polyaktiv oder Bolero) und anschließend mit Strom. Zudem werden die Ergebnisse der folgenden Kontrollen bzw. Vergleichsbehandlungen gezeigt: (1) "Kontr. (unbeh.)" ist die unbehandelte Kontrolle; (2) "Trocken" ist die Kontrolle ohne Flüssigkeit (nur Strom); (3) jeweils mit 0 kWh/ha beaufschlagte Flächen sind die Kontrollen ohne Strom (nur Wasser bzw. Flüssigkeit). Die spezifischen Energieangaben stellen den nominellen Eintrag an elektrischer Energie pro Hektar dar. Der reale Eintrag an Energie kann niedriger sein, wenn der Widerstand die Hochspannungseinheiten nicht mehr bei Volllast arbeiten lässt.

Die eingesetzten Flüssigkeiten (Wasser mit Zusatzstoffen wie angegeben) haben selbst keine herbizide Wirkung. Sie wurden dafür entwickelt, die Wirkung von Chemikalien auf Pflanzen zu verstärken. Mit der Wirkung von Chemikalien ist die Wirkung von Pflanzenschutzmitteln wie Herbiziden und von Blattdünger gemeint, die besser in die Pflanzen eindringen sollen und diese dann entweder absterben lassen oder düngen sollen. Im Gegensatz dazu verfügt Strom nicht über chemische Verbindungen, die in die Pflanzen eindringen könnten. Die eingesetzten Flüssigkeiten stammen also aus einem anderen Verwendungsbereich und waren von den Erfindern eigentlich nur für ein Erstscreening für komplexere den elektrischen Übergangswiderstand senkende Medien vorgesehen. Dass die eingesetzten Flüssigkeiten in der Kombination mit der Applikation von Strom eine derartig große synergistische Wirkung zeigen, war in keiner Weise erwartbar, da sich der Wirkmechanismus der elektrophysikalischen Behandlung von Pflanzen mit Strom vom Mechanismus chemischer Behandlungen mit Pflanzenschutzmitteln und Blattdüngern fundamental unterscheidet.

Die Ergebnisse zeigen, dass sich die Behandlung der Pflanzen mit Strom in trockenem Zustand und bei vorheriger Behandlung mit Wasser außer beim extrem hohen Wert von 240 kWh/ha nur um eine Grünwertklasse von der unbehandelten Kontrolle unterscheidet und untereinander keine bonitierbaren Unterschiede erkennbar waren. Die Verringerung des Grünwertes bei 240 kWh/ha für die Behandlung mit Strom in trockenem Zustand und bei vorheriger Behandlung mit Wasser entspricht der aller Behandlungen mit den unterschiedlichen Flüssigkeiten bei 30 kWh/ha. Dies bedeutet, dass die biologische Wirkung durch Nutzung der Flüssigkeiten 8-fach so effizient wird.

Die Ergebnisse zeigen, dass eine Behandlung nur mit der Flüssigkeit, d.h. ohne Strom (0 kWh/ha), im Fall von Cocktail und Hasten als Zusatzstoff keinen Effekt auf den Grünwert der Getreidepflanzen hatte. Im Fall von Polyaktiv und Bolero als Zusatzstoff zeigte sich hierbei ein geringer Effekt (Erhöhung um eine Grünwertklasse). Bei der zusätzlichen Behandlung mit Strom trat bei allen Flüssigkeiten eine Verringerung des Grünwertes ein, und zwar in einer dosisabhängigen Form: Eine Zunahme der eingesetzten Energiemengen zeigte eine von der Dosis der eingesetzten Energiemenge abhängige Steigerung des Effekts. Somit liegt eine Dosis-Wirkung-Beziehung vor.

Die Behandlung nur mit Strom, d.h. ohne Flüssigkeit oder Wasser, zeigte hinsichtlich der Verringerung des Grünwertes lediglich einen kleinen Effekt (Kontrolle "Trocken", Erhöhung nur um eine Grünwertklasse bzw. bei 240 kWh/ha um zwei Grünwertklassen). Anhand der Kontrolle "Trocken" zeigt sich, dass Getreide aufgrund seiner Robustheit einen anspruchsvollen Anwendungsfall für Sikkationsbehandlungen darstellt. Die Behandlung nur mit Strom entspricht dem Stand der Technik. Dabei werden zum Erreichen eines Effekts sehr hohe Energiemengen (240 kWh/ha und mehr) benötigt, was angesichts der auf den Feldern elektrisch verfügbaren Traktorleistungen praktisch nicht umsetzbar ist.

Der Effekt, der bei einer Behandlung nur mit Strom bei 240 kWh/ha erzielt wird (Kontrolle "Trocken"), wird bei der zusätzlichen Verwendung der Flüssigkeit (Cocktail, Hasten als Zusatzstoff) überraschenderweise schon bei 30 kWh/ha erreicht (Erreichen der Grünwertklasse 3). Somit wird durch die Kombination mit der Flüssigkeit nur ein Achtel der Energiemenge im Vergleich zur reinen Strombehandlung für denselben Effekt benötigt. Damit konnte der Traktor für denselben Effekt bei der Kombination von Flüssigkeit und Strom mit 4 km/h fahren, während er bei der Kontrolle ohne Flüssigkeit hierfür mit 0,5 km/h fahren musste. Die Reduzierung der benötigten Energiemenge um den Faktor 8 durch die Kombination von Flüssigkeit und Strom liegt weit über den Erwartungen auf dem Gebiet der Behandlung von Pflanzen, da für rein chemische Pflanzenbehandlungen bereits eine Verbesserung um den Faktor 2 als außerordentlich gut gilt.

Die Reduzierung der benötigten Energiemenge um den Faktor 8 durch die Kombination von Flüssigkeit und Strom führt dazu, dass die Behandlung angesichts der auf den Feldern elektrisch verfügbaren Traktorleistungen praktisch umsetzbar ist. Zudem kann der gewünschte Effekt bei einer höheren Geschwindigkeit des Traktors erreicht werden, sodass sich der Zeitaufwand zur Behandlung der Pflanzen verringert.

Durch die Kombination der Behandlung mit der Flüssigkeit und der Behandlung mit dem Strom konnte aber nicht nur der Energiebedarf erheblich reduziert werden, sondern überraschenderweise auch die Wirkung auf die Pflanzen erheblich gesteigert werden, und zwar bis hin zu der Grünwertklasse 6 bzw. im Fall von Hasten sogar bis hin zu der Grünwertklasse 7. Somit wurde der Wirkungsgrad der Behandlung durch die Kombination erheblich gesteigert.

Die Flüssigkeiten weisen oberflächenaktive und wachsschichterweichende Inhaltsstoffe auf. Hasten zeigte als Zusatzstoff die beste Wirkung, gefolgt von Cocktail und Polyaktiv. Die Effizienzsteigerung zeigt, wie wichtig die Benetzung und Aufweichung der Blattoberfläche zum Eindringen von elektrischem Strom ist.

Die Behandlung der Pflanzen mit Wasser statt mit einem den elektrischen Übergangswiderstand senkenden Medium vor der Stromapplikation zeigte keine Wirkung gegenüber einer Behandlung nur mit Strom (gleiches Ergebnis für "Wasser" und "Trocken").

Die Messungen von Strom und Spannung haben ergeben, dass durch den Einsatz der Flüssigkeiten gegenüber der Behandlung in trockenem Zustand die Spannung bei gleicher Leistung im Durchschnitt von 3600 auf 2800 V im Mittel gesenkt werden kann. Dies entspricht einer Reduktion des elektrischen Widerstandes um ca. 20%. Durch eine weitere Optimierung der Flüssigkeiten sind weitere Spannungsabsenkungen zu erwarten. Niedrige Widerstände und Spannungen sind auch entscheidend für eine kostengünstige Produktion der Applikationseinrichtungen und eine effektive sicherheitstechnische Konfiguration derselben. Darüber hinaus steigert sich die Wirkung des elektrischen Stromes mit absinkendem Widerstand bzw. steigenden Strömen bei gleicher Gesamtenergiemenge.

Die Ergebnisse zeigen, dass der Übergangswiderstand zwischen Applikator und Pflanze durch den Einsatz von den elektrischen Übergangswiderstand senkenden Medien, insbesondere von wachsschichtaufweichenden und benetzenden Flüssigkeiten, schon nach sehr kurzer Einwirkzeit (ca. 4-8 s) um etwa 20% gesenkt werden kann. Die biologischen Effekte der Stromapplikation steigern sich jedoch bei gleicher (niedriger) Effekthöhe um das bis zu 8fache, wenn statt dem Einsatz von reinem Wasser oder der Behandlung der Pflanzen in trockenem Zustand ein den elektrischen Übergangswiderstand senkendes Medium eingesetzt wird. Ohne ein solches Medium konnte selbst bei sehr hohen Energieintensitäten (240 kWh/ha) bei Einsatz von reinem Wasser oder der Behandlung der Pflanzen in trockenem Zustand keine relevante Sikkation von Getreide erreicht werden. Nach Zusatz des Mediums, das selbst keine herbizide Wirkung hat, ließen sich jedoch massive Chlorophyllverluste und eine beginnende Sikkation beobachten.

Die Ergebnisse zeigen, dass, in Bezug auf die Behandlung der Pflanzen mit Strom, der Einsatz eines den elektrischen Übergangswiderstand senkenden Mediums den entscheidenden Effekt gegenüber dem Einsatz von reinem Wasser oder der Behandlung der Pflanzen in trockenem Zustand darstellt. Was hier am Beispiel von Getreide gezeigt wurde, kann problemlos auf eine breite Vielfalt von anderen Pflanzen übertragen werden.

### Versuch 2: Behandlung von Kartoffeln

### Eigenschaften des Versuchsfeldes:

Das Feld liegt am Peringsmaar/Bedburg in Nordrhein-Westfalen, Deutschland (50°59'37.5"N 6°35'21.0"E). Die Fläche ist eine Rekultivierungsfläche des dortigen Braunkohlentagebaues. Dementsprechend wird der Bodentyp als Auftrags-Pararendzina beschreiben. Nach Kartieranleitung des Geologischen Dienstes Nordrhein-Westfalen handelt es sich um schluffigen Lehm. Die Rekultivierung ist ca. 15 Jahre her. Trotzdem fällt der Boden durch eine sehr geringe mikrobielle Abbauaktivität, zum Beispiel für Getreidestroh, auf. Für die Kartoffeln bietet der Boden jedoch außergewöhnlich gute Wachstumsbedingungen im Vergleich zu nahegelegenen gewachsenen Böden. Trotz des heißen und trockenen Sommers war das genutzte Feld das einzige nichtbewässerte und zum Sikkationszeitpunkt noch vollständig grüne Kartoffelfeld der Region. Die Schätzung der Wertzahl ist mit 45 - 75 hoch.

### Versuchsdesign:

Für die Behandlung von Kartoffeln wurde ein Fahrzeug, und zwar ein Traktor mit Hackbereifung, mit einer erfindungsgemäßen Vorrichtung eingesetzt. Vorne an dem Traktor war als Auftragseinrichtung eine Sprüheinrichtung (Feldspritze) mit 6 m Arbeitsbreite angebracht. Die Sprüheinrichtung konnte je nach Versuchsziel halbseitig abgestellt werden, was zu Versuchsparzellen mit 3 m Breite und 10 m Länge führte. Das Versprühen von Flüssigkeit erfolgte ca. 10 m vor dem Applizieren von Strom. Für das Applizieren des Stroms war am Heck des Traktors eine Applikationseinrichtung zum Applizieren von Strom angebracht. Dabei wurde der Stromgenerator über die Zapfwelle angetrieben und leistete bis zu 72 kW. 20 Hochspannungseinheiten mit jeweils 3,6 kW Leistung stellten die Nominalleistung in einem Spannungsbereich zwischen 2000 und 5000 V zur Verfügung. Die Vorrichtung arbeitete auf 6 m Breite (Arbeitsbreite).

Das Feld war mit der Speisekartoffelsorte Challenger bepflanzt (14.4.2022) und konventionell mit Pflanzenschutzmaßnahmen und Dünger behandelt. Die Kartoffelpflanzen waren zum Behandlungszeitpunkt im phänologischen Stadium 81 (81 - 83), also noch kräftig grün. Die Sorte Challenger gilt generell als starkwüchsig und schwierig bei der Sikkation. Der heiße und trockene Sommer führte generell zu einer verstärkten Bildung von Wachsschichten.

Der Traktor fuhr zwischen der 3./4. und der 5./6. Dammkrone. Für die Versuchsauswertung werden nur die Reihen 3 und 5 benutzt. Die einzelnen Versuchsparzellen-Abschnitte, die mit unterschiedlichen Geschwindigkeiten des Traktors behandelt wurden, waren durch Halte- und Beschleunigungsbereiche getrennt. Die einzelnen Versuchsparzellen waren teilrandomisiert, da nur solche Flächenanordnungen mit einer Vorrichtung mit 6 m Arbeitsbreite mit drei unterschiedlichen Geschwindigkeiten befahrbar sind.

Basierend auf den unerwarteten Erfolgen der Kombination von Flüssigkeit und Strom in Getreide (Versuch 1) wurde ein in der Kartoffel gut eingeführtes Benetzungsmittel (Kantor, HL1) in Kombination mit dem Applizieren von Strom getestet und als weitere Variante eine leitfähigkeitssteigernde Salzlösung zu dem Benetzungsmittel hinzugesetzt (HL2). Dazu wurden die Abschnitte entsprechend des Versuchsplans zunächst mit den unterschiedlichen Flüssigkeiten (HL1, HL2) und nach sehr kurzer Einwirkzeit im Bereich von wenigen Sekunden mit Strom behandelt. Für die Kontrolle ohne Strom (Flüssigkeitskontrolle) wurden die entsprechenden Abschnitte nur mit der Flüssigkeit HL2 behandelt. Für die Behandlung mit dem Strom wurden drei verschiedene Fahrgeschwindigkeiten des Traktors, nämlich 2 km/h, 4 km/h und 6 km/h, eingesetzt, die zu drei verschiedenen nominellen Einträgen an elektrischer Energie führen. Die Flüssigkeitsaufwandmenge für das Auftragen der unterschiedlichen Flüssigkeiten betrug für einen Teil der Versuche 150 I/ha (nHL), während sie für einen anderen Teil der Versuche und für die Flüssigkeitskontrolle 300 I/ha (HL) betrug.

Es wurden Einzelbehandlungen und Doppelbehandlungen, jeweils mit der oben beschriebenen Kombination von Flüssigkeit und Strom, durchgeführt. Bei den Doppelbehandlungen fand die zweite Behandlung im Abstand von 1 Woche zu der ersten Behandlung statt. Es gab auch ein Versuchsteil, bei dem die zweite Behandlung statt einer Behandlung mit Flüssigkeit und Strom eine rein chemische Behandlung mit Shark (1,0 I/ha) war.

Als erste Flüssigkeit HL1 wurde in dem Versuch das zugelassene Additiv Kantor in einer Konzentration von 0,15% eingesetzt, da die Kartoffeln in den freien Markt gehen sollten. Kantor ist ein kommerziell erhältliches Produkt. Der Name ist der Eigenname des Handelsprodukts. Kantor basiert auf einer alkoxylierten Triglycerid-Technologie und ist als Zusatzstoff zur Wirkungsabsicherung von Pflanzenschutzmitteln auf dem Markt (Hersteller agroplanta GmbH & Co. KG, Zustorf, Deutschland). Kantor ist als flüssiges Wirkstoffkonzentrat formuliert und fungiert als Benetzungsmittel. Neben den alkoxylierten Triglyceriden weist Kantor 1-10% Essigsäure und 1-10% D-Glucopyranose, Oligomere, Decyloctylglycoside auf. Für die zweite Flüssigkeit HL2 wurde der HL1 Magnesiumsulfat (Magnesiumsulfat-Heptahydrat, auch als Epsomit bezeichnet, MgSO4*7H2O, Hersteller z.B. K+S KALI GmbH, Kassel, Deutschland) in einer Konzentration von 1 kg/100 L Flüssigkeit zugesetzt.

Es wurden komplett unbehandelte Versuchsparzellen als Kontrolle (unbehandelt; auch als Nullkontrolle bezeichnet) mitgeführt. Als weitere Kontrolle wurde eine rein chemische Behandlung der Pflanzen (Quick/Shark; auch als Quickdown/Shark oder als Positivkontrolle bezeichnet), das heißt ohne Flüssigkeit HL und ohne Strom, mitgeführt. Die rein chemische Behandlung (Sikkation) erfolgte mit Quickdown 0,8 I/ha + Toil 2,0 I/ha und sieben Tage später, also im Abstand von einer Woche, mit Shark 1,0 I/ha (Quickdown: 24,2 g/l Pyraflufen (Gew.-% 2,4), Belchim Crop Protection Deutschland GmbH, Burgdorf, Deutschland; Toil: 10% Kokos Diethanolamide, Cheminova Deutschland GmbH & Co. KG, Stade, Deutschland; Shark: 55.92 g/l Carfentrazone (60 g/l Ethylester), Belchim Crop Protection Deutschland GmbH, Burgdorf, Deutschland). Die Namen sind die Eigennamen der Handelsprodukte. Die Aufwandmengen der Substanzen und Wasser entsprechen der fachlichen Standardbehandlung zur chemischen Kartoffelsikkation und wurden so von einer Expertin für Kartoffelsikkation der Landwirtschaftskammer Rheinland festgelegt und durchgeführt.

Die Versuche mit den unterschiedlichen Flüssigkeiten fanden auf drei Bahnen nebeneinander statt. Nur die rein chemischen Kontrollbehandlungen und die Nullkontrolle lagen auf einer zusätzlichen vierten Bahn, die direkt an die dritte Bahn anschloss.

Aus Platz- und Aufwandsgründen konnten pro Behandlung jeweils nur zwei Replikate durchgeführt werden. Insgesamt wurden 41 Versuchsglieder (verschiedene Parzellenbehandlungen) in zwei Wiederholungen vorgenommen.

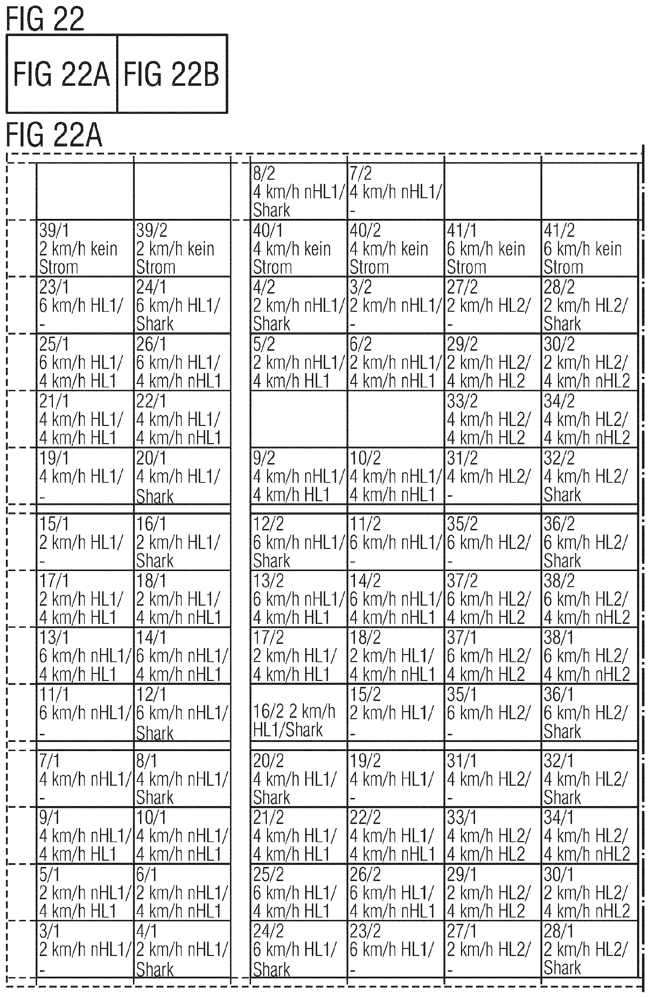

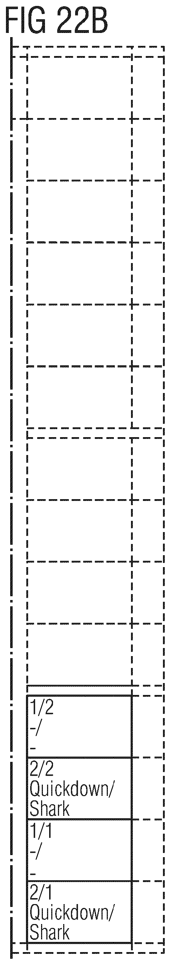

Figur 22 zeigt die Versuchsanordnung, das heißt die Anordnung der Versuchsglieder auf dem Feld. Die Parzellengröße war 3 x 10 m. HL1 und HL2 bezeichnen die unterschiedlichen Flüssigkeiten. nHL steht für die niedrige Flüssigkeitsaufwandmenge von 150 I/ha und HL für die hohe Flüssigkeitsaufwandmenge von 300 I/ha. Es wurden zwei Behandlungen im Abstand von 1 Woche durchgeführt (erste Behandlung/zweite Behandlung), wobei die zweite Behandlung auch eine rein chemische Behandlung sein konnte (Shark) oder, im Falle einer Einzelbehandlung, wegfiel (-). Die rein chemischen Kontrollbehandlungen (Quickdown/Shark) erfolgten auf einem Zusatzstreifen, auf dem auch die unbehandelten Kontrollen (-/-) angeordnet waren.

### Energieeintrag und Geschwindigkeit des Traktors:

Der Energieeintrag wird hier auch als Energieeinsatz bezeichnet. Der reale Energieeinsatz hängt neben der verfügbaren Gesamtleistung auch erheblich vom aktuellen Widerstand der Pflanzen und gegebenenfalls auch des Boden ab, da die Spannungsversorgungseinheiten nur zwischen 2000 und 5000 V mit voller Leistung arbeiten können. Dementsprechend kann der reale Energieeinsatz pro Hektar bei hohem Widerstand deutlich unter dem nominellen Energieeinsatz, gerechnet bei voller Leistung, liegen. Der reale Energieeinsatz kann insbesondere bei der zweiten Überfahrt, die eine Woche nach der ersten Überfahrt stattfand, niedriger liegen, wenn der Widerstand der teilvertrockneten Pflanzen so hoch ist, dass die Stromversorgung nicht mehr im Arbeitsbereich der Volllast (2500 - 5000 V) arbeiten kann. Dementsprechend wird in der Beschreibung des Versuchs auf die Geschwindigkeit Bezug genommen.

In Abhängigkeit von der Geschwindigkeit des Traktors werden beim Einsatz in Kartoffeln die folgenden nominellen Einträge an elektrischer Energie pro Hektar erzielt:

| | |
|---|---|
| 2 km/h: | 48 kWh/ha |
| 4 km/h: | 24 kWh/ha |
| 6 km/h: | 16 kWh/ha |

### Zielsetzung des Versuchs:

Der Versuch diente dem Vergleich von zwei unterschiedlichen den elektrischen Übergangswiderstand senkenden Medien (Flüssigkeiten) sowie von zwei unterschiedlichen Aufwandmengen einer Flüssigkeit, jeweils bei unterschiedlichen nominellen Einträgen an elektrischer Energie (unterschiedliche Geschwindigkeiten des Traktors).

### Versuchsauswertung:

Für die Versuchsauswertung wurden alle Parzellen 1 - 2 mal pro Woche einzeln fotografiert (jeder Damm einzeln in Längsrichtung 10 m, NIKON D7000 Auflösung 12 MP). Hier wurden nur die Daten drei Wochen bzw. 20 Tage nach der ersten Behandlung ausgewertet. Die 3-Wochenfrist resultiert aus dem generellen Terminierungsschema von Sikkationsbehandlungen.

Die Bilder der 10 m Parzellen wurden visuell ausgewertet. Dabei wurde jeweils eine Klassifizierung der Stängel in die Farbklassen grau, gelb und grün vorgenommen. Die Farbklasse grau enthält sowohl komplett vertrocknete/spröde Stängel als auch solche, die so braun und zähelastisch waren, dass eine vollständige Vertrocknung nur noch eine Frage der Zeit ohne Wiederaustriebsmöglichkeit war. Gelbe Stängel waren noch nicht komplett abgestorben, besaßen keine, grüne oder gelbe Blätter und konnten auch noch zum Wiederaustrieb führen. Grüne Stängel besaßen keine, gelbe oder grüne Blätter. In den Versuchsteilen, in denen Wiederaustrieb separat bonitiert wurde, bestand er aus kleinen Blättern (max. 2 cm Größe), die direkt aus den Stängeln hervorkamen. Ausgewertet wurden durchschnittlich 81 Stängel pro Parzelle, insgesamt 6643 Kartoffelstängel.

### Versuchsergebnisse:

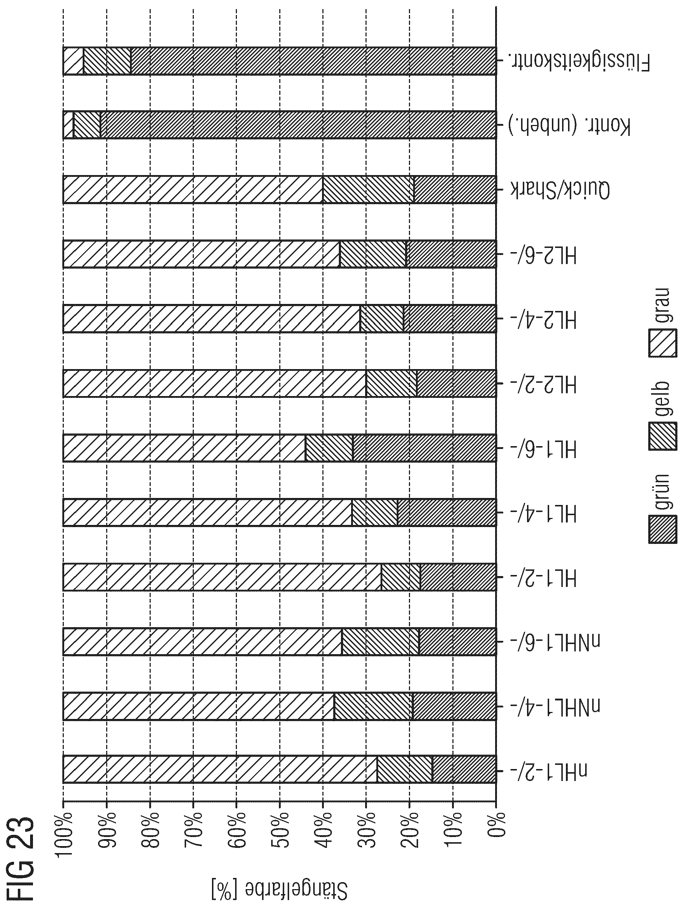

Figur 23 zeigt die Ergebnisse der Einzelbehandlung der Kartoffeln mit der Flüssigkeit HL1 oder HL2 sowie mit Strom. Die Figur zeigt den prozentualen Anteil der grünen, gelben und grauen Stängel 20 Tage nach der ersten crop.zone Behandlung. Bei der crop.zone Behandlung wurden die Feldabschnitte zunächst mit der Flüssigkeit HL1 oder HL2 und nach sehr kurzer Einwirkzeit im Bereich von wenigen Sekunden mit Strom behandelt. Verglichen werden die Flüssigkeiten HL1 und HL2 bei niedriger (nHL) und hoher (HL) Einsatzmenge (Flüssigkeitsaufwandmenge) bei einmaliger Anwendung der crop.zone Behandlung mit verschiedenen Geschwindigkeiten (2, 4 und 6 km/h, in der Benennung mit -2, -4 bzw. -6 gekennzeichnet) im Vergleich zur Positivkontrolle (Quick/Shark), zur Kontrolle ohne Behandlung (unbeh.) und zur Flüssigkeitskontrolle (Flüssigkeitskontr.).

Interessanterweise zeigte der Einsatz einer höheren Nennenergie pro ha bei 2 km/h (48 kWh/ha) unabhängig von der eingesetzten Flüssigkeit nur eine geringfügig bessere Austrocknung als 16 kWh/ha (6 km/h). Die höchste Wirksamkeit wurde bei 2 km/h für geringes Volumen (nHL1) und hohes Volumen inkl. Leitfähigkeitskomponente (HL2) gefunden. Die beste durchschnittliche Wirksamkeit für alle Geschwindigkeiten wurde mit HL2 erreicht. Die Verwendung einer elektrisch leitfähigen Komponente in der Flüssigkeit ist dementsprechend vorteilhaft.

Auch die rein chemische Doppelbehandlung (Quick/Shark) war nicht wirksamer als die einfache crop.zone Behandlung. Der festgestellte begrenzte Wirkungsgrad der rein chemischen Behandlung trotz des für die Substanzen optimalen Wetters im Versuchszeitraum (viel Sonne und Trockenheit) entspricht der Wirkungslücke, die nach dem Verbot von Reglone (Diquat) bzw. nach dessen Zulassungsende wegen Toxizität gegen sogenannte "Bystander" aufgetreten ist. Diese Wirkungslücke ist ein wichtiger Grund für den Bedarf an dem erfindungsgemäßen Verfahren.

Die einfache crop.zone Behandlung bei grünen Pflanzen schwer zu sikkierender Kartoffelsorten wie Challenger bei höherer Geschwindigkeit (6 km/h mit nur 16 kWh/ha elektrischer Energie) mit HL2 führt zu einer effektiven Öffnung des Kronendachs (ersetzt Reglone): Für ein besseres Sikkationsergebnis kann die crop.zone Behandlung in eine zweistufige Sikkation integriert werden. Eine zweistufige Sikkationsbehandlung entspricht auch der üblichen chemischen Doppelbehandlung und der damit verbundenen schonenden, schrittweisen Einleitung des Abreifeprozesses derartiger Kartoffelsorten.

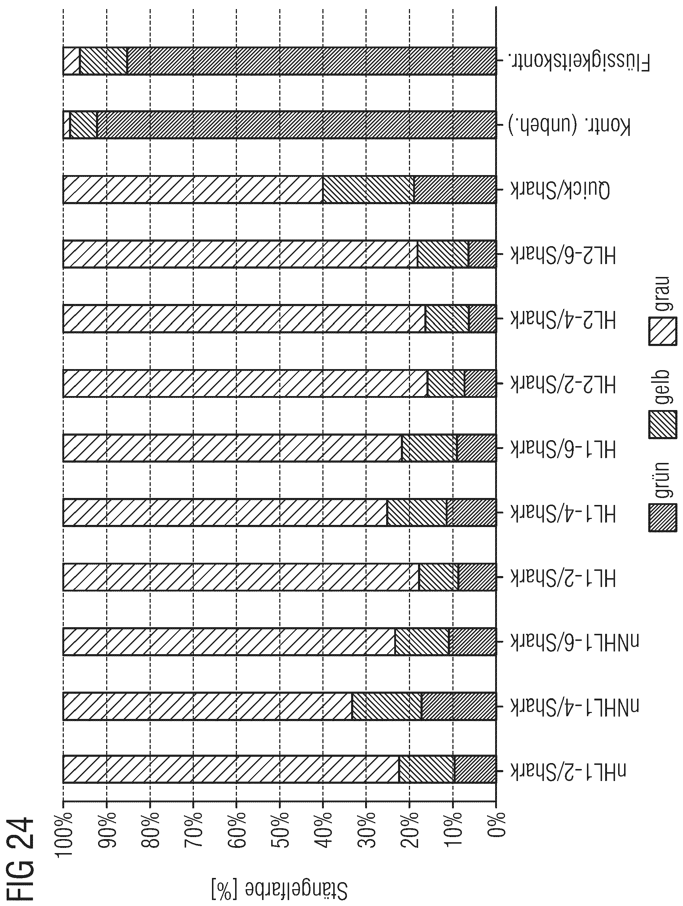

Figur 24 zeigt die Ergebnisse der Einzelbehandlung mit der Flüssigkeit HL1 oder HL2 sowie mit Strom In Kombination mit einer chemischen Zweitbehandlung. Die Figur zeigt den prozentualen Anteil der grünen, gelben und grauen Stängel 20 Tage nach der ersten crop.zone Behandlung. Bei der crop.zone Behandlung wurden die Feldabschnitte zunächst mit der Flüssigkeit HL1 oder HL2 und nach sehr kurzer Einwirkzeit im Bereich von wenigen Sekunden mit Strom behandelt. Verglichen werden die Flüssigkeiten HL1 und HL2 bei niedriger (nHL) und hoher (HL) Einsatzmenge (Flüssigkeitsaufwandmenge) bei einmaliger Anwendung der crop.zone Behandlung mit verschiedenen Geschwindigkeiten (2, 4 und 6 km/h, in der Benennung mit -2, -4 bzw. -6 gekennzeichnet) in Kombination mit Shark als chemischer Zweitbehandlung (Nachlage) im Vergleich zur Positivkontrolle (Quick/Shark), zur Kontrolle ohne Behandlung (unbeh.) und zur Flüssigkeitskontrolle (Flüssigkeitskontr.).

Die Ergebnisse zeigen, dass die Stängel im Falle der chemischen Zweitbehandlung etwa 10 - 20% besser ausgetrocknet (grau) wurden als nach einer einfachen Behandlung (Figur 23). Beide Behandlungen mit HL1 (niedriges und hohes Volumen der Flüssigkeit) zeigen aus unbekannten Gründen aber reproduzierbar ihre niedrigste Wirksamkeit bei 4 km/h, während HL2 bei hohem Volumen (niedriges Volumen nicht getestet) die höchste und nahezu konstante Wirksamkeit (höchste Menge an grauen Stängeln) bei allen drei Geschwindigkeiten zeigt.

Verglichen mit der rein chemischen Positivkontrolle (Quick/Shark) war die Wirksamkeit der crop.zone Behandlung etwa 30% höher. Dies unterstreicht die hohe Wirksamkeit der crop.zone Behandlung im Vergleich zu Quickdown, welches Reglone insbesondere bei der Sikkation von noch vollständig grünen Kartoffeln, ersetzt. Die crop.zone Behandlung ist als Erstbehandlung deutlich effizienter als Quickdown. Die crop.zone Behandlung bei höherer Geschwindigkeit (6 km/h, 16 kWh/ha) unter Verwendung einer gut leitenden Flüssigkeit in Kombination mit einer Zweitbehandlung mit Shark führte bereits zu einer effektiven Sikkation, die besser als die rein chemische Doppelbehandlung (Quick/Shark) ist.

Die optische Bonitur ergab, dass die verbliebenen grünen und die Mehrheit der gelben Stängel eine Orientierung quer zur Fahrtrichtung haben und vornehmlich in die Täler zwischen den Dämmen hinunterreichen. Dementsprechend ist die Erreichbarkeit durch die Applikatoren der Grund für den Restbestand an nicht vertrockneten Stängeln.

Eine dritte Behandlung oder ein späterer Zeitpunkt der zweiten Behandlung kann vorteilhaft sein, um die Stängel vollständig auszutrocknen und das Nachwachsen zu minimieren, insbesondere wenn die Kartoffeln bei der ersten Behandlung noch vollständig grün waren.

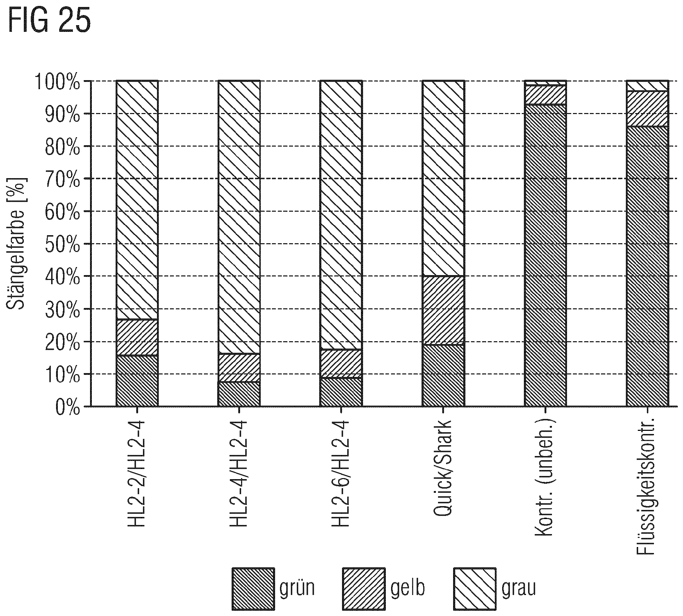

Figur 25 zeigt die Ergebnisse der Doppelbehandlung, jeweils mit der Flüssigkeit HL2 sowie mit Strom. Die Figur zeigt den prozentualen Anteil der grünen, gelben und grauen Stängel 20 Tage nach der ersten crop.zone Behandlung. Bei der crop.zone Behandlung wurden die Feldabschnitte zunächst mit der Flüssigkeit HL2 und nach sehr kurzer Einwirkzeit im Bereich von wenigen Sekunden mit Strom behandelt. Verglichen werden die verschiedenen Geschwindigkeiten (2, 4 und 6 km/h, in der Benennung mit -2, -4 bzw. -6 gekennzeichnet) bei der Erstbehandlung und einer konstanten Geschwindigkeit von 4 km/h bei der Zweitbehandlung im Vergleich zur Positivkontrolle (Quick/Shark), zur Kontrolle ohne Behandlung (unbeh.) und zur Flüssigkeitskontrolle (Flüssigkeitskontr.).

Die Ergebnisse zeigen, dass die Stängel durch die Doppelbehandlung mit crop.zone etwa 10% besser ausgetrocknet (grau) wurden als nach einer einfachen crop.zone Behandlung.

Interessanterweise zeigte die Verwendung einer höheren Nennenergie pro ha bei 2 km/h (HL2-2, 48 kWh/ha) keine bessere Austrocknung als die Verwendung von 16 kWh/ha (HL2-6). Eine höhere Geschwindigkeit (6 km/h) anstelle von 2 km/h verringerte die Wirksamkeit nicht.

Im Ergebnis führte die crop.zone Behandlung selbst bei hoher Geschwindigkeit (6 km/h) der Erstbehandlung in Kombination mit einer zweiten crop.zone Behandlung zu einer wirksamen Sikkation. Somit ermöglicht die crop.zone Behandlung eine völlig nicht-chemische Behandlung, um eine qualitativ hochwertige und gezielte biologische Kartoffelproduktion zu ermöglichen.

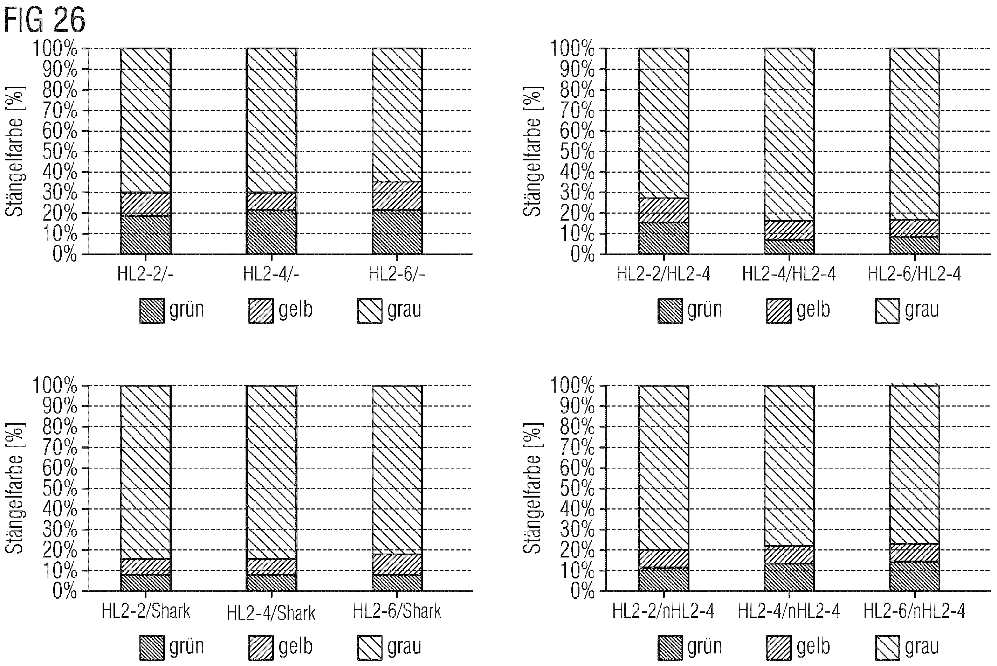

Figur 26 zeigt die Ergebnisse von vier verschiedenen Behandlungsmustern. Die Figur zeigt den prozentualen Anteil der grünen, gelben und grauen Stängel 20 Tage nach der ersten crop.zone Behandlung. Bei der crop.zone Behandlung wurden die Feldabschnitte zunächst mit der Flüssigkeit HL2 und nach sehr kurzer Einwirkzeit im Bereich von wenigen Sekunden mit Strom behandelt. Verglichen werden die verschiedenen Geschwindigkeiten (2, 4 und 6 km/h, in der Benennung mit -2, -4 bzw. -6 gekennzeichnet) bei der Erstbehandlung bei den vier verschiedenen Behandlungsmustern. Oben links: einmalige crop.zone Behandlung mit HL2. Oben rechts: doppelte crop.zone Behandlung mit HL2 und konstanten 4 km/h bei der Zweitbehandlung mit hoher Flüssigkeitsaufwandmenge. Unten links: crop.zone Behandlung mit HL2 in Kombination mit Shark als Zweitbehandlung. Unten rechts: doppelte crop.zone Behandlung mit HL2 und konstanten 4 km/h bei der Zweitbehandlung mit niedriger Flüssigkeitsaufwandmenge. Da es bei dieser Ergebnisdarstellung nur um die geringe Abhängigkeit der Sikkation von der Geschwindigkeit bzw. der eingesetzten Energiemenge (Faktor 3, Unterschied zwischen 2 km/h und 6 km/h) geht, wurden Kontrollen hier weggelassen.

Trotz Halbierung der Energie von 2 km/h auf 4 km/h zeigen nur zwei Behandlungen mit niedrigem Volumen der Flüssigkeit (nHL2) in der Zweitbehandlung eine etwas geringere Wirksamkeit bei 4 km/h, während hohes Volumen der Flüssigkeit sogar eine höhere Wirksamkeit zeigt. 6 km/h zeigten entweder keine Reduktion der Effektivität (doppelte Behandlung mit hohem Volumen) oder nur eine leichte Reduktion von maximal 5% bei den anderen Behandlungen.

Zusammenfassend hat die crop.zone Behandlung ein hohes Potenzial für höhere Geschwindigkeiten (6 km/h und mehr) und geringere Energie, um angemessene Trocknungseffekte zu erzielen. Dies gilt unabhängig davon, wie nach der physiologisch wichtigen Öffnung des Blattdaches im ersten Behandlungsschritt die zweite Behandlung umgesetzt wird (crop.zone oder chemisch).

Die Ergebnisse von Versuch 2 zeigen insgesamt, dass der Zusatz von leitfähigkeitssteigernden Komponenten wie Magnesiumsulfat zu einem Benetzungsmittel zu einer nochmaligen Verbesserung der Sikkation führt. Durch den Einsatz des Benetzungsmittels und von Magnesiumsulfat in dem den elektrischen Übergangswiderstand senkenden Medium wurden die konstanteren und besseren Ergebnisse mit einer geringeren Geschwindigkeitsabhängigkeit der Wirkung des Mediums erhalten.

Die Kombination aus einer Behandlung mit einem den elektrischen Übergangswiderstand senkenden Medium und einer Behandlung mit Strom ermöglicht eine erhebliche Reduktion des Energieaufwandes gegenüber einer Behandlung nur mit Strom. Dies ist technologisch ein entscheidender Durchbruch, da die elektrisch verfügbaren Traktorleistungen, insbesondere bei der Nutzung von schmaler Hackbereifung auf Kartoffelfeldern, erheblich begrenzt sind und selbst bei der Nutzung von Fahrgassen selten mehr als 120 kW Strom verfügbar sind. Dementsprechend erlaubt nur eine Auftragsmenge im Bereich von 30 - 50 kWh/ha eine ausreichende Arbeitsbreite der Geräte (aktuell 6 m, in Zukunft 12 m oder mehr) und eine agronomisch sinnvolle Flächenleistung von ca. 6 - 9 ha/h bei einer Geschwindigkeit im Bereich von 6 - 8 km/h.

Im Vergleich dazu arbeiten Krautschläger (Versuch 3) in der Regel bei 3 m Arbeitsbreite mit Geschwindigkeiten von 8 - 12 km/h, was zu Flächenleistungen von 2,4 - 3,6 ha/h und Energiemengen im Bereich von ca. 8 - 14 kWh/ha führt.

Beim Versuch in Getreide (Versuch 1) wurde eine Dosis-Wirkung-Beziehung der crop.zone Behandlung in Anhängigkeit der eingebrachten Energiemenge (Dosis) beobachtet. Bei den Versuchen in Kartoffeln wurde im Unterschied dazu nur eine geringe Dosisabhängigkeit der Sikkation (Abhängigkeit der Sickation von der Geschwindigkeit bzw. der eingesetzten Energiemenge) der crop.zone Behandlung beobachtet. Das lag daran, dass die Erfinder in den Kartoffelversuchen die eingesetzte Energiemenge hierfür nicht ausreichend abgesenkt haben (also keine höheren Geschwindigkeiten des Traktors wie beispielsweise 8 oder 10 km/h getestet haben). Grund ist, dass die Erfinder nicht erwartet haben, dass derart ausgeprägte Sikkationseffekte schon bei einer Geschwindigkeit von 6 km/h sichtbar nach drei Wochen auftreten würden.

### Versuch 3: Behandlung von Kartoffeln in Kombination mit Krautschlagen

Die Angaben zu den Eigenschaften des Versuchsfeldes, zum Versuchsdesign sowie zu Energieeintrag und Geschwindigkeit des Traktors von Versuch 2 gelten bis auf einige Abweichungen im Versuchsdesign auch für den Versuch 3. Im Folgenden werden lediglich die Abweichungen im Versuchsdesign beschrieben.

Für den Versuch wurde auf dem gleichen Feld ein Behandlungsstreifen mit 300 m Länge genutzt, auf dem jeweils ca. 100 m lange Abschnitte mit drei unterschiedlichen Geschwindigkeiten und crop.zone Behandlung unter Verwendung der Flüssigkeit HL2 und einer Flüssigkeitsaufwandmenge von 300 I/ha befahren wurden. Bei der crop.zone Behandlung wurden die Abschnitte zunächst mit der Flüssigkeit HL2 und nach sehr kurzer Einwirkzeit im Bereich von wenigen Sekunden mit Strom behandelt. Für die Behandlung mit dem Strom wurden drei verschiedene Fahrgeschwindigkeiten des Traktors, nämlich 2 km/h, 4 km/h und 6 km/h, eingesetzt, die zu drei verschiedenen nominellen Einträgen an elektrischer Energie führen (siehe Versuch 2). Das Krautschlagen erfolgte durch den Landwirt mit einem Standard-Krautschläger mit 3 m Arbeitsbreite und ca. 10 - 15 km/h Arbeitsgeschwindigkeit.

Für den kombinierten Behandlungsversuch wurde der Behandlungsstreifen mit unterschiedlicher Dammapplikation jeweils im Abstand von 3 bis 4 Tagen mit dem Traktor, der die crop.zone Behandlung ausführt (siehe Versuch 2), mit einem Krautschläger (zwei Dämme versetzt) und wiederum einen Damm versetzt mit dem Traktor, der die crop.zone Behandlung ausführt, zum zweiten Mal befahren. Dies führt zu den folgenden vier Behandlungskombinationen, wobei CZ für die crop.zone Behandlung und HT für das Krautschlagen (englisch "haulm topping") steht:
- CZ/CZ: (Doppelbehandlung mit crop.zone),
- CZ/HT/CZ: (Krautschlagen zwischen zwei crop.zone Behandlungen),
- CZ/HT: (Krautschlagen nach einer crop.zone Behandlung), und
- HT: (nur Krautschlagen).

Es führt zusätzlich zu einer Zwischenreihe, die vor dem Krautschlagen nicht selbst, aber deren Nachbarreihe mit crop.zone behandelt wurde und die wegen überhängender Halme auch eine Teilbehandlung erfahren hat:
(CZ)/HT (Krautschlagen nach einer crop.zone Teilbehandlung).

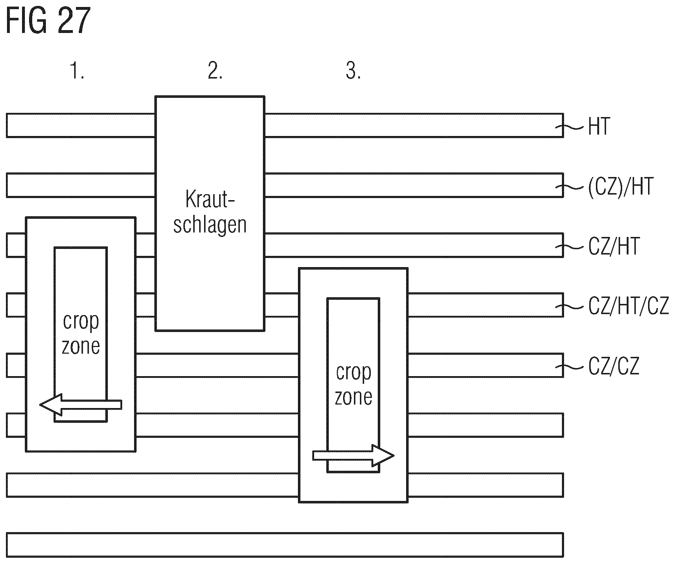

Figur 27 zeigt die soeben beschriebene Versuchsanordnung.

### Zielsetzung des Versuchs:

Der Versuch diente dem Vergleich von vier bzw. fünf unterschiedlichen Behandlungskombinationen, jeweils bei unterschiedlichen nominellen Einträgen an elektrischer Energie (unterschiedliche Geschwindigkeiten des Traktors).

### Versuchsauswertung:

Die Versuchsauswertung erfolgte wie für Versuch 2 beschrieben. Durch visuelle Klassifizierung der Stängel (grau, gelb, grün, Wiederaustrieb (aus grünen oder gelben Stängeln)) wurden hier jeweils die Stängel auf 20 m langen Teilstücken (211 - 287 Stängel pro Probe, insgesamt 3807 Kartoffelstängel) auf 15 Teilstücken ausgewertet.

### Versuchsergebnisse:

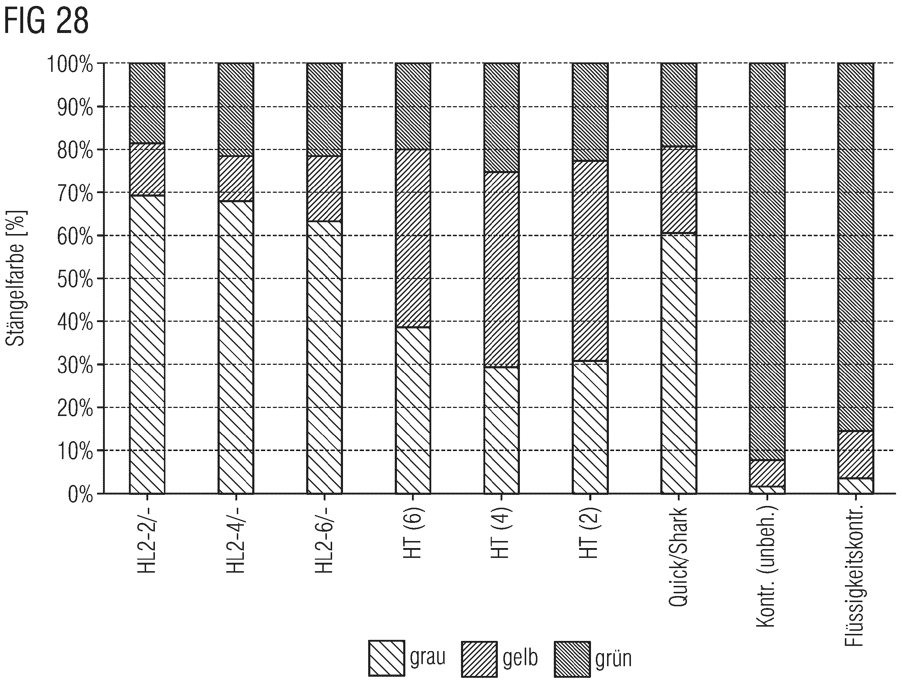

Figur 28 zeigt die Ergebnisse der crop.zone Behandlung von Kartoffeln im Vergleich zu Krautschlagen. Die Figur zeigt den prozentualen Anteil der grünen und wiederausgeschlagenen Halme sowie der gelben und grauen Stängel 20 Tage nach der ersten crop.zone Behandlung. Bei der crop.zone Behandlung (CZ) wurden die Feldabschnitte zunächst mit der Flüssigkeit HL2 und nach sehr kurzer Einwirkzeit im Bereich von wenigen Sekunden mit Strom behandelt. Es wurden die Daten der einmaligen crop.zone Behandlung mit drei verschiedenen Geschwindigkeiten (2, 4 und 6 km/h, in der Benennung mit -2, -4 bzw. -6 gekennzeichnet) und der alleinigen Krautschlagvarianten (HT) in drei Replikaten (2, 4, 6) der Positivkontrollen (Quick/Shark), der Kontrolle ohne Behandlung (unbeh.) und der Flüssigkeitskontrolle (Flüssigkeitskontr.) gegenübergestellt. Das alleinige Krautschlagen (HT) wurde parallel zu den crop.zone Behandlungen in dreifacher Wiederholung auf Kartoffeldämmen auf einer kompletten Feldlänge (300 m) parallel dazu bewertet, wobei die Wiederholungen nur den unterschiedlichen Geschwindigkeiten analog benannt wurden ((2), (4), (6)).

Der Hauptunterschied zwischen den Wiederholungen des Krautschlagens war der höhere Prozentsatz des Wiederausschlages aus gelben und grünen Stängel (bis zu 18% in Wiederholung (4)), die in der Grafik nicht dargestellt sind, da der Wiederausschlag bei der crop.zone Behandlung nicht separat bewertet wurde.

Alle Einzelbehandlungen und die rein chemische Doppelbehandlung zeigten nach drei Wochen eine verbleibende Anzahl grüner Stängel im Bereich von 15 - 25%. Während Krautschlagen nie mehr als 40% der getrockneten grauen Stängel aufwies, zeigte die einzelne crop.zone Behandlung bereits 60 - 70% graue Stängel. Die rein chemische Doppelbehandlung zeigte 19% grüne Stängel und 60% graue Stängel und damit eine Wirkung unterhalb der einmaligen crop.zone Behandlung, was ein Ausdruck für die nur noch begrenzte Wirkung der verbliebenen chemischen Sikkationswirkstoffe auch in optimalen Jahren mit viel Sonnenschein darstellt.

Die einmalige Behandlung mit Krautschlagen oder crop.zone reichte nicht aus, um kräftige grüne Kartoffelpflanzen auszutrocknen. Krautschlägerei allein zeigte selbst in dem recht trockenen Jahr der Versuchsdurchführung die geringste Austrocknung der Stängel. Offene Stängelenden nach dem Krautschlagen und das durch das Krautschlagen ausgelöste Nachwachsen selbst in dem recht trockenen Jahr birgt ein zusätzliches Risiko für Virusinfektionen durch Blattläusen und für andere Krankheiten.

Basierend auf diesen Ergebnissen ist für die Öffnung des Blattdaches die crop.zone Behandlung effektiver als Krautschlagen. Eine Doppelbehandlung mit crop.zone ohne Krautschläger bzw. eine Kombination der crop.zone Behandlung mit einer chemischen Zweitbehandlung ist für wüchsige Sorten gegenüber dem Einsatz von Krautschlägern die bessere Wahl.

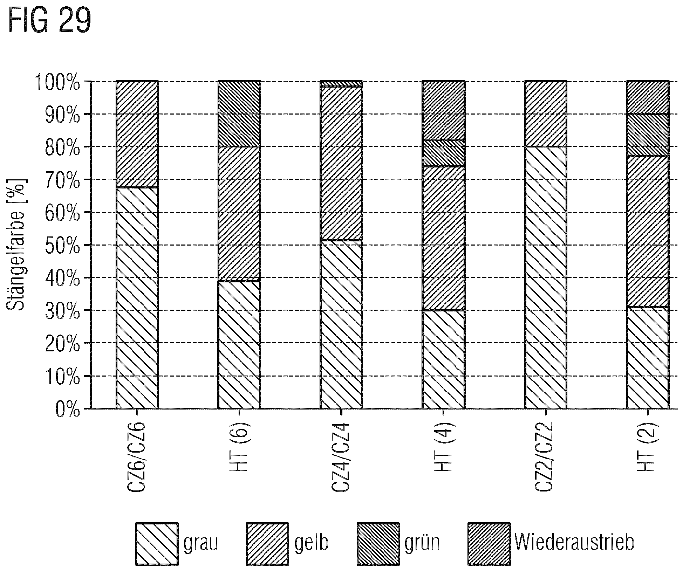

Figur 29 zeigt die Ergebnisse der crop.zone Doppelbehandlung im Vergleich zu Krautschlagen. Die Figur zeigt den prozentualen Anteil der grünen und wiederausgeschlagenen (Wiederaustrieb) Halme sowie der gelben und grauen Stängel 20 Tage nach der ersten crop.zone Behandlung. Bei der crop.zone Behandlung (CZ) wurden die Feldabschnitte zunächst mit der Flüssigkeit HL2 und nach sehr kurzer Einwirkzeit im Bereich von wenigen Sekunden mit Strom behandelt. Es wurden die Daten der zweifachen crop.zone Behandlung mit drei verschiedenen Geschwindigkeiten (2, 4 und 6 km/h, in der Benennung mit 2, 4 bzw. 6 gekennzeichnet) aus Versuch 2 (gleiche Fahrtrichtung) den Daten des Krautschlagversuchs (HT) (crop.zone Behandlung in entgegengesetzter Fahrtrichtung) gegenübergestellt.

Während in der einen Versuchsreihe die Fahrtrichtung der zweiten Behandlung entgegengesetzt zur ersten Behandlung war, verlief die Fahrtrichtung in der anderen Versuchsreihe in dieselbe Richtung wie die erste Behandlung. Während im Versuch mit der entgegengesetzten Fahrtrichtung die Geschwindigkeit für die erste und die zweite Fahrt immer ähnlich war (2, 4 oder 6 km/h), variierte im Versuch mit der gleichen Fahrtrichtung nur die Geschwindigkeit für die erste Fahrt und die zweite Fahrt war immer bei 4 km/h.

Der Prozentsatz der grauen Stängel war bei gleicher Fahrtrichtung (mehr doppelte Behandlung der gleichen Stängel) höher oder ähnlich hoch gegenüber der Befahrung in entgegengesetzter Richtung. Die entgegengesetzte Fahrtrichtung zeigte dagegen fast keine verbleibenden grünen oder nachwachsenden Stängel, da alle Stängel mindestens einmal elektrisch durchströmt wurden. Dies führte zu einer Dosierungsverteilung, die nur bei 2 km/h (der höchsten Energiemenge, 48 kWh/ha) dazu führt, dass die Dosierung ausreicht, um ca. 80% der Stängel grau werden zu lassen. Bei höheren Geschwindigkeiten blieben mehr gelbe Stängel übrig, die im Versuchszeitraum noch nicht ganz vertrocknet waren, aber auch nicht relevant wiederaustrieben. Der höchste Anteil an gelben Stängeln bei 4 km/h wird darauf zurückgeführt, dass die Boden- oder Mikroklimaverhältnisse in der Feldmitte hier noch mehr Wasser zur Verfügung gestellt haben, was zu einer langsameren Abtrocknung führte. Das Phänomen wurde noch verstärkt beim reinen Krautschlagversuch über die gesamte Feldlänge beobachtet.

Als Ergebnis bleibt festzuhalten, dass die sichere Berührung möglichst vieler Stängel durch die Applikationseinrichtung auch beim zusätzlichen Einsatz von Flüssigkeiten wichtig ist und eine entgegengesetzte Befahrung bei der Zweitbehandlung den Sikkationserfolg weiter verbessert.

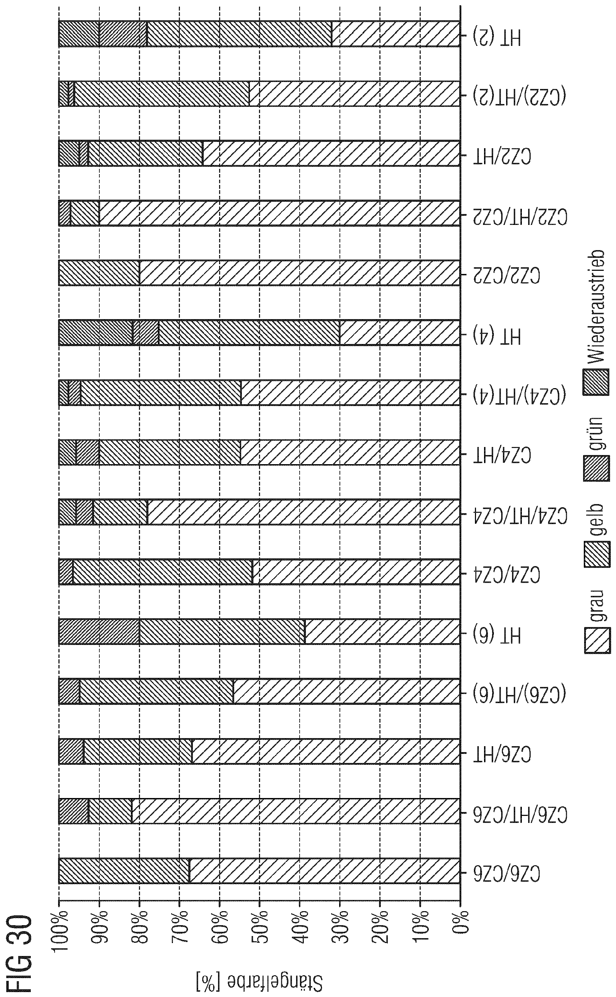

Figur 30 zeigt die Ergebnisse der crop.zone Behandlung von Kartoffeln in Kombination mit Krautschlagen. Die Figur zeigt den prozentualen Anteil der grünen, gelben und grauen Stängel und den Wiederausschlag als grüne oder gelbe Halme (Wiederaustrieb) 20 Tage nach der ersten crop.zone Behandlung. Die Anordnung der Balken entspricht innerhalb der Geschwindigkeitsgruppen der räumlichen Anordnung im Feld: crop.zone Behandlung mit 6 km/h (linke Säulen), 4 km/h (mittlere Säulen) und 2 km/h (rechte Säulen). Die Abkürzungen bedeuten: CZ = crop.zone Behandlung, (CZ) = durch crop.zone teilbehandelte Nebenbahn wegen der Ausladung der Kartoffelpflanzen, HT = Krautschlagen als Standardmethode (Zahl nur als Positionsbezeichnung der Nachbarschaft). Die Doppelbehandlung mit crop.zone (CZ/CZ) stellt den besten Kompromiss zwischen hohem Anteil grauer Stängel und gleichzeitig der Minimierung von Wiederaustrieb dar.

Die Kombination aus doppelter crop.zone Behandlung mit dazwischengeschaltetem Krautschlagen (CZ/HT/CZ) lieferte bei allen Geschwindigkeiten den höchsten Anteil an grauen Stängeln. Gleichzeitig hinterließ das Krautschlagen in jeglicher Verfahrenskombination einen erheblichen Anteil an grünen Stängeln und führte in Abhängigkeit von der Bodenfeuchte oder anderen bodenbedingten Faktoren zu Wiederaustrieb an bis zu 18% der Stängel. Selbst die doppelte crop.zone Behandlung mit dazwischengeschaltetem Krautschlagen konnte den Wiederausschlag nicht vollständig verhindern, obwohl dieser für virale Infektionen durch Blattläuse kritisch ist. Eine Kombination aus einfacher crop.zone-Behandlung mit anschließendem Krautschlagen (CZ/HT) führte bei allen Geschwindigkeiten zu mehr grünen Restblättern und Wiederaustrieb als eine doppelte crop.zone Behandlung. Interessant bei dem Versuch ist die Beeinflussung von Nachbarreihen durch die crop.zone Behandlung. Da die Kartoffelpflanzen weit ausladend bis in die Nachbarreihe hineinragen, sieht man auch in der nur krautgeschlagenen Reihe ((CZ)/HT) neben der crop.zone behandelten Reihe (CZ/HT) bei allen Fahrtgeschwindigkeiten eine Wirkung, die deutlich oberhalb der Wirkung des Krautschlages allein liegt.

Insgesamt zeigen die Ergebnisse von Versuch 3, dass selbst in einem trockenen Jahr eine doppelte crop.zone Behandlung (CZ/CZ) die effektivste Sikkationsmethode im Vergleich zum Krautschlagen und im Vergleich zu Kombinationen der beiden Verfahren ist, da hier ein relativ hoher Anteil an grauen Stängeln erreicht und gleichzeitig der besonders unerwünschte Wiederaustrieb minimiert wurde. Das Fahren mit 6 km/h und jeweils nominell 16 kWh/h garantiert eine hohe Flächenleistung und einen niedrigen Energiebedarf.

Krautschlagen führt zu keinerlei relevanten Sikkationsvorteilen und erscheint nur sinnvoll, wenn der Landwirt durch den Wiederausschlag den Stärkegehalt der Kartoffeln senken will. Für feuchtere Jahre ist ein noch stärkerer Wiederaustrieb zu erwarten, was zu erheblichen chemischen Zweitbehandlungen nach dem Krautschlagen (inklusive Insektizidbehandlung) führen kann bzw. auch ggf. eine Drittbehandlung mit crop.zone oder eine chemische Drittbehandlung erforderlich machen kann.

Das zusätzliche Krautschlagen (CZ7HT/CZ), das auf Platz 2 rangiert, kann darüber hinaus viel mehr grüne Kartoffeln produzieren, da die Arbeitsbreite selten mehr als 3 m beträgt und dementsprechend viele Dämme beschädigt oder auch Kartoffeln oberflächlich freigelegt werden (crop.zone 6 m oder künftig 12 m oder mehr). Kurz geschnittene Stängel sind eine zusätzliche Quelle für das Auftreten von Virus- und Pilzinfektionen, und es könnte eine weitere chemische Behandlung erforderlich sein, um diese Risiken zu minimieren.

### Bezugszeichenliste

- 1: Vorrichtung
- 10: erstes Modul
- 11: Düse
- 11a: Sprühdüse
- 11b: Manteldüse
- 11c: angesaugte Gase
- 12: Abstreifer
- 121: Abstreifersegment
- 122: Untersegment
- 13: erste Trägerkonstruktion
- 14: Flüssigkeitsbehälter
- 15: übergangswiderstandsenkendes Medium
- 16: Sensoren
- 161: optische Sensoren
- 162: Bewegungssensoren
- 17: nichtselektive Herbizide
- 18: Dosierelement
- 20: zweites Modul
- 21: elektrischer Applikator
- 211: Applikatorsegment
- 212: unbeheiztes Kontaktsegment für kleine Pflanzen
- 22: erste Applikatorreihe
- 23: zweite Applikatorreihe
- 24: zweite Trägerkonstruktion
- 25: Stützrad
- 26: Sicherheitsabdeckung
- 27: Halterung
- 29: Scharnier
- 30: Trägerfahrzeug
- 31: Zapfwelle
- 32: Generator
- 33: Transformations- und Kontrolleinheit
- 34: vorlaufende Einrichtung
- 35: nachlaufende Einrichtung
- 36: Abgasleitungsrohr
- 40: Pflanze
- 41: Blatt
- 42: Wurzel
- 43: Stiel
- 44: Boden
- 51: Draht
- 52: Schaum
- 53: Sternradapplikator
- 60: Applikatorendstücke
- 61: Erdungsscheibe
- 62: Messgerät
- 70: Schutzscheibe
- 71: isolierende Schutzscheibe
- 72: Borsten

## Patentansprüche

1. Vorrichtung (1) zum Applizieren von elektrischem Strom auf Pflanzen (40), umfassend mindestens zwei Module, wobei
ein erstes Modul (10) mindestens eine Auftragseinrichtung zum Auftragen eines den elektrischen Übergangswiderstand senkenden Mediums (15) auf Pflanzen (40) umfasst, und
ein zweites Modul (20) mindestens eine Applikationseinrichtung (21) zum Applizieren von elektrischem Strom auf Pflanzen (40) umfasst, wobei im Bereich des ersten Moduls (10) und/oder des zweiten Moduls (20) jeweils mindestens ein Sensorsystem angeordnet ist, das einen oder mehrere Sensoren (16) ausgewählt aus der Gruppe bestehend aus optischen Sensoren (161), Lidar, Höhensensoren, Bewegungssensoren (162), thermischen Sensoren, Strommesssensoren, und Sensoren, die zum Erfassen von mechanischen Spannungen ausgebildet sind, aufweist
**dadurch gekennzeichnet, dass** das mindestens eine Sensorsystem für eine bewuchsgesteuerte Auftragung des den elektrischen Übergangswiderstand senkenden Mediums (15) ausgebildet ist.

2. Vorrichtung (1) nach Anspruch 1, bei der die Auftragseinrichtung mit einer Wärmequelle verbunden ist.

3. Vorrichtung (1) nach einem der vorherigen Ansprüche, bei der die Auftragseinrichtung zum Dosieren des übergangswiderstandsenkenden Mediums (15) ausgebildet ist.

4. Vorrichtung (1) nach einem der vorherigen Ansprüche, bei der die Auftragseinrichtung in Form einer Düse (11) ausgebildet ist.

5. Vorrichtung (1) nach Anspruch 4, bei der die Düse (11) als Mantelstromdüse ausgebildet ist.

6. Vorrichtung (1) nach Anspruch 4 oder 5, bei der die Auftragseinrichtung beweglich angeordnet ist.

7. Vorrichtung (1) nach einem der vorherigen Ansprüche, bei der die Auftragseinrichtung als Abstreifer (12) ausgebildet ist.

8. Vorrichtung (1) nach einem der vorherigen Ansprüche, bei der die Auftragseinrichtung mit einer Hochspannungsquelle verbunden ist.

9. Vorrichtung nach einem der vorherigen Ansprüche, bei der die Auftragseinrichtung derart angeordnet ist, dass das übergangswiderstandsenkende Medium (15) direkt auf die Applikationseinrichtung (21) aufgetragen werden kann.

10. Vorrichtung (1) nach einem der vorherigen Ansprüche, bei der die Applikationseinrichtung (21) mit einer Wärmequelle verbunden ist.

11. Vorrichtung (1) nach einem der vorherigen Ansprüche, bei der die Applikationseinrichtung (21) am in Fahrtrichtung hinteren Ende ein Übergangselement mit graduell oder gestuft steigendem Widerstand (60) aufweist.

12. Vorrichtung (1) nach einem der vorherigen Ansprüche, bei der die Applikationseinrichtung (21) ausgebildet ist, zusätzlich zur Fahrtbewegung eine Eigenbewegung in, gegen oder quer zur Fahrtbewegung auszuführen.

13. Vorrichtung (1) nach einem der vorherigen Ansprüche, bei der das zweite Modul (20) mindestens eine metallische Schutzscheibe (70) mit einer seitlichen, randfreien elektrischen Isolierung (71) aufweist.

14. Fahrzeug (30) mit einer Vorrichtung (1) gemäß einem der Ansprüche 1 - 13.

15. Verfahren zum Applizieren von elektrischem Strom auf Pflanzen (40) zum Ausüben einer herbiziden Wirkung mittels einer Vorrichtung gemäß einem der Ansprüche 1 - 13, mit den Schritten:
- gezieltes Auftragen eines den elektrischen Übergangswiderstand senkenden Mediums (15) auf Pflanzen (40),
- Applizieren von elektrischem Strom auf die von dem Medium (15) benetzten Pflanzen (40),
**dadurch gekennzeichnet, dass** das Auftragen des den elektrischen Übergangswiderstand senkenden Mediums (15) durch das mindestens eine Sensorsystem bewuchsgesteuert erfolgt.

16. Verfahren nach Anspruch 15, wobei das übergangswiderstandsenkende Medium (15) ausgewählt wird aus der Gruppe bestehend aus einer wässrigen Flüssigkeit, einem Öl, einer viskosen Flüssigkeit, einer hochkonzentrierten Lösung, einer thixotropen Flüssigkeit, einer Suspension, einer Emulsion, einem Feststoff und einem Schaum.

17. Verfahren nach Anspruch 15 oder 16, wobei die Menge des eingesetzten übergangswiderstandsenkenden Mediums (15) in Abhängigkeit von der Leitfähigkeit von Pflanzen (40) und Boden (44) im Bereich der Auftragseinrichtung (11, 12) und/oder Applikationseinrichtung (21) gesteuert wird.

18. Verfahren nach einem der Ansprüche 15 - 17, wobei das übergangswiderstandsenkende Medium (15), die Auftragseinrichtung (11, 12) und/oder die Applikationseinrichtung (21) bis maximal zum Hauptsiedepunkt des übergangswiderstandsenkenden Mediums (15) erwärmt werden.

19. Verfahren nach einem der Ansprüche 15 - 18, wobei das übergangswiderstandsenkende Medium (15) elektrisch aufgeladen wird.

20. Verfahren nach einem der Ansprüche 15 - 19, wobei die Pflanzen (40) mechanisch vorkonditioniert und/oder nachbehandelt werden.

## Claims

1. Device (1) for applying electrical current to plants (40), comprising at least two modules, a first module (10) comprising at least one applying device for applying an electrical-contact-resistance-lowering medium (15) onto plants (40), and a second module (20) comprising at least one application device (21) for applying electrical current to plants (40), wherein at least one sensor system is arranged in the region of the first module (10) and/or the second module (20), respectively, which sensor system has one or more sensors (16) selected from the group consisting of optical sensors (161), lidar, height sensors, movement sensors (162), thermal sensors, current measurement sensors, and sensors designed to detect mechanical stresses, **characterized in that** the at least one sensor system is designed for a growth-controlled application of the electrical-contact-resistance-lowering medium (15).

2. Device (1) according to claim 1, wherein the applying device is connected to a heat source.

3. Device (1) according to any of the preceding claims, wherein the applying device is designed to meter the contact-resistance-lowering medium (15).

4. Device (1) according to any of the preceding claims, wherein the applying device is designed in the form of a nozzle (11).

5. Device (1) according to claim 4, wherein the nozzle (11) is designed as a sheath flow nozzle.

6. Device (1) according to claim 4 or claim 5, wherein the applying device is movably arranged.

7. Device (1) according to any of the preceding claims, wherein the applying device is designed as a deflector (12).

8. Device (1) according to any of the preceding claims, wherein the applying device is connected to a high voltage source.

9. Device according to any of the preceding claims, wherein the applying device is arranged such that the contact-resistance-lowering medium (15) can be applied directly to the application device (21).

10. Device (1) according to any of the preceding claims, wherein the application device (21) is connected to a heat source.

11. Device (1) according to any of the preceding claims, wherein the application device (21) has, at the end which is at the rear in the direction of travel, a contact element having gradually or incrementally increasing resistance (60).

12. Device (1) according to any of the preceding claims, wherein, in addition to the travel movement, the application device (21) is designed to perform an autonomous movement in, counter to or transversely to the travel movement.

13. Device (1) according to any of the preceding claims, wherein the second module (20) comprises at least one protective metal disk (70) having lateral edge-free electrical insulation (71).

14. Vehicle (30) comprising a device (1) according to any of claims 1 - 13.

15. Method for applying electrical current to plants (40) in order to exert an herbicidal effect by means of a device according to any of claims 1 - 13, comprising the steps of:
- targetedly applying an electrical-contact-resistance-lowering medium (15) to plants (40),
- applying electric current to plants (40) wetted by the medium (15),
**characterized in that** the application of the electrical-contact-resistance-lowering medium (15) by the at least one sensor system is growth-controlled.

16. Method according to claim 15, wherein the contact-resistance-lowering medium (15) is selected from the group consisting of an aqueous liquid, an oil, a viscous liquid, a highly concentrated solution, a thixotropic liquid, a suspension, an emulsion, a solid, and a foam.

17. Method according to claim 15 or 16, wherein the amount of contact-resistance-lowering medium (15) used is controlled on the basis of the conductivity of plants (40) and soil (44) in the region of the applying device (11, 12) and/or application device (21).

18. Method according to any of claims 15 - 17, wherein the contact-resistance-lowering medium (15), the applying device (11, 12) and/or the application device (21) are heated at most to the main boiling point of the contact-resistance-lowering medium (15).

19. Method according to any of claims 15 - 18, wherein the contact-resistance-lowering medium (15) is electrically charged.

20. Method according to any of claims 15 - 19, wherein the plants (40) are mechanically preconditioned and/or post-treated.

## Revendications

1. Appareil (1) pour l'application d'un courant électrique à des plantes (40), comprenant au moins deux modules, un premier module (10) comprenant au moins un dispositif d'application pour l'application à des plantes (40) d'un milieu (15) réduisant la résistance électrique de contact, et un deuxième module (20) comprenant au moins un dispositif applicateur (21) pour l'application d'un courant électrique à des plantes (40), dans lequel au moins un système de capteurs est disposé dans la zone du premier module (10) et/ou du deuxième module (20), lequel système comprend un ou plusieurs capteurs (16) choisis parmi le groupe constitué de capteurs optiques (161), de lidar, capteurs de hauteur, capteurs de mouvement (162), capteurs thermiques, capteurs de mesure de courant et capteurs conçus pour détecter des contraintes mécaniques
**caractérisé en ce que** le au moins un système de capteurs est configuré pour une application contrôlée par la croissance (15) réduisant la résistance électrique de contact.

2. Appareil (1) selon la revendication 1, dans lequel le dispositif d'application est connecté à une source de chaleur.

3. Appareil (1) selon l'une des revendications précédentes, dans lequel le dispositif d'application est configuré pour doser le milieu réduisant la résistance de contact (15).

4. Appareil (1) selon l'une des revendications précédentes, dans lequel le dispositif d'application est configuré sous la forme d'une buse (11).

5. Appareil (1) selon la revendication 4, dans lequel la buse (11) est configurée comme une buse à flux de gaine.

6. Appareil (1) selon la revendication 4 ou 5, dans lequel le dispositif d'application est disposé de manière mobile.

7. Appareil (1) selon l'une des revendications précédentes, dans lequel le dispositif d'application est configuré comme un racleur (12).

8. Appareil (1) selon l'une des revendications précédentes, dans lequel le dispositif d'application est connecté à une source de haute tension.

9. Appareil selon l'une des revendications précédentes, dans lequel le dispositif d'application est agencé de telle sorte que le milieu réduisant la résistance de contact (15) puisse être appliqué directement sur le dispositif applicateur (21).

10. Appareil (1) selon l'une des revendications précédentes, dans lequel le dispositif applicateur (21) est connecté à une source de chaleur.

11. Appareil (1) selon l'une des revendications précédentes, dans lequel le dispositif applicateur (21) présente, au niveau de l'extrémité arrière dans le sens de la marche, un élément de transition avec une résistance croissant de façon graduelle ou par étapes (60).

12. Appareil (1) selon l'une des revendications précédentes, dans lequel le dispositif applicateur (21) est configuré pour effectuer, en plus du mouvement de marche, son propre mouvement dans le sens du mouvement de marche, à l'encontre de ou transversalement à celui-ci.

13. Appareil (1) selon l'une des revendications précédentes, dans lequel le deuxième module (20) comprend au moins un écran protecteur métallique (70) avec une isolation électrique latérale sans bords (71).

14. Véhicule (30) avec un appareil (1) selon l'une des revendications 1 - 13.

15. Procédé d'application d'un courant électrique à des plantes (40) pour exercer un effet herbicide par le moyen d'un appareil selon l'une des revendications 1 - 13, comprenant les étapes de:
- application ciblée à des plantes (40) d'un milieu (15) réduisant la résistance électrique de contact,
- application d'un courant électrique aux plantes (40) baignées par le milieu (15), **caractérisé en ce que** l'application du milieu (15) réduisant la résistance de contact électrique est effectuée par au moins un système de capteurs contrôlé par la croissance.

16. Procédé selon la revendication 15, dans lequel le milieu réduisant la résistance de contact (15) est sélectionné du groupe constitué par un liquide aqueux, une huile, un liquide visqueux, une solution fortement concentrée, un liquide thixotrope, une suspension, une émulsion, un solide et une mousse.

17. Procédé selon la revendication 15 ou 16, dans lequel la quantité de milieu réduisant la résistance de contact (15) utilisée est contrôlée en fonction de la conductivité des plantes (40) et du terrain (44) dans la région du dispositif d'application (11, 12) et/ou du dispositif applicateur (21).

18. Procédé selon l'une des revendications 15-17, dans lequel le milieu réduisant la résistance de contact (15), le dispositif d'application (11, 12) et/ou le dispositif applicateur (21) sont chauffés au maximum jusqu'au point d'ébullition principal du milieu réduisant la résistance de contact (15).

19. Procédé selon l'une des revendications 15-18, dans lequel le milieu réduisant la résistance de contact (15) est chargé électriquement.

20. Procédé selon l'une des revendications 15-19, dans lequel les plantes (40) sont préconditionnées mécaniquement et/ou soumises à un post-traitement.
